# EUROPEAN PATENT APPLICATION

(11) **EP 4 678 599 A1**
(43) Date of publication of application: **14.01.2026**
(21) Application number: 24770782.1
(22) Date of filing: 08.03.2024
(51) Int. Cl.: C01G 45/00, B32B 7/027, C01G 45/02, C01G 45/12, C01G 49/00, C01G 53/00, C08K 3/22, C08L 101/00, G01J 1/02, G01J 1/04, G02B 5/22

(54) **COMPOUND, COMPOUND PARTICLES, NEAR-INFRARED TRANSMISSION MATERIAL, AND NEAR-INFRARED TRANSMISSION FILM**

(30) Priority: 10.03.2023 JP 2023037915; 10.03.2023 JP 2023037916; 10.03.2023 JP 2023037917; 10.03.2023 JP 2023037918; 07.03.2024 JP 2024035365; 07.03.2024 JP 2024035366; 07.03.2024 JP 2024035367
(71) Applicant: Mitsui Mining & Smelting Co., Ltd, Shinagawa-ku Tokyo 141-8584 (JP)
(72) Inventor: TANAKA, Akinobu, Omuta-shi, Fukuoka 836-0003 (JP); IDE, Hitohiko, Omuta-shi, Fukuoka 836-0003 (JP); SOMA, Kentaro, Ageo-shi, Saitama 362-0021 (JP)
(74) Representative: Novagraaf Technologies
(86) International application number: PCT/JP2024/009068
(87) International publication number: WO 2024/190676

(57) **Abstract**

A compound of the present invention contains, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi.

## Description

### Technical Field

The present invention relates to a compound, compound particles, a near-infrared transmission material, and a near-infrared transmission film.

### Background Art

In recent years, an infrared sensor or an infrared camera has been effectively used in a wide range of technical fields. For example, in a field of information communication terminals such as a smartphone, face authentication or the like is introduced from a viewpoint of security enhancement, and an infrared sensor or an infrared camera is used in order to detect an accurate face shape. In addition, in a field of automobiles, an infrared sensor or an infrared camera is attached to a vehicle in order to detect a situation around a vehicle.

In order to accurately detect the shape of a face or a situation around a vehicle, a high-precision infrared sensor or near-infrared camera is required, and in order to achieve this, a filter or a coating material that transmits only a near-infrared ray and does not transmit other wavelengths, for example, visible light is required.

In an infrared transmission product disclosed in Patent Literature 1 as a material of such a filter or coating material, a composition obtained by blending titanium oxide or zinc oxide with a transparent resin is used as the coating material. Patent Literatures 2 and 3 disclose a configuration in which a composition obtained by blending an azo-based dye pigment with a transparent resin is used as a coating film that transmits a near-infrared ray.

### Citation List

### Patent Literature

Patent Literature 1: JP 2021-56346 A
Patent Literature 2: JP 6899061 B2
Patent Literature 3: JP 2021-56345 A

### Summary of Invention

### Technical Problem

However, when an attempt is made to increase a transmittance of a coating material made of a composition obtained by blending titanium oxide or zinc oxide with a transparent resin as disclosed in Patent Literature 1 in a near-infrared region, a transmittance in a visible light region also increases, and there is a concern that a resin to be blended is deteriorated because titanium oxide or zinc oxide has photocatalytic performance. Furthermore, an organic dye pigment such as an azo-based dye pigment is generally said to be weak against an ultraviolet ray, and has a concern in terms of weather resistance and durability.

In view of the above problems, an object of the present invention is to provide a compound, compound particles, a near-infrared transmission material, and a near-infrared transmission film having a low transmittance in a visible light region and a high transmittance in a near-infrared region.

### Solution to Problem

The compound of the present invention made to solve the above problems is characterized by containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi.

The compound of the present invention is not limited to a powder form, and may be in a liquid form dispersed in a dispersion.

The compound of the present invention contains, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi. In addition, the compound of the present invention is preferably an inorganic compound, and preferably contains a metal element and/or a metalloid element. Note that, in the present specification, a Be element and a Mg element are included in an alkaline earth metal unless otherwise specified. The rare earth element (rare earth) includes 17 elements including 15 elements (lanthanoids) from La (lanthanum) with atomic number 57 to Lu (lutetium) with atomic number 71, Sc (scandium) with atomic number 21, and Y (yttrium) with atomic number 29, and represents Sc, Y, La, Ce, Pr, Nd, Pm, Sm, Eu, Gd, Tb, Dy, Ho, Er, Tm, Yb, and Lu.

In addition, the compound of the present invention is characterized by having a reflectance of 20%R or less for light having wavelengths of 550 nm and 700 nm.

With this configuration, the compound of the present invention having a low value of reflectance for light having wavelengths of 550 nm and 700 nm in a visible light region is considered to have not only an advantage of being excellent in performance of preventing diffuse reflection (halation) of light in the visible light region, that is, simply not transmitting visible light in the visible light region, but also another advantage of being excellent in performance of absorbing visible light. In addition, the reflectance for light having wavelengths of 550 nm and 700 nm is more preferably 15%R or less, still more preferably 12%R or less, particularly preferably 10%R or less, more particularly preferably 5%R or less, and most preferably 0%R. Furthermore, the reflectance of the compound of the present invention for light having wavelengths of 550 nm, 600 nm, 650 nm, and 700 nm is more preferably equal to or less than the above-described upper limit value. The reflectance of the compound of the present invention for light having wavelengths of 550 nm to 700 nm is still more preferably equal to or less than the above-described upper limit value. Note that the reflectance of the compound of the present invention for light having wavelengths of 550 nm and 700 nm is typically 0.001%R to 10%R. In addition, the reflectance for light having the wavelengths of 550 nm and 700 nm may be 0.1%R to 5%R, or 0.11%R to 3%R. Furthermore, the reflectance for light having the wavelengths of 550 nm and 700 nm may be 0.001%R to 0.99%R, or 0.001%R to 0.1%R.

The reflectance is measured using a spectrophotometer (ultraviolet visible near-infrared spectrophotometer UH4150 type manufactured by Hitachi High-Tech Science Corporation) to which a φ60 mm integrating sphere unit is attached. A sample filled with the compound according to the present invention is attached thereto, and the reflectance for light having wavelengths of 550 nm and 700 nm is measured.

In addition, the compound of the present invention is characterized by being an oxide.

When the compound of the present invention is an oxide, a transmittance in a visible light region can be suppressed to be low.

In addition, in the compound of the present invention, the constituent element preferably contains an element selected from Li, Mg, Al, Ca, Ti, Cr, Mn, Fe, Co, Ni, Zn, Y, and Bi.

When the compound of the present invention contains, as the constituent element, an element selected from Li, Mg, Al, Ca, Ti, Cr, Mn, Fe, Co, Ni, Zn, Y, and Bi, a transmittance in a visible light region is low and a transmittance in a near-infrared region is high, which is preferable.

Furthermore, in the compound of the present invention, the constituent element more preferably contains one or more elements selected from Cr, Mn, Fe, Co, and Ni.

When the compound of the present invention contains, as the constituent element, one or more elements selected from Cr, Mn, Fe, Co, and Ni, a transmittance in a visible light region is low and a transmittance in a near-infrared region is high, which is more preferable, and the compound particularly preferably contains Mn.

In addition, the compound of the present invention may contain, as the constituent element, Mn, and may further contain one or more elements selected from Cr, Fe, Co, and Ni.

This is because when the compound of the present invention contains, as the constituent element, Mn, and further contains one or more elements selected from Cr, Fe, Co, and Ni, a transmittance in a visible light region is low and a transmittance in a near-infrared region is high.

Here, specific examples of the compound of the present invention will be described below.

For example, among the compounds of the present invention, a compositional formula of a compound which is an oxide containing Mn as a constituent element is represented as AxMnyOz. The constituent element Mn represents a manganese element which is a transition metal, and can have a valence of 2 to 7 depending on the bonded constituent element A, and is particularly stable in a state of +2, +3, +4, +6, or +7. In addition, the constituent element A preferably contains one or more elements selected from H, an alkali metal, an alkaline earth metal, a rare earth element, B, F, Al, Si, P, S, Cl, Ti, V, Cr, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi, excluding Mn, and more preferably contains an element selected from Li, Mg, Al, Ca, Ti, Cr, Fe, Co, Ni, Zn, Y, and Bi. Furthermore, the constituent element O represents an oxygen element, and its amount only needs to satisfy an electroneutrality condition, and includes oxygen excess and oxygen deficiency.

In addition, when the compound of the present invention is an oxide containing Mn as a constituent element, and the coefficient x of the constituent element A and the coefficient y of the constituent element Mn in its compositional formula (AxMnyOz) satisfy x/y = 0.001 or more and 5.00 or less, transparency is gradually improved from around a wavelength of 1000 nm and a high transmittance is exhibited in a long wavelength region around a wavelength of 2000 nm, which is preferable. In addition, x/y = x/y = 0.10 or more and 1.5 or less is more preferable. When an oxide in which an atomic ratio between the constituent element A and Mn is 1 : 2 is mainly used, x/y = 0.40 or more and 0.60 or less is more preferable. When an oxide in which an atomic ratio between the constituent element A and Mn is 1 : 1 is mainly used, x/y = 0.90 or more and 1.10 or less is more preferable. In addition, when the constituent element A is formed of a plurality of elements, the coefficient x of the constituent element A is a sum of coefficients of the plurality of elements as the constituent element A. Note that the coefficient z of the constituent element O only needs to be a value that neutralizes a sum of charges of the constituent elements A and Mn. Each of the coefficients x, y, and z represents atom% when the total amount of AxMnyOz is 100 atom%.

For example, in a case where the compound of the present invention is an oxide containing Mn as a constituent element and the constituent element A in its compositional formula (AxMnyOz) contains Li, when x/y = 0.001 or more and 5.00 or less is satisfied, transparency is gradually improved from around a wavelength of 1000 nm and a high transmittance is exhibited in a long wavelength region around a wavelength of 2000 nm, which is preferable. In addition, x/y = 0.10 or more and 2.00 or less is more preferable, and x/y = 0.40 or more and 0.60 or less is still more preferable

In addition, in a case where the compound of the present invention is an oxide containing Mn as a constituent element and the constituent element A in its compositional formula (AxMnyOz) contains Y, when x/y = 0.001 or more and 5.00 or less is satisfied, high transparency is exhibited in a near-infrared region while transmission in a visible light region is suppressed, which is preferable. In addition, x/y = 0.10 or more and 1.00 or less is more preferable. When an oxide in which an atomic ratio between the constituent element A and Mn is 1 : 2 is mainly used, x/y = 0.40 or more and 0.60 or less is more preferable. When an oxide in which an atomic ratio between the constituent element A and Mn is 1 : 1 is mainly used, x/y = 0.90 or more and 1.10 or less is more preferable.

Furthermore, when the compound of the present invention is an oxide containing Mn as a constituent element and the constituent element A in its compositional formula (AxMnyOz) contains Y, an intensity ratio (211)/(112) of a peak intensity derived from a (211) plane appearing at 2θ = 35.5 to 36.5° to a peak intensity derived from a (112) plane appearing at 2θ = 32.5 to 33.5° in an XRD spectrum of the compound using a CuKα ray is preferably 2.50 or less, and when the ratio is 0.10 or more and 1.00 or less, it is particularly preferable from a viewpoint of high blackness (a* (reddishness) and b* (yellowness) measured using CIE1976, that is, a CIE1976 (L*a*b*) color space, are each close to 0).

In the XRD spectrum using a CuKα ray, the intensity ratio (211)/(112) of a peak intensity derived from a (211) plane appearing at 2θ = 35.5 to 36.5° to a peak intensity derived from a (112) plane appearing at 2θ = 32.5 to 33.5° is preferably 2.50 or less, and more preferably 0.10 or more and 1.00 or less from a viewpoint of high blackness (a* and b* are close to 0). The compound of the present invention which is an oxide containing Mn as a constituent element, contains Y as the constituent element A, and has a compositional formula represented by AxMnyOz is sufficiently mixed and pulverized with an agate mortar, and then classified with a sieve having a mesh size of 75 µm, 0.5 g of the powder in a central part in a good mixed state in an undersieve container is fractionated onto a glass sample plate, and filling is performed using a glass plate so as to have a smooth surface to obtain a sample. The sample is subjected to X-ray powder diffraction measurement using a CuKα ray according to the following X-ray powder diffraction measurement conditions to obtain an X-ray diffraction pattern. In the obtained X-ray diffraction pattern, a peak intensity at 2θ = 32.5 to 33.5° is attributed to a YMnO₃ (112) plane, and a peak intensity at 2θ = 35.5 to 36.5° is attributed to a Mn₃O₄ (221) plane.

### =X-ray powder diffraction measurement conditions=

- Apparatus: MiniFlexII (manufactured by Rigaku Corporation)
- Measurement range (2θ): 5 to 90°
- Sampling width: 0.02°
- Scan speed: 1.0°/min
- X-ray: CuKα ray
- Voltage: 30 kV
- Current: 15 mA
- Divergence slit: 1.25°
- Scattering slit: 1.25°
- Light receiving slit: 0.3 mm
- X-ray analysis software: PDXL2 Version 2.9.1.0

Note that the oxide containing Mn as a constituent element has been described as a specific example of the compound of the present invention. However, it is presumed that even an oxide containing one or more elements selected from Cr, Fe, Co, and Ni instead of Mn has a low transmittance in a visible light region and a high transmittance in a near-infrared region as long as a ratio thereof is equivalent to that of the above-described oxide containing Mn. Furthermore, the compound of the present invention is not limited to an oxide, and it is presumed that even another compound such as a nitride, a carbonitride, a sulfide, a hydroxide, or a halide has a low transmittance in a visible light region and a high transmittance in a near-infrared region as long as the compound contains one or more elements selected from Cr, Mn, Fe, Co, and Ni and a ratio thereof is equivalent to that of the above-described oxide containing Mn (x/y = 0.001 or more and 2.00 or less).

In addition, the compound of the present invention is for a near-infrared transmission material.

As described above, the compound of the present invention has a low transmittance in a visible light region and excellent transmission performance in a near-infrared region, and therefore can be used for a near-infrared transmission material.

The compound particles of the present invention are characterized by containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi.

The compound particles of the present invention are in a powder form and contain two or more of the elements described above. In addition, the compound particles of the present invention are preferably inorganic compound particles, and preferably contain a metal element and/or a metalloid element.

In addition, the compound particles of the present invention are characterized by having a reflectance of 20%R or less for light having wavelengths of 550 nm and 700 nm.

When the reflectance of the compound particles of the present invention for light having wavelengths of 550 nm and 700 nm is 20%R or less, the compound particles not only simply transmit no visible light but also have excellent visible light absorption performance, which is preferable. The reflectance for light having wavelengths of 550 nm and 700 nm is more preferably 15%R or less, still more preferably 12%R or less, particularly preferably 10%R or less, more particularly preferably 5%R or less, and most preferably 0%R. Furthermore, the reflectance of the compound particles of the present invention for light having wavelengths of 550 nm, 600 nm, 650 nm, and 700 nm is more preferably equal to or less than the above-described upper limit value. The reflectance of the compound particles of the present invention for light having wavelengths of 550 nm to 700 nm is still more preferably equal to or less than the above-described upper limit value. Note that the reflectance of the compound particles of the present invention for light having wavelengths of 550 nm and 700 nm is typically 0.001%R to 10%R. In addition, the reflectance for light having the wavelengths of 550 nm and 700 nm may be 0.1%R to 5%R, or 0.11%R to 3%R. Furthermore, the reflectance for light having the wavelengths of 550 nm and 700 nm may be 0.001%R to 0.99%R, or 0.001%R to 0.1%R.

In addition, the compound particles of the present invention are characterized by being oxide particles.

When the compound particles of the present invention are oxide particles, a transmittance in a visible light region can be suppressed to be low.

In the compound particles of the present invention, the constituent element preferably contains an element selected from Li, Mg, Al, Ca, Ti, Cr, Mn, Fe, Co, Ni, Zn, Y, and Bi.

When the compound particles of the present invention contain, as a constituent element, an element selected from Li, Mg, Al, Ca, Ti, Cr, Mn, Fe, Co, Ni, Zn, Y, and Bi, a transmittance in a visible light region is low and a transmittance in a near-infrared region is high, which is preferable.

Furthermore, in the compound particles of the present invention, the constituent element more preferably contains one or more elements selected from Cr, Mn, Fe, Co, and Ni.

When the compound particles of the present invention contain, as the constituent element, one or more elements selected from Cr, Mn, Fe, Co, and Ni, a transmittance in a visible light region is low and a transmittance in a near-infrared region is high, which is more preferable, and the compound particles particularly preferably contain Mn.

In addition, the compound particles of the present invention may contain, as the constituent element, Mn, and may further contain one or more elements selected from Cr, Fe, Co, and Ni.

This is because when the compound particles of the present invention contain, as the constituent element, Mn, and further contain one or more elements selected from Cr, Fe, Co, and Ni, a transmittance in a visible light region is low and a transmittance in a near-infrared region is high.

Here, specific examples of the compound particles of the present invention will be described below.

For example, among the compound particles of the present invention, a compositional formula of compound particles which are oxide particles containing Mn as a constituent element is represented as AxMnyOz. The constituent element Mn represents a manganese element which is a transition metal, and can have a valence of 2 to 7 depending on the bonded constituent element A, and is particularly stable in a state of +2, +3, +4, +6, or +7. In addition, the constituent element A preferably contains one or more elements selected from H, an alkali metal, an alkaline earth metal, a rare earth element, B, F, Al, Si, P, S, Cl, Ti, V, Cr, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi, excluding Mn, and more preferably contains an element selected from Li, Mg, Al, Ca, Ti, Cr, Fe, Co, Ni, Zn, Y, and Bi. Furthermore, the constituent element O represents an oxygen element, and its amount only needs to satisfy an electroneutrality condition, and includes oxygen excess and oxygen deficiency.

In addition, when the compound particles of the present invention are oxide particles containing Mn as a constituent element and the coefficient x of the constituent element A and the coefficient y of the constituent element Mn in its compositional formula (AxMnyOz) satisfy x/y = 0.001 or more and 5.00 or less, transparency is gradually improved from around a wavelength of 1000 nm and a high transmittance is exhibited in a long wavelength region around a wavelength of 2000 nm, which is preferable. In addition, x/y = 0.10 or more and 2.00 or less is more preferable, and x/y = 0.10 or more and 1.00 or less is still more preferable When an oxide in which an atomic ratio between the constituent element A and Mn is 1 : 2 is mainly used, x/y = 0.40 or more and 0.60 or less is more preferable. When an oxide in which an atomic ratio between the constituent element A and Mn is 1 : 1 is mainly used, x/y = 0.90 or more and 1.10 or less is more preferable. In addition, when the constituent element A is formed of a plurality of elements, the coefficient x of the constituent element A is a sum of coefficients of the plurality of elements as the constituent element A. Note that the coefficient z of the constituent element O only needs to be a value that neutralizes a sum of charges of the constituent elements A and Mn.

In addition, when the compound particles of the present invention are oxide particles containing Mn as a constituent element and the constituent element A in its compositional formula (AxMnyOz) contains Li, when the constituent element A contains Li, a transmittance in a visible light region is low and a transmittance in a near-infrared region is high, which is preferable

The compound particles of the present invention containing lithium in the constituent element A generally have a spinel-type (Fd3-m) crystal structure or a zigzaglayered rock salt structure, but are not limited thereto. In addition, the compound particles generally include oxygen deficiency, and a part of oxygen may be replaced with fluorine.

In a case where the compound particles of the present invention are oxide particles containing Mn as a constituent element and the constituent element A in its compositional formula (AxMnyOz) contains Li, when x/y = 0.001 or more and 5.00 or less is satisfied, transparency is gradually improved from around a wavelength of 1000 nm and a high transmittance is exhibited in a long wavelength region around a wavelength of 2000 nm, which is preferable. In addition, x/y = 0.10 or more and 2.00 or less is more preferable, and x/y = 0.40 or more and 0.60 or less is still more preferable

In addition, when the compound particles of the present invention are oxide particles containing Mn as a constituent element and the constituent element A in its compositional formula (AxMnyOz) contains Y, a transmittance rapidly rises from a low wavelength side around a wavelength of 1000 nm in a near-infrared region, and thereafter high transparency is exhibited while transmission in a visible light region is suppressed, which is preferable.

In addition, in a case where the compound particles of the present invention are oxide particles containing Mn as a constituent element and the constituent element A in its compositional formula (AxMnyOz) contains Y, when x/y = 0.001 or more and 5.00 or less is satisfied, a transmittance rapidly rises from a low wavelength side around a wavelength of 1000 nm in a near-infrared region, and thereafter high transparency is exhibited while transmission in a visible light region is suppressed, which is preferable. In addition, x/y = 0.10 or more and 1.00 or less is more preferable. When an oxide in which an atomic ratio between the constituent element A and Mn is 1 : 2 is mainly used, x/y = 0.40 or more and 0.60 or less is more preferable. When an oxide in which an atomic ratio between the constituent element A and Mn is 1 : 1 is mainly used, x/y = 0.90 or more and 1.10 or less is more preferable.

In addition, when the compound particles of the present invention are oxide particles containing Mn as a constituent element and the constituent element A in its compositional formula (AxMnyOz) contains Y, an intensity ratio (211)/(112) of a peak intensity derived from a (211) plane appearing at 2θ = 35.5 to 36.5° to a peak intensity derived from a (112) plane appearing at 2θ = 32.5 to 33.5° in an XRD spectrum of the compound particles using a CuKα ray is preferably 2.50 or less, and when the ratio is 0.10 or more and 1.00 or less, it is particularly preferable from a viewpoint of high blackness (a* and b* are close to 0).

In the XRD spectrum using a CuKα ray, in the XRD spectrum using a CuKα ray, the intensity ratio (211)/(112) of a peak intensity derived from a (211) plane appearing at 2θ = 35.5 to 36.5° to a peak intensity derived from a (112) plane appearing at 2θ = 32.5 to 33.5° is preferably 2.50 or less, and more preferably 0.10 or more and 1.00 or less from a viewpoint of high blackness (a* and b* are close to 0). The sample obtained from the compound particles of the present invention which are made of an oxide containing Mn as a constituent element, contain Y as the constituent element A, and have a compositional formula represented by AxMnyOz is subjected to X-ray powder diffraction measurement using a CuKα ray according to the above-described X-ray powder diffraction measurement conditions to obtain an X-ray diffraction pattern. In the obtained X-ray diffraction pattern, a peak intensity at 2θ = 32.5 to 33.5° is attributed to a YMnO₃ (112) plane, and a peak intensity at 2θ = 35.5 to 36.5° is attributed to a Mn₃O₄ (221) plane.

In addition, the compound particles of the present invention are characterized in that an average value of secondary particle sizes of the compound particles obtained by SEM observation is 10 nm or more and 20 µm or less.

When the average value of the secondary particle sizes of the compound particles of the present invention obtained by SEM observation is 10 nm or more and 20 µm or less, transparency for a near-infrared ray is improved, which is preferable.

In addition, the average value of the secondary particle sizes is more preferably 50 nm or more, and still more preferably 100 nm or more. On the other hand, the average value of the secondary particle sizes is more preferably 10 µm or less, still more preferably 2 µm or less, and particularly preferably 0.5 µm or less. Typically, the average value of the secondary particle sizes may be 50 nm to 1 µm, or 100 nm to 1 µm.

Here, the average value of the secondary particle sizes of the compound particles obtained by SEM observation can be determined by observing an SEM image under a condition of an accelerating voltage of 1 kV using a field emission scanning electron microscope (FE-SEM). Specifically, the compound particles of the present invention (optionally extracted 30 particles) are directly observed, the secondary particle sizes thereof are measured, and an arithmetic average value thereof is calculated, thereby obtaining an average value of the secondary particle sizes obtained by SEM observation. Note that, as a measurement magnification, it is only required to select an appropriate magnification in a range of 500 times to 100,000 times depending on the secondary particle size.

In addition, the compound particles of the present invention are characterized by having a specific surface area of 0.20 m²/g or more as measured by a BET method.

When the compound particles of the present invention have a specific surface area of 0.20 m²/g or more as measured by the BET method, dispersibility of the compound particles is improved, which is preferable. In addition, the specific surface area is more preferably 10.0 m²/g or more, and still more preferably 15.0 m²/g or more. Typically, the specific surface area measured by the BET method may be 0.20 m²/g to 500 m²/g, 0.20 m²/g to 300 m²/g, 0.20 m²/g to 200 m²/g, or 0.20 m²/g to 100 m²/g.

The specific surface area (SSA) of the compound particles of the present invention can be determined by performing measurement using "Macsorb (HM model-1201)" manufactured by Mountech Co., Ltd. in accordance with "(3.5) One-Point Method in 6.2 Flow Method" in JIS R 1626-1996 (Method for Measuring Specific Surface Area of Fine Ceramic Powder by Gas Adsorption BET Method). At this time, a mixed gas of helium as a carrier gas and nitrogen as an adsorbent gas is used. In addition, a nitrogen gas is used for calibration.

In addition, in the compound particles of the present invention, a particle size at which an integrated volume fraction by particle size distribution measurement using a laser diffraction/scattering method is 50% is preferably 0.1 µm or more and 20 µm or less, more preferably 0.2 µm or more and 10 µm or less, and still more preferably 0.3 µm or more and 1 µm or less.

A particle size distribution of the particles is evaluated by a laser diffraction/scattering method in accordance with JIS Z 8825:2013 using a laser diffraction/scattering method particle size distribution measuring apparatus (MT3300EXII manufactured by MicrotracBEL Corp.). In addition, without performing filtering, a sample is subjected to ultrasonic treatment at an ultrasonic output of 40 W for three minutes, and then measurement is performed.

Specifically, a slurry-like sample is put into a sample input port of a sample circulator disposed in the measuring apparatus until the measuring apparatus determines that the amount of the sample is within a measurable range, and then ultrasonic dispersion treatment (ultrasonic power 40 W, three minutes) built in the measuring apparatus is performed. After it is confirmed that display is stabilized, measurement is performed.

In addition, the compound particles of the present invention are characterized by having L* of 45 or less as measured by CIE1976.

In the compound particles of the present invention, when L* measured by CIE1976 is 45 or less, it is preferable from a viewpoint that an appearance is more blackened and a transmittance in a visible light region can be reduced. L* is more preferably 40 or less, still more preferably 35 or less, particularly preferably 30 or less, more particularly preferably 20 or less, still more particularly preferably 10 or less, and most preferably 0. Note that, in the compound particles of the present invention, L* measured by CIE1976 may be typically 1 to 45, 10 to 45, or 20 to 45.

Here, a value of L* measured using CIE1976, that is, a CIE1976 (L*a*b*) color space, indicates brightness. A value of L* closer to 100 indicates that the color becomes lighter toward white, and a value of L* closer to 0 indicates that the color becomes darker toward black. Specifically, a value of L* is determined by performing measurement in accordance with JIS Z 8722:2009 using a color difference meter (CR-300 manufactured by KONICA MINOLTA, INC.).

Furthermore, a value of a* in the CIE1976 (L*a*b*) color space is preferably -5 to 20, more preferably -5 to 15, still more preferably -5 to 10, particularly preferably -5 to 5, more particularly preferably -2 to 2, and most preferably 0. A value of a* closer to 0 indicates that coloring is suppressed. In addition, a value of b* in the CIE1976 (L*a*b*) color space is preferably -10 to 25, more preferably -5 to 20, still more preferably -5 to 15, particularly preferably -5 to 5, more particularly preferably -2 to 2, and most preferably 0. A value of b* closer to 0 indicates that coloring is suppressed. Specifically, similarly to a value of L*, values of a* and b* are determined by performing measurement in accordance with JIS Z 8722:2009 using a color difference meter (CR-300 manufactured by KONICA MINOLTA, INC.).

Note that the oxide particles containing Mn as a constituent element have been described as a specific example of the compound particles of the present invention. However, it is presumed that even oxide particles containing one or more elements selected from Cr, Fe, Co, and Ni instead of Mn have a low transmittance in a visible light region and a high transmittance in a near-infrared region as long as a ratio thereof is equivalent to that of the above-described oxide particles containing Mn. Furthermore, the compound particles of the present invention are not limited to oxide particles, and it is presumed that even other compound particles such as nitride particles, carbonitride particles, sulfide particles, hydroxide particles, or halide particles have a low transmittance in a visible light region and a high transmittance in a near-infrared region as long as the compound particles contain one or more elements selected from Cr, Mn, Fe, Co, and Ni and a ratio thereof is equivalent to that of the above-described oxide particles containing Mn (x/y = 0.001 or more and 5.00 or less).

In addition, the compound particles of the present invention are for a near-infrared transmission material.

As described above, the compound particles of the present invention have a low transmittance in a visible light region and excellent transmission performance in a near-infrared region, and therefore are preferable for a near-infrared transmission material.

Note that the compound particles of the present invention may be subjected to a surface treatment or a surface treatment agent may be added to the system from a viewpoint of improving dispersibility. Examples of the surface treatment agent include a silane coupling agent. In addition, the surface treatment agent may be used singly or in any combination of two or more types thereof.

A compound powder of the present invention is characterized by containing the above-described compound particles of the present invention and a dispersant.

The compound powder of the present invention is in a powder form, and when the compound powder contains the above-described compound particles of the present invention and a dispersant, dispersibility is improved by addition of the dispersant to the compound particles of the present invention, which is preferable.

In addition, physical property values of the compound powder of the present invention, that is, a reflectance for light having wavelengths of 550 nm and 700 nm, an average value of secondary particle sizes obtained by SEM observation, a specific surface area measured by a BET method, a particle size (D50) having an integrated volume fraction of 50% by particle size distribution measurement using a laser diffraction/scattering method, a particle size (D10) having an integrated volume fraction of 10%, a particle size (D90) having an integrated volume fraction of 90%, an upper limit value of a ratio among cumulative particle sizes [(D90 - D10)/D50], L* measured by CIE1976, a value of a* of a CIE1976 (L*a*b*) color space, and a value of b* of the color space indicate values equivalent to measured values of the compound particles of the present invention to which no dispersant is added, respectively.

In addition, the compound powder of the present invention is characterized in that the dispersant is one or more selected from the group consisting of phosphoric acids, and a polycarboxylic acid, a polycarboxylate, a salt of a naphthalene sulfonic acid formalin condensate, polyvinyl alcohol, polyethylene glycose, polyvinyl pyrrolidone, and a copolymer thereof.

The compound powder of the present invention is preferably present in a state in which a dispersant is added to the above-described compound particles of the present invention and both the compound particles and the dispersant are uniformly mixed.

Examples of the dispersant include phosphoric acids, and a polycarboxylic acid, a polycarboxylate, a salt of a naphthalene sulfonic acid formalin condensate, polyvinyl alcohol, polyethylene glycose, polyvinyl pyrrolidone, and a copolymer thereof.

Here, the phosphoric acids are preferably, for example, inorganic phosphorus compounds. Specific examples thereof include a phosphate compound, a metaphosphate compound, a hexametaphosphate compound, a pyrophosphate compound, a polyphosphate compound, a tripolyphosphate compound, and an ultrapolyphosphate compound. Examples thereof further include salts thereof and hydrates thereof. In a case of salts thereof, an alkali metal salt and an alkaline earth metal salt are preferable, and particularly a sodium salt and a potassium salt are more preferable. Note that these phosphoric acids may be used singly or in combination of two or more types thereof.

Furthermore, among the inorganic phosphorus compounds described above, a pyrophosphate compound is preferable from a viewpoint of high dispersibility. Among the pyrophosphate compounds, an alkali metal salt of pyrophosphoric acid or an alkaline earth metal salt of pyrophosphoric acid is more preferable, and sodium pyrophosphate or potassium pyrophosphate is particularly preferable.

In addition, examples of the dispersant include a polymeric additive containing a water-soluble organic polymer, such as a polycarboxylic acid, a polycarboxylate, a salt of a naphthalene sulfonic acid formalin condensate, polyvinyl alcohol, polyethylene glycose, polyvinyl pyrrolidone, and a copolymer thereof. By containing the above-described polymeric additive, the compound powder of the present invention can maintain high dispersibility for a long period of time.

Furthermore, the polymeric additive is more preferably one or more water-soluble organic polymers selected from a polycarboxylic acid, a polycarboxylate, and a copolymer thereof, the polymeric additive is still more preferably one or more water-soluble organic polymers selected from a polyacrylic acid, a polymaleic acid, a polyacrylate, a polymaleate, and a copolymer thereof, the polymeric additive is particularly preferably a polyacrylate, and the polymeric additive is more particularly preferably an ammonium polyacrylate.

In addition, the content of the dispersant in the compound powder of the present invention is preferably 0.0001% by mass or more with respect to the total amount of the compound powder of the present invention from a viewpoint of dispersibility. In addition, the content of the dispersant in the compound powder of the present invention is preferably 5.0% by mass or less with respect to the total amount of the compound powder of the present invention from a viewpoint of pulverizing efficiency at the time of pulverization treatment, ensuring of fluidity, suppression of aggregation of particles of the powder, and the like. That is, the content of the dispersant is preferably 0.0001% by mass or more and 2.00% by mass or less with respect to the total amount of the compound powder of the present invention, and is more preferably 0.001% by mass or more and more preferably 1.0% by mass or less from a viewpoint of improving dispersibility. Typically, the content of the dispersant may be 0.001% by mass to 3% by mass or 0.01% by mass to 1.5% by mass with respect to the total amount of the compound powder of the present invention. Note that, in the present specification, the content of the dispersant is the total amount of those classified as the dispersant unless otherwise specified.

The near-infrared transmission material of the present invention is a near-infrared transmission material containing the compound particles and a dispersion containing a component that transmits a near-infrared ray, and is characterized by containing, as a constituent element of the compound particles, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi**.**

The near-infrared transmission material of the present invention contains the above-described compound particles of the present invention and a dispersion containing a component that transmits a near-infrared ray, and may be a mixture obtained by mixing the compound particles and the dispersion, or may be one obtained by applying the compound particles onto a surface of the dispersion. In addition, the compound particles contained in the near-infrared transmission material of the present invention are preferably inorganic compound particles, and preferably contain a metal element and/or a metalloid element.

The compound particles contained in the near-infrared transmission material of the present invention are not limited to compound particles having the same composition and the same properties. For example, the compound particles may be obtained by appropriately mixing compound particles having the same composition and different particle size distributions in order to prepare fluidity. In addition, the compound particles may be obtained by appropriately mixing compound particles having different compositions in order to prepare a transmittance in a near-infrared region. Furthermore, the compound particles may be obtained by appropriately mixing compound particles having different compositions and different properties depending on an application.

The dispersion only needs to contain a component that transmits a near-infrared ray, and does not indicate that all components contained in the dispersion are components that transmit a near-infrared ray.

Note that the near-infrared transmission material of the present invention includes not only a structure in which the compound particles are uniformly dispersed in the dispersion, but also a structure in which an aggregate in which the plurality of compound particles are aggregated is formed and dispersed in the dispersion, and a state in which the aggregate is segregated in the dispersion.

In addition, the near-infrared transmission material of the present invention is characterized by having a reflectance of 20%R or less for light having wavelengths of 550 nm and 700 nm.

When the reflectance of the near-infrared transmission material of the present invention for light having wavelengths of 550 nm and 700 nm is 20%R or less, the near-infrared transmission material not only simply transmits no visible light but also has excellent visible light absorption performance, which is preferable. The reflectance for light having wavelengths of 550 nm and 700 nm is more preferably 15%R or less, still more preferably 12%R or less, particularly preferably 10%R or less, more particularly preferably 5%R or less, and most preferably 0%R. Furthermore, the reflectance of the near-infrared transmission material of the present invention for light having wavelengths of 550 nm, 600 nm, 650 nm, and 700 nm is more preferably equal to or less than the above-described upper limit value. The reflectance of the near-infrared transmission material of the present invention for light having wavelengths of 550 nm to 700 nm is still more preferably equal to or less than the above-described upper limit value. Note that the reflectance of the near-infrared transmission material of the present invention for light having wavelengths of 550 nm and 700 nm is typically 0.001%R to 10%R. In addition, the reflectance for light having the wavelengths of 550 nm and 700 nm may be 0.1%R to 5%R, or 0.11%R to 3%R. Furthermore, the reflectance for light having the wavelengths of 550 nm and 700 nm may be 0.001%R to 0.99%R, or 0.001%R to 0.1%R.

The compound particles according to the present invention used for measuring a reflectance can be taken out from the near-infrared transmission material of the present invention by the following method. When the dispersion is a resin, the compound particles can be taken out by heating the near-infrared transmission material to a temperature and for a time at which and during which the resin is sufficiently burned out. In addition, when the dispersion is a solvent such as an organic solvent or water, the compound particles can be taken out by volatilizing the solvent.

In addition, the compound particles contained in the near-infrared transmission material of the present invention are characterized by being oxide particles.

When the compound particles contained in the near-infrared transmission material of the present invention are oxide particles, a transmittance in a visible light region can be suppressed to be low.

In the compound particles contained in the near-infrared transmission material of the present invention, the constituent element preferably contains an element selected from Li, Mg, Al, Ca, Ti, Cr, Mn, Fe, Co, Ni, Zn, Y, and Bi.

When the compound particles contained in the near-infrared transmission material of the present invention contain, as a constituent element, an element selected from Li, Mg, Al, Ca, Ti, Cr, Mn, Fe, Co, Ni, Zn, Y, and Bi, a transmittance in a visible light region is low and a transmittance in a near-infrared region is high, which is preferable.

Furthermore, in the compound particles contained in the near-infrared transmission material of the present invention, the constituent element more preferably contains one or more elements selected from Cr, Mn, Fe, Co, and Ni.

When the compound particles contained in the near-infrared transmission material of the present invention contain, as a constituent element, one or more elements selected from Cr, Mn, Fe, Co, and Ni, a transmittance in a visible light region is low and a transmittance in a near-infrared region is high, which is more preferable, and the compound particles particularly preferably contain Mn.

In addition, the near-infrared transmission material of the present invention may contain Mn as a constituent element of the compound particles contained in the near-infrared transmission material of the present invention, and may further contain one or more elements selected from Cr, Fe, Co, and Ni.

This is because when the compound particles contained in the near-infrared transmission material of the present invention contain Mn as a constituent element and further contain one or more elements selected from Cr, Fe, Co, and Ni, a transmittance in a visible light region is low and a transmittance in a near-infrared region is high.

In addition, the near-infrared transmission material of the present invention is characterized in that a transmittance for a wavelength of 700 nm (visible light region) is 30%T or less and a transmittance for a wavelength of 2000 nm (near-infrared region) is 10%T or more and larger than the transmittance for the wavelength of 700 nm.

The transmittance of the near-infrared transmission material of the present invention is measured using a spectrophotometer for a near-infrared transmission film (sample) obtained by applying the near-infrared transmission material of the present invention onto a film made of polyethylene terephthalate (hereinafter, referred to as PET) and firing the near-infrared transmission material. When the transmittance for a wavelength of 700 nm in a visible light region is 30%T or less and a transmittance for a wavelength of 2000 nm (near-infrared region) is 10%T or more and larger than the transmittance for the wavelength of 700 nm, the near-infrared transmission material transmits a near-infrared ray without transmitting visible light as much as possible, which is preferable.

In addition, the transmittance for a wavelength of 700 nm in a visible light region is more preferably 27%T or less, still more preferably 20%T or less, particularly preferably 15%T or less, more particularly preferably 10%T or less, still more particularly preferably 5%T or less, and most preferably 0%T. The transmittance of the near-infrared transmission material of the present invention for a wavelength of 700 nm (visible light region) may be typically 0.001%T to 30%T, 0.1%T to 20%T, 0.11%T to 13%T, 0.1%T to 10%T, 1%T to 10%T%, or 5%T to 10%T.

On the other hand, the transmittance for a wavelength of 2000 nm (near-infrared region) is more preferably 30%T or more, still more preferably 50%T or more, and particularly preferably 80%T or more.

Note that the transmittance for a wavelength of 550 nm in the visible light region is more preferably 15%T or less, still more preferably 10%T or less, particularly preferably 5%T or less, and most preferably 0%T. The transmittance of the near-infrared transmission material of the present invention for a wavelength of 550 nm (visible light region) may be typically 0.001%T to 30%T, 0.1%T to 20%T, 0.11%T to 13%T, 0.1%T to 10%T, 1%T to 10%T, or 5%T to 10%T.

In addition, the near-infrared transmission material of the present invention is characterized in that a transmittance for a wavelength of 700 nm (visible light region) is 30%T or less and a transmittance for wavelengths of 1000 nm (near-infrared region) and 2000 nm (near-infrared region) is 10%T or more and larger than the transmittance for the wavelength of 700 nm (visible light region).

When the transmittance for a wavelength of 700 nm in a visible light region is 30%T or less and a transmittance for a wavelength of 1000 (near-infrared region) and a wavelength of 2000 nm (near-infrared region) is 10%T or more and larger than the transmittance for the wavelength of 700 nm, the near-infrared transmission material transmits a near-infrared ray in a wide wavelength region without transmitting visible light as much as possible, which is preferable. Furthermore, when the transmittance of the near-infrared transmission material of the present invention for a wavelength of 700 nm in a visible light region is 30%T or less and a transmittance for wavelengths of 1000 nm, 1200 nm, 1400 nm, 1600 nm, 1800 nm, 2000 nm, 2200 nm, and 2400 nm in a near-infrared region is 10%T or more and larger than the transmittance for the wavelength of 700 nm, it is more preferable. When the transmittance of the near-infrared transmission material of the present invention for a wavelength of 700 nm in a visible light region is 30%T or less and a transmittance for wavelengths of 1000 nm to 2400 nm in a near-infrared region is 10%T or more and larger than the transmittance for the wavelength of 700 nm, it is more preferable.

In addition, the near-infrared transmission material of the present invention is characterized by having L* of 45 or less as measured by CIE1976.

In the near-infrared transmission material of the present invention, when L* measured by CIE1976 is 45 or less, it is preferable from a viewpoint that an appearance is more blackened and a transmittance in a visible light region can be reduced. L* is more preferably 40 or less, still more preferably 35 or less, particularly preferably 30 or less, more particularly preferably 20 or less, still more particularly preferably 10 or less, and most preferably 0. Note that, in the near-infrared transmission material of the present invention, L* measured by CIE1976 may be typically 1 to 45, 10 to 45, or 20 to 45.

Furthermore, a value of a* in the CIE1976 (L*a*b*) color space is preferably -5 to 20, more preferably -5 to 15, still more preferably -5 to 10, particularly preferably -5 to 5, more particularly preferably -2 to 2, and most preferably 0. A value of a* closer to 0 indicates that coloring is suppressed. In addition, a value of b* in the CIE1976 (L*a*b*) color space is preferably -10 to 25, more preferably -5 to 20, still more preferably -5 to 15, particularly preferably -5 to 5, more particularly preferably -2 to 2, and most preferably 0. A value of b* closer to 0 indicates that coloring is suppressed. Note that values of L*, a*, and b* in the CIE1976 (L*a*b*) color space of the near-infrared transmission material of the present invention indicate values equivalent to the values of L*, a*, and b* in the CIE1976 (L*a*b*) color space of the compound particles of the present invention described above when the dispersion contained in the near-infrared transmission material of the present invention is colorless and transparent or close thereto.

In addition, the near-infrared transmission material of the present invention is characterized in that the dispersion is a resin, glass, an organic solvent, water, or a mixture of two or more types thereof.

The dispersion preferably contains a component that transmits a near-infrared ray.

The type of the resin used for the dispersion is not particularly limited, and a resin that can be molded into a desired shape can be used. For example, a thermoplastic resin, a thermosetting resin, an ionizing radiation curable resin, and a two-liquid mixed curable resin can be used.

Among these resins, a thermoplastic resin is preferably used as a matrix resin from a viewpoint of facilitating molding processing into a sheet having a large film thickness. Examples of the thermoplastic resin include at least one or more resins such as a polyolefinbased resin such as polyethylene or polypropylene, a polyester-based resin such as polyethylene terephthalate or polybutylene terephthalate, a polycarbonate resin, a polyacrylic acid-based resin such as polyacrylic acid or an ester thereof, or polymethacrylic acid or an ester thereof, a polyvinyl-based resin such as polystyrene or polyvinyl chloride, a cellulose-based resin such as triacetyl cellulose, and a urethane resin such as polyurethane. Note that the thermoplastic resin also includes a thermoplastic resin molded in a multilayer form, a polymer blend, and a copolymer.

In addition, it is preferable to use at least one or more of a thermosetting resin, an ionizing radiation curable resin, and a two-liquid mixed curable resin as a matrix resin from a viewpoint of facilitating molding processing into a sheet having a small film thickness. Examples of the thermosetting resin include a phenol resin, an epoxy resin, a melamine resin, a urea resin, an unsaturated polyester resin, an alkyd resin, a polyurethane resin, and a polyimide resin. Furthermore, examples of the ionizing radiation curable resin include an acrylic resin, a urethane resin, a vinyl ester resin, and a polyester alkyd resin. As these resins, not only a polymer but also an oligomer or a monomer can be used. Examples of the two-liquid mixed curable resin include an epoxy resin.

Examples of the glass used for the dispersion include a glass plate, water glass, quartz, and powder glass.

As an organic solvent used for the dispersion, both a water-soluble organic solvent and a water-insoluble organic solvent can be used. When a water-soluble organic solvent is used, the water-soluble organic solvent can also be used as a mixed solvent obtained by mixing the water-soluble organic solvent with water. Specifically, as the water-soluble organic solvent, for example, an organic solvent compatible with water, such as a monoalcohol, a polyhydric alcohol, a ketone, an ester, an amine, a thiol, or a pyrrolidone can be used. Here, examples of the monoalcohol include methanol, ethanol, industrial ethanol, and isopropyl alcohol. Examples of the polyhydric alcohol include ethylene glycol, oligoethylene glycol, propylene glycol, oligopropylene glycol, a copolymer of ethylene glycol and propylene glycol, and butylene glycol. Furthermore, examples of the ketone include acetone, methyl ethyl ketone, diethyl ketone, methyl propyl ketone, methyl isobutyl ketone, methyl amyl ketone, cyclohexanone, and isophorone.

On the other hand, as the water-insoluble organic solvent, for example, an organic solvent that is incompatible with water, typified by a saturated or unsaturated hydrocarbon-based compound, a halogenated hydrocarbon and a cyclic compound thereof, a long-chain monoalcohol, a polyhydric alcohol, and an aromatic compound, can be used. These organic solvents can be used singly or in combination of two or more types thereof.

Examples of water used for the dispersion include general tap water (including an ionic component), deionized water, pure water, and ultrapure water.

The resin, glass, organic solvent, or water used as the dispersion described above does not affect the properties of the near-infrared transmission material of the present invention unless otherwise specified.

The near-infrared transmission material of the present invention is characterized by further containing a dispersant.

The near-infrared transmission material of the present invention may contain a dispersant in addition to the above-described compound particles of the present invention and a dispersion containing a component that transmits a near-infrared ray. The near-infrared transmission material may be a mixture obtained by mixing the compound particles, the dispersant, and the dispersion, or may be obtained by applying the compound particles and the dispersant onto a surface of the dispersion.

The dispersant contained in the near-infrared transmission material of the present invention is preferable from a viewpoint of improving dispersibility.

In addition, physical property values of the near-infrared transmission material of the present invention containing the dispersant, that is, a transmittance for a wavelength of 700 nm (visible light region), a transmittance for a wavelength of 1000 nm (near-infrared region), a transmittance for a wavelength of 2000 nm (near-infrared region), L* measured by CIE1976, a value of a* of a CIE1976 (L*a*b*) color space, and a value of b* of the color space indicate values equivalent to measured values of the near-infrared transmission material of the present invention containing no dispersant, respectively.

In addition, the near-infrared transmission material of the present invention is characterized in that the dispersant is one or more selected from the group consisting of phosphoric acids, and a polycarboxylic acid, a polycarboxylate, a salt of a naphthalene sulfonic acid formalin condensate, polyvinyl alcohol, polyethylene glycose, polyvinyl pyrrolidone, and a copolymer thereof.

Examples of the dispersant contained in the near-infrared transmission material of the present invention include the above-described phosphoric acids, and polycarboxylic acid, polycarboxylate, salt of a naphthalene sulfonic acid formalin condensate, polyvinyl alcohol, polyethylene glycose, polyvinyl pyrrolidone, and a copolymer thereof.

In addition, the content of the dispersant in the near-infrared transmission material of the present invention is preferably 0.0001% by mass or more with respect to the total amount of the near-infrared transmission material of the present invention from a viewpoint of dispersibility. In addition, the content of the dispersant in the near-infrared transmission material of the present invention is preferably 0.2% by mass or less with respect to the total amount of the near-infrared transmission material of the present invention from a viewpoint of pulverizing efficiency at the time of pulverization treatment, ensuring of fluidity, suppression of aggregation of particles of the powder, improvement of dispersibility of the compound particles, and the like. That is, the content of the dispersant is preferably 0.0003% by mass or more and 0.003% by mass or less with respect to the total amount of the near-infrared transmission material of the present invention, more preferably 0.0005% by mass or more from a viewpoint of improving dispersibility, and more preferably 0.1% by mass or less from a viewpoint of improvement of dispersibility of the compound particles. Note that, in the present specification, the content of the dispersant is the total amount of those classified as the dispersant unless otherwise specified.

The compound, the compound particles, and the near-infrared transmission material of the present invention may contain, as an additive, oxide particles of Nb, Ta, Ti, Si, Zr, Zn, Al, Y, V, or a lanthanoid (La, Ce, Nd, Eu, Gd, Dy, Yb, or the like). The content of the additive in the compound, the compound particles, and the near-infrared transmission material of the present invention is preferably less than 1% by mass, more preferably less than 0.1% by mass, and still more preferably less than 0.01% by mass. Note that the content of the additive may exceed the above-described range as long as the properties of the compound, the compound particles, and the near-infrared transmission material of the present invention are not impaired.

Furthermore, the compound, the compound particles, and the near-infrared transmission material of the present invention may contain a component other than the components derived from the compound or the oxide and the components derived from the dispersion (referred to as "other component") as long as action thereof and effect thereof are not inhibited. Examples of the other component include Nb, Ta, Ti, Si, Zr, Zn, Al, Y, V, and a lanthanoid (La, Ce, Nd, Eu, Gd, Dy, Yb, or the like). Note that the other component is not limited thereto. The content of the other component in the compound, the compound particles, and the near-infrared transmission material of the present invention is preferably less than 5% by mass, more preferably less than 4% by mass, and still more preferably less than 3% by mass. Note that the compound, the compound particles, and the near-infrared transmission material of the present invention are assumed to contain inevitable impurities which are not intended. The total content of the inevitable impurities is preferably less than 10% by mass, more preferably less than 7% by mass, still more preferably less than 5% by mass, particularly preferably less than 3% by mass, and more particularly preferably less than 1% by mass.

A method for manufacturing the above-described near-infrared transmission material of the present invention will be described below.

First, as an example of a method for manufacturing the compound particles constituting the near-infrared transmission material of the present invention, a method for manufacturing yttrium manganate (hereinafter, referred to as present YMO) containing two elements of Y and Mn as a constituent element of the compound particles will be described below.

The present YMO is obtained by mixing a manganese raw material and a yttrium raw material, granulating and drying the mixture as necessary, firing the mixture, classifying the mixture as necessary, further heat-treating the mixture as necessary, and further classifying the mixture as necessary.

In addition, in the present YMO, a boron compound may be added to and mixed with a manganese raw material and a yttrium raw material, and the mixture may be wet-pulverized, then granulated and dried, and fired.

Here, the manganese raw material is not particularly limited, and examples thereof include manganese(II) oxide (manganese monoxide), manganese(II, III) oxide, manganese(III) oxide, manganese(IV) oxide (manganese dioxide), manganese(VI) oxide, and manganese(VII) oxide.

The yttrium raw material is not particularly limited, and examples thereof include yttrium oxide (Y₂O₃), yttrium carbonate (Y₂(CO₃)₃•3H₂), yttrium acetate O(Y(CH₃COO)₃•4H₂O), yttrium fluoride (YF₃), and yttrium nitrate (Y (Y(NO₃)₃•nH₂O). In particular, yttrium oxide (Y₂O₃) is preferable.

The boron compound is added as a flux component in order to promote complexation of the manganese raw material and the yttrium raw material. In addition, the boron compound remains as an impurity on surfaces of manganese oxide particles constituting the near-infrared transmission material of the present invention without being solid-solved after firing, but can be removed by performing washing with water, wet pulverization, or the like. The content of the boron compound in the near-infrared transmission material of the present invention is preferably less than 5% by mass, more preferably less than 3% by mass, and still more preferably less than 1% by mass. Note that the content of the boron compound is calculated as a weight ratio of the content as a "boron (B)" element by ICP emission spectrometry (AG-5110 manufactured by Agilent Technologies).

Here, the boron compound is preferably boric acid or lithium borate. Examples of the lithium borate include lithium borate in various forms, such as lithium metaborate (LiBO₃), lithium tetraborate (Li₂B₄O₇), lithium pentaborate (LiB₅O₈, and lithium perborate (Li₂B₂O₆), and lithium tetraborate (Li₂B₄O₇) is particularly preferable.

A method for mixing the various raw materials described above is not particularly limited as long as the raw materials can be uniformly mixed. For example, it is only required to add the raw materials simultaneously or in an appropriate order using a known mixer such as a mixer and to stir and mix the raw materials in a wet or dry manner. In the case of wet mixing, preferably, a liquid medium such as water or a dispersant is added and wet-mixed to form a slurry, and the obtained slurry is pulverized by a wet pulverizer. In particular, the slurry is preferably pulverized to a submicron order. The slurry is pulverized to a submicron order and then granulated and fired, whereby uniformity of the particles before the firing reaction can be enhanced, and reactivity can be enhanced. Note that, as described above, the mixed various raw materials may be fired as they are, or may be granulated to a predetermined size and fired.

A granulation method may be a wet method or a dry method as long as various pulverized raw materials are dispersed in the granulated particles without being separated, and may be an extrusion granulation method, a rolling granulation method, a fluidized granulation method, a mixed granulation method, a spray drying granulation method, a pressure molding granulation method, or a flake granulation method using a roll or the like. Note that, when the raw materials are wet-granulated, it is necessary to sufficiently dry the granulated particles before firing. A drying method may be a known drying method such as a spray heat drying method, a hot air drying method, a vacuum drying method, or a freeze drying method, and the spray heat drying method is particularly preferable. The spray heat drying method is preferably performed using a heat spray dryer (spray dryer). By granulating the raw materials using a heat spray dryer (spray dryer), not only a particle size distribution can be made sharper, but also the particles can be prepared so as to contain aggregated particles (secondary particles) formed by round aggregation.

The firing is preferably performed in a firing furnace in an air atmosphere, an oxygen gas atmosphere, an atmosphere with an adjusted oxygen partial pressure, a carbon dioxide gas atmosphere, or another atmosphere by raising a temperature at a temperature rising rate of 50 to 200°C/hr and holding the temperature at a temperature of 400 to 1500°C (which means a temperature when a thermocouple is brought into contact with a fired product in the firing furnace) for 0.5 to 30 hours. Note that, when firing is performed together with the boron compound, firing can be performed in a temperature range lower than the firing temperature described above. Note that the type of the firing furnace is not particularly limited. For example, firing can be performed using a rotary kiln, a stationary furnace, or another firing furnace.

A fired product obtained by firing may be directly used as the present YMO (manganese oxide particles). In addition, a product obtained by pulverizing the fired product may be used as the present YMO (manganese oxide particles). In addition, the undersize (fine particle side) particles obtained by classifying the fired product with a sieve or the like may be used as the present YMO (manganese oxide particles) regardless of whether or not the fired product is pulverized. The oversize (coarse particle side) particles may be pulverized again, classified, and used.

A pulverization method can be performed in a dry or wet manner. In the case of the dry manner, the fired product can be pulverized using a commercially available dry pulverizer such as an attritor, a blade type pulverizer, a jet mill, or a ball mill. On the other hand, in the case of the wet manner, the fired product is mixed with water or an organic solvent to form a slurry in which the fired product is dispersed in water or the organic solvent. Next, the fired product dispersed in the slurry can be pulverized using a commercially available wet pulverizer such as a media mill such as a ball mill or a bead mill, or an emulsifier/disperser using high-speed shearing. Examples of beads to be used include zirconia beads, alumina beads, and glass beads. In addition, a media-less pulverizer that pulverizes particles by inter-particle collision under high pressure conditions without using a pulverizing medium may be used, which is preferable from a viewpoint of reducing a risk of contamination of metal powder or the like generated from the pulverizing medium. Note that a dispersant may be added together with the slurry as necessary.

In the case of wet pulverization, the pulverized fired product and the solvent are separated from each other using a filter, a centrifugal separator, or the like, and dried at a temperature at which the solvent volatilizes, whereby the pulverized present YMO (manganese oxide particles) is obtained.

In addition, in the pulverization method, the present YMO (manganese oxide particles) having a smaller size may be obtained by performing a two-stage pulverization treatment in which the above-described pulverization is repeated twice. Examples of a first stage of the pulverization method include a pulverization method using the above-described dry pulverizer or wet pulverizer. Examples of a second stage of the pulverization method include a pulverization method using the above-described dry pulverizer or wet pulverizer.

The compound particles of the present invention are not limited to the above-described present YMO, and can also be obtained by mixing a manganese raw material, a lithium raw material, a magnesium raw material, and an aluminum raw material, granulating and drying the mixture as necessary, firing the mixture, classifying the mixture as necessary, heat-treating the mixture as necessary, and classifying the mixture as necessary.

Examples of a lithium raw material include lithium hydroxide (LiOH), lithium carbonate (Li₂CO₃), lithium nitrate (LiNO₃), lithium hydroxide hydrate (LiOH•H₂O), lithium oxide (Li₂O), fatty acid lithium, and a lithium halogen compound. In particular, a hydroxide of lithium, a carbonate of lithium, and a nitrate of lithium are preferable.

Examples of a magnesium raw material include magnesium oxide (MgO), magnesium hydroxide (Mg(OH)₂), magnesium fluoride (MgF₂), magnesium nitrate (Mg(NO₃)₂), magnesium chloride (MgCl₂), and magnesium sulfate (MgSO₄). In particular, magnesium oxide is preferable.

Examples of an aluminum raw material include aluminum hydroxide (Al(OH)₃) and aluminum fluoride (AlF₃). In particular, aluminum hydroxide is preferable.

Furthermore, examples of other raw materials include the following raw materials. Examples of a zinc raw material include zinc oxide (ZnO), zinc sulfide (ZnS), zinc fluoride tetrahydrate (ZnF₂•4H₂O), and zinc stearate ([CH₃(CH₂)₁₆COO]₂Zn). In particular, zinc oxide (ZnO) is preferable.

Examples of a sodium raw material include sodium carbonate (Na₂CO₃), sodium hydroxide (NaOH), sodium hydrogen carbonate (NaHCO₃), sodium nitrate (NaNO₃), sodium sulfate (Na₂SO₄), and sodium chloride (NaCl). In particular, sodium carbonate (Na₂CO₃) is preferable.

Examples of a calcium raw material include calcium carbonate (CaCO₃), calcium oxide (CaO), calcium hydroxide (CaOH), calcium nitrate (Ca(NO₃)₂), and calcium sulfate (CaSO₄). In particular, calcium carbonate (CaCO₃) is preferable.

Examples of a strontium raw material include strontium carbonate (SrCo₃), strontium sulfate (SrSO₄), strontium nitrate (Sr(NO₃)₂), and strontium chloride (SrCl₂).

Examples of a barium raw material include barium carbonate (BaCO₃), barium sulfate (BaSO₄), barium hydroxide (Ba(OH)₂), and barium fluoride (BaF₂). In particular, barium carbonate (BaCO₃) is preferable.

Examples of a bismuth raw material include bismuth oxide (Bi₂O₃), basic bismuth carbonate ((BiO)₂CO₃), bismuth sulfate (Bi₂(SO₄)₃), and bismuth nitrate pentahydrate (Bi(NO₃)₃•5H₂O). In particular, basic bismuth carbonate ((BiO)₂CO₃) is preferable.

Examples of a lanthanum raw material include lanthanum oxide (La₂O₃), lanthanum carbonate (La₂(CO₃)₃), lanthanum hydroxide (La(OH)₃), lanthanum sulfate (La₂(SO₄)₃•9H₂O), and lanthanum nitrate (La(NO₃)₃•6H₂O). In particular, lanthanum carbonate (La₂(CO₃)₃) is preferable.

Examples of a praseodymium raw material include praseodymium oxide (Pr₆O₁₁), praseodymium acetate ((CH₃COO)₃Pr•nH₂O), praseodymium fluoride (PrF₃), and praseodymium carbonate octahydrate (Pr₂(CO₃)₃•8H₂O). In particular, praseodymium oxide (Pr₆O₁₁) is preferable.

Examples of a neodymium raw material include neodymium oxide (Nd₂O₃), neodymium carbonate (Nd₂(CO₃)₃•8H₂O), and neodymium fluoride (NdF₃). In particular, neodymium carbonate (Nd₂(CO₃)₃•8H₂O) is preferable.

Examples of an iron raw material include iron oxide (Fe₂O₃), iron oxide (Fe₃O₄), iron sulfate (FeSO₄), iron carbonate (FeCO₃), and iron nitrate (Fe(NO₃)₃). In particular, iron oxide (Fe₂O₃) is preferable.

Examples of a titanium raw material include titanium oxide (TiO₂) (rutile, anatase, brookite, or bronze) and titanium tetraisopropoxide ([(CH₃)₂CHO]₄Ti). In particular, titanium oxide (TiO₂) (anatase) is preferable.

Examples of a nickel raw material include basic nickel(II) carbonate (NiCO₃•2Ni(OH)₂•4H₂O), nickel(II) oxide (NiO), nickel(II) sulfate hexahydrate (NiSO₄•6H₂O), nickel(II) chloride hexahydrate (NiCl₂•6H₂O), nickel(II) nitrate hexahydrate (Ni(NO₃)₂•6H₂O), nickel(II) acetate tetrahydrate ((CH₃COO)₂Ni•4H₂O), and nickel(II) hydroxide (Ni(OH)₂). In particular, basic nickel (II) carbonate (NiCO₃•2Ni(OH)₂•4H₂O) is preferable.

Examples of a chromium raw material include chromium(III) oxide (Cr₂O₃), chromium(III) acetate (Cr(CH₃COO)₃), chromium(III) chloride (CrCl₃), chromium(III) fluoride (CrF₃), chromium(III) nitrate nonahydrate (Cr(NO₃)₃•9H₂O), and chromium(III) sulfate (Cr₂(SO₄)₃). In particular, chromium(III) oxide (Cr₂O₃) is preferable.

Examples of a cobalt raw material include cobalt(II) hydroxide (Co(OH)₂), cobalt(II, III) oxide (Co₃O₄), cobalt(II) oxide (CoO), cobalt(II) carbonate (CoCO₃), cobalt(II) acetate ((CH₃COO)₂Co), cobalt(II) nitrate hexahydrate (Co(NO₃)₂•6H₂O), and cobalt(II) sulfate heptahydrate (CoSO₄•7H₂O). In particular, cobalt(II) hydroxide (Co(OH)₂) is preferable.

Examples of a scandium raw material include scandium oxide (Sc₂O₃) and scandium nitrate pentahydrate (Sc(NO₃)₃•5H₂O). In particular, scandium oxide (Sc₂O₃) is preferable.

Examples of a dysprosium raw material include dysprosium oxide (Dy₂O₃), dysprosium carbonate dihydrate (Dy₂(CO₃)₃•2H₂O), dysprosium fluoride (III) (DyF₃), and dysprosium nitrate hexahydrate (Dy(NO₃)₃•6H₂O). In particular, dysprosium oxide (Dy₂O₃) is preferable.

Examples of a holmium raw material include holmium oxide (Ho₂O₃), holmium acetate monohydrate (Ho(OOCCH₃)₃•H₂O), and holmium carbonate dihydrate (Ho₂(CO₃)₃•2H₂O). In particular, holmium oxide (Ho₂O₃) is preferable.

Examples of an erbium raw material include erbium oxide (Er₂O₃), erbium fluoride (ErF₃), and erbium(III) acetate tetrahydrate (Er(CH₃COO)₃•4H₂O). In particular, erbium oxide (Er₂O₃) is preferable.

Examples of a thulium raw material include thulium oxide (Tm₂O₃) and thulium(III) acetate tetrahydrate (Tm(OOCCH₃)₃•4H₂O. In particular, thulium oxide (Tm₂O₃) is preferable.

Examples of a ytterbium raw material include ytterbium oxide (Yb₂O₃), ytterbium(III) fluoride (YbF₃), ytterbium(III) chloride (YbCl₃), and ytterbium(III) isopropoxide (Yb(OC₃H₇)₃). In particular, ytterbium oxide is preferable.

Examples of a lutetium raw material include lutetium oxide (Lu₂O₃), lutetium acetate tetrahydrate ((CH₃COO)₃Lu•4H₂O, and lutetium(III) chloride hexahydrate (LuCl₃•6H₂O). In particular, lutetium oxide (Lu₂O₃) is preferable.

The present YMO (manganese oxide particles) thus obtained is mixed with a dispersion as follows to obtain the near-infrared transmission material of the present invention.

When the dispersion is a resin, by mixing the resin as a dispersion with the present YMO at a predetermined ratio, the near-infrared transmission material (dispersion: resin) of the present invention is obtained. Specifically, when the dispersion is a thermosetting resin, the present YMO and the thermosetting resin may be mixed before heating, and an organic solvent for diluting the thermosetting resin may be further added and mixed. Here, when the present YMO and the thermosetting resin are mixed, a rotating and revolving mixer, a stirrer, a three-roll, or the like can be used. Thereafter, the mixture is heated to a curing temperature at which the thermosetting resin is cured to cure the thermosetting resin, whereby the near-infrared transmission material (dispersion: resin) of the present invention can be obtained.

In addition, when the dispersion is a thermoplastic resin, for example, by mixing the present YMO in the thermoplastic resin heated by a kneader or the like, the near-infrared transmission material (dispersion: resin) of the present invention can be obtained. Furthermore, when the dispersion is a resin film, for example, by applying the present YMO onto a film made of PET or polyethylene naphthalate (PEN), the near-infrared transmission material (dispersion: resin) of the present invention can be obtained. At the time of the application, a mixture containing the present YMO, the resin, and an organic solvent can be applied using a bar coater or a blade. Furthermore, a mixture of the present YMO and the resin may be formed into a film shape by extrusion molding.

Note that, in the near-infrared transmission material (dispersion: resin) of the present invention, the present YMO is preferably dispersed in the resin as a dispersion so as to be uniform.

When the dispersion is glass, by mixing glass as a dispersion, for example, powdered glass with the present YMO at a predetermined ratio, the near-infrared transmission material (dispersion: glass) of the present invention is obtained. Note that, in the near-infrared transmission material (dispersion: glass) of the present invention, the present YMO is preferably dispersed in the glass as a dispersion so as to be uniform.

When the dispersion is an organic solvent, by mixing the organic solvent as a dispersion with the present YMO at a predetermined ratio, the near-infrared transmission material (dispersion: organic solvent) of the present invention is obtained.

First, by mixing the present YMO and an organic solvent, a slurry in which the present YMO particles are dispersed in the organic solvent is obtained. At this time, a dispersant may be added. Next, the obtained slurry is subjected to wet pulverization or dispersion treatment by a media mill such as a bead mill, a high pressure jet mill, a homogenizer, or the like, whereby the near-infrared transmission material (dispersion: organic solvent) of the present invention can be obtained. Examples of beads to be used for a bead mill include zirconia beads and alumina beads. Furthermore, the dispersant may be added to the slurry during wet pulverization, or may be added to an oily dispersion obtained by wet pulverization. The addition amount of the dispersant may be appropriately adjusted.

Note that, in the near-infrared transmission material (dispersion: organic solvent) of the present invention, the present YMO is preferably dispersed in the organic solvent as a dispersion so as to be uniform.

When the dispersion is water, by mixing water as a dispersion with the present YMO at predetermined ratio, the near-infrared transmission material (dispersion: water) of the present invention is obtained.

First, by mixing the present YMO and water, a slurry in which the present YMO particles are dispersed in water is obtained. At this time, a dispersant may be added. Next, the obtained slurry is subjected to wet pulverization or dispersion treatment by a media mill such as a bead mill, a high pressure jet mill, a homogenizer, or the like, whereby the near-infrared transmission material (dispersion: water) of the present invention can be obtained. Examples of beads to be used for a bead mill include zirconia beads and alumina beads. Furthermore, the dispersant may be added to the slurry during wet pulverization, or may be added to an oily dispersion obtained by wet pulverization. The addition amount of the dispersant may be appropriately adjusted.

Note that, in the near-infrared transmission material (dispersion: water) of the present invention, the present YMO is preferably dispersed in water as a dispersion so as to be uniform.

The near-infrared transmission material of the present invention is not limited to one containing the present YMO and the above-described dispersion, and may contain manganese oxide particles of the present invention and a dispersion.

In the near-infrared transmission material of the present invention, a dispersant may be added when the manganese oxide particles of the present invention and the dispersion are mixed. Examples of the dispersant include one or more selected from the group consisting of phosphoric acids, a silane coupling agent, and a polycarboxylic acid, a polycarboxylate, a salt of a naphthalene sulfonic acid formalin condensate, polyvinyl alcohol, polyethylene glycose, polyvinyl pyrrolidone, and a copolymer thereof. Here, examples of the silane coupling agent include vinyltrimethoxysilane (functional group: vinyl), 3-glycidoxypropyltrimethoxysilane (functional group: epoxy), 3-methacryloxypropyltrimethoxysilane (functional group: methacryl), 3-acryloxypropyltrimethoxysilane (functional group: acryl), and N-phenyl-3-aminopropyltrimethoxysilane (functional group: amino).

First, as an example of a method for manufacturing the compound powder constituting the near-infrared transmission material of the present invention, a method for manufacturing a compound powder (hereinafter, referred to as present YMO powder) containing yttrium manganate containing two elements of Y and Mn as a constituent element of compound particles contained in the compound powder and a dispersant will be described below. Note that description of portions overlapping with the above-described method for manufacturing the present YMO will be omitted.

The present YMO powder is obtained by mixing a manganese raw material and a yttrium raw material, granulating and drying the mixture as necessary, firing the mixture, classifying the fired product as necessary, adding a dispersant to the fired powder, further heat-treating the mixture as necessary, and further classifying the mixture as necessary.

In addition, in the present YMO powder, a boron compound may be added to and mixed with the manganese raw material and the yttrium raw material, and the mixture may be wet-pulverized, then granulated and dried, and fired.

A mixture obtained by adding the dispersant to the fired product thus obtained by firing may be directly used as the present YMO powder. In addition, one obtained by adding the dispersant to the fired product and pulverizing the mixture may be used as the present YMO powder. In addition, undersize (fine particle side) particles obtained by classifying the mixture obtained by adding the dispersant to the fired product with a sieve or the like may be used as the present YMO powder regardless of whether or not the mixture is pulverized. The oversize (coarse particle side) particles may be pulverized again, classified, and used.

The dispersant is preferably one or more selected from the group consisting of the above-described phosphoric acids, and polycarboxylic acid, polycarboxylate, salt of a naphthalene sulfonic acid formalin condensate, polyvinyl alcohol, polyethylene glycose, polyvinyl pyrrolidone, and a copolymer thereof.

Note that since the present YMO powder contains a dispersant, the size thereof can be reduced in a shorter time than a YMO powder containing no dispersant.

The compound powder of the present invention is not limited to the above-described present YMO powder, and may contain compound particles obtained by mixing a manganese raw material, a lithium raw material, a magnesium raw material, and an aluminum raw material, granulating and drying the mixture as necessary, firing the mixture, classifying the mixture as necessary, heat-treating the mixture as necessary, and classifying the mixture as necessary, and a dispersant.

The present YMO powder thus obtained is mixed with a dispersion in a similar manner to the above-described present YMO to obtain the near-infrared transmission material of the present invention.

The near-infrared transmission material of the present invention is not limited to one containing the present YMO powder and the above-described dispersion, and may contain the compound powder of the present invention and a dispersion.

In the near-infrared transmission material of the present invention, when the compound powder of the present invention and a dispersion are mixed, a dispersant same as or different from a dispersant contained in the compound powder of the present invention may be further added. In addition, when a dispersant different from a dispersant contained in the compound powder of the present invention is added, the dispersant is preferably selected from phosphoric acids, a silane coupling agent, and a polycarboxylic acid, a polycarboxylate, a salt of a naphthalene sulfonic acid formalin condensate, polyvinyl alcohol, polyethylene glycose, polyvinyl pyrrolidone, and a copolymer thereof. Examples of the silane coupling agent include vinyltrimethoxysilane (functional group: vinyl), 3-glycidoxypropyltrimethoxysilane (functional group: epoxy), 3-methacryloxypropyltrimethoxysilane (functional group: methacryl), 3-acryloxypropyltrimethoxysilane (functional group: acryl), and N-phenyl-3-aminopropyltrimethoxysilane (functional group: amino).

The near-infrared transmission film of the present invention is characterized by containing the above-described near-infrared transmission material of the present invention.

The near-infrared transmission film of the present invention contains the above-described near-infrared transmission material of the present invention, and can be used as an optical filter in an infrared sensor or an infrared camera.

The near-infrared sensor of the present invention is characterized by including an optical filter in which the above-described near-infrared transmission film of the present invention is formed.

The near-infrared sensor of the present invention includes the optical filter in which the above-described near-infrared transmission film of the present invention is formed, and therefore does not transmit visible light as much as possible, but can transmit a near-infrared ray, which is preferable.

A method for manufacturing the above-described near-infrared transmission film of the present invention will be described below.

The method for manufacturing the near-infrared transmission film of the present invention includes a step of forming a near-infrared transmission film by applying the above-described near-infrared transmission material of the present invention onto a base material and drying the near-infrared transmission material. Note that examples of the base material include glass, acrylic, and a resin molded body.

A near-infrared transmission material produced by the above-described method for manufacturing the near-infrared transmission material of the present invention is applied onto a base material using a bar coater. The base material to which the near-infrared transmission material of the present invention is applied is placed in a stationary furnace and dried at room temperature (25°C) for three hours to obtain the near-infrared transmission film of the present invention. In addition, the base material to which the near-infrared transmission material of the present invention is applied may be placed in a stationary furnace, heated to 110°C, and dried for six hours, or heated to 600°C and fired for three hours.

A heat shielding member of the present invention includes: a base material; a near-infrared reflecting lower film formed on the base material; and a near-infrared transmitting upper film formed on the near-infrared reflecting lower film, and is characterized in that the near-infrared reflecting lower film contains a near-infrared reflecting material, the near-infrared transmitting upper film contains a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi, and the heat shielding member has a maximum reflectance of 40%R or more for light having a wavelength of 8000 nm to 2500 nm.

With the above-described configuration, the heat shielding member of the present invention has a heat shielding property and a black appearance, and thus can be used for an application such as a vehicle or an outer wall of a building.

Examples of the base material according to the heat shielding member of the present invention include stainless steel (SUS), aluminum, an aluminum alloy, and high tensile strength steel.

The near-infrared reflecting lower film according to the heat shielding member of the present invention is formed on the base material. In addition, the near-infrared reflecting lower film contains a near-infrared reflecting material.

Here, the near-infrared reflecting material has a high reflectance in an infrared band. Specifically, the near-infrared reflecting material preferably reflects light in a near-infrared wavelength region of a wavelength of 800 nm to 2500 nm, and more preferably reflects light in a near-infrared wavelength region of a wavelength of 1000 nm to 2000 nm from a viewpoint of a heat shielding property. A maximum reflectance for light in the wavelength region is preferably 40%R or more, more preferably 60%R or more, still more preferably 70%R or more, particularly preferably 80%R or more, more particularly preferably 90%R or more, and most preferably 100%R or more. Note that a measured value of the maximum reflectance for the light may exceed 100%R due to a measurement error or the like, but since a theoretical upper limit value is 100%R, when the measured value exceeds 100%R, it is regarded as 100%R.

In addition, a minimum reflectance of the near-infrared reflecting material for light having a wavelength of 1000 nm or 2000 nm is preferably 40%R or more, more preferably 60%R or more, still more preferably 70%R or more, particularly preferably 80%R or more, more particularly preferably 90%R or more, and most preferably 100%R or more.

Furthermore, the minimum reflectance of the near-infrared reflecting material for light in the wavelength region is preferably 40%R or more, more preferably 60%R or more, still more preferably 70%R or more, particularly preferably 80%R or more, more particularly preferably 90%R or more, and most preferably 100%R or more.

The near-infrared reflecting material may be, for example, an inorganic material, an organic material, or a combination thereof.

The inorganic material may be a metal such as aluminum, gold, silver, copper, brass, tin, iron, stainless steel, or titanium, or an alloy containing these metals, may be a metal oxide such as titanium dioxide, low order titanium oxide, zinc oxide, low order zinc oxide, aluminum oxide, imine blue, cobalt blue, or low order aluminum oxide, a low order metal oxide, a composite metal oxide, or a composite low order metal oxide, or may be a compound salt such as barium sulfate, zinc sulfide, or magnesium carbonate, or a mixed compound salt.

The organic material may be a copper phthalocyanine pigment, a dissimilar metal (nickel, cobalt, iron, or the like) phthalocyanine pigment, a metal-free phthalocyanine pigment, a chlorinated phthalocyanine pigment, a chlorine/brominated phthalocyanine pigment, a brominated phthalocyanine pigment, an anthraquinone-based pigment, a quinacridone-based pigment, a diketopyrrolopyrrole-based pigment, a perylene-based pigment, a monoazo-based pigment, a disazo-based pigment, a condensed azo-based pigment, a metal complex-based pigment, a quinophthalone-based pigment, an indanthrene blue pigment, a dioxazine violet pigment, an anthraquinone pigment, a metal complex pigment, or a benzimidazolone-based pigment.

Furthermore, as the near-infrared reflecting material, one or more selected from the above-described inorganic materials or organic materials can be used.

The near-infrared transmitting upper film according to the heat shielding member of the present invention is formed on the near-infrared reflecting lower film. In addition, the near-infrared transmitting upper film contains a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi.

Since the near-infrared transmission material containing the compound particles contained in the near-infrared transmitting upper film is the above-described near-infrared transmission material of the present invention, detailed description thereof is omitted. The compound particles may be the compound powder of the present invention to which a dispersant is added.

The heat shielding member of the present invention preferably reflects light in a near-infrared wavelength region of a wavelength of 800 nm to 2500 nm, and more preferably reflects light in a near-infrared wavelength region of a wavelength of 1000 nm to 2000 nm from a viewpoint of a heat shielding property. When a maximum reflectance for light in the wavelength region is 40%R or more, a reflectance for light in a near-infrared wavelength region on an outermost surface of the heat shielding member of the present invention is improved to enhance a heat shielding effect, which is preferable. The maximum reflectance for the light is more preferably 60%R or more, still more preferably 70%R or more, particularly preferably 80%R or more, more particularly preferably 90%R or more, and most preferably 100%R or more. Note that a measured value of the maximum reflectance for the light may exceed 100%R due to a measurement error or the like, but since a theoretical upper limit value is 100%R, when the measured value exceeds 100%R, it is regarded as 100%R.

In addition, a minimum reflectance of the heat shielding member of the present invention for light having a wavelength of 1000 nm or 2000 nm is preferably 40%R or more, more preferably 60%R or more, still more preferably 70%R or more, particularly preferably 80%R or more, more particularly preferably 90%R or more, and most preferably 100%R or more.

Furthermore, the minimum reflectance of the heat shielding member of the present invention for light in the wavelength region is preferably 40%R or more, more preferably 60%R or more, still more preferably 70%R or more, particularly preferably 80%R or more, more particularly preferably 90%R or more, and most preferably 100%R or more.

The heat shielding member of the present invention includes: a base material; a near-infrared reflecting lower film formed on the base material; and a near-infrared transmitting upper film formed on the near-infrared reflecting lower film, and is characterized in that the near-infrared reflecting lower film contains a near-infrared reflecting material, the near-infrared transmitting upper film contains a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi, the near-infrared reflecting lower film has a maximum reflectance of 40%R or more for light having a wavelength of 800 nm to 2500 nm, and the near-infrared transmitting upper film has a maximum transmittance of 40%T or more for light having a wavelength of 800 nm to 2500 nm.

With the above-described configuration, the heat shielding member of the present invention has a heat shielding property and a black appearance, and thus can be used for an application such as a vehicle or an outer wall of a building.

The near-infrared reflecting lower film of the present invention preferably reflects light in a near-infrared wavelength region of a wavelength of 800 nm to 2500 nm, and more preferably reflects light in a near-infrared wavelength region of a wavelength of 1000 nm to 2000 nm from a viewpoint of a heat shielding property. When a maximum reflectance for light in the wavelength region is 40%R or more, a reflectance for light in a near-infrared wavelength region on a surface of the near-infrared reflecting lower film of the present invention is improved to enhance a heat shielding effect, which is preferable. The maximum reflectance for the light is more preferably 60%R or more, still more preferably 70%R or more, particularly preferably 80%R or more, more particularly preferably 90%R or more, and most preferably 100%R or more. Note that a measured value of the maximum reflectance for the light may exceed 100%R due to a measurement error or the like, but since a theoretical upper limit value is 100%R, when the measured value exceeds 100%R, it is regarded as 100%R.

In addition, a minimum reflectance of the near-infrared reflecting lower film of the present invention for light having a wavelength of 1000 nm or 2000 nm is preferably 40%R or more, more preferably 60%R or more, still more preferably 70%R or more, particularly preferably 80%R or more, more particularly preferably 90%R or more, and most preferably 100%R or more.

Furthermore, the minimum reflectance of the near-infrared reflecting lower film of the present invention for light in the wavelength region is preferably 40%R or more, more preferably 60%R or more, still more preferably 70%R or more, particularly preferably 80%R or more, more particularly preferably 90%R or more, and most preferably 100%R or more.

The near-infrared transmitting upper film of the present invention preferably transmits light in a near-infrared wavelength region of a wavelength of 800 nm to 2500 nm, and more preferably transmits light in a near-infrared wavelength region of a wavelength of 1000 nm to 2000 nm from a viewpoint of a heat shielding property. When a maximum transmittance for light in the wavelength region is 40%T or more, a reflectance for light in a near-infrared wavelength region on an outermost surface of the near-infrared reflecting lower film of the present invention is improved to enhance a heat shielding effect, which is preferable. The maximum transmittance for the light is more preferably 60%T or more, still more preferably 70%T or more, particularly preferably 80%T or more, more particularly preferably 90%T or more, and most preferably 100%T or more. Note that a measured value of the maximum transmittance for the light may exceed 100%T due to a measurement error or the like, but since a theoretical upper limit value is 100%T, when the measured value exceeds 100%T, it is regarded as 100%T.

In addition, a minimum transmittance of the near-infrared transmitting upper film of the present invention for light having a wavelength of 1000 nm or 2000 nm is preferably 40%T or more, more preferably 60%T or more, still more preferably 70%T or more, particularly preferably 80%T or more, more particularly preferably 90%T or more, and most preferably 100%T or more.

Furthermore, a minimum transmittance of the near-infrared transmitting upper film of the present invention for light in the wavelength region is preferably 40%T or more, more preferably 60%T or more, still more preferably 70%T or more, particularly preferably 80%T or more, more particularly preferably 90%T or more, and most preferably 100%T or more.

A method for manufacturing the heat shielding member of the present invention includes: a lower film forming step of forming a near-infrared reflecting lower film containing a near-infrared reflecting material on a base material; and an upper film forming step of forming a near-infrared transmitting upper film containing a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi on the near-infrared reflecting lower film.

As the lower film forming step, a method for disposing a flaky near-infrared reflecting material on a base material, a method for applying a coating material obtained by mixing a near-infrared reflecting material and a dispersion, or a thin film forming method such as vacuum vapor deposition, sputtering, electroplating, or electroless plating can be used.

By these methods, a near-infrared reflecting lower film containing a near-infrared reflecting material is formed on the base material.

As the upper film forming step, a method for applying a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi on the near-infrared reflecting lower film formed in the lower film forming step, or a thin film forming method such as vacuum deposition, sputtering, electroplating, or electroless plating can be used. Note that, as the compound particles, a compound powder obtained by adding a dispersant to the compound particles may be used.

By these methods, a near-infrared transmitting upper film containing a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi is formed on the near-infrared reflecting lower film.

In this way, the heat shielding member of the present invention is obtained.

The manganese oxide of the present invention is a manganese oxide whose constituent element is represented by A-Mn-O, and is characterized in that the constituent element A contains one or more elements selected from Sc, Y, Dy, Ho, Er, Tm, Yb, and Lu.

The manganese oxide of the present invention is not limited to a powder form, and may be in a liquid form dispersed in a dispersion.

The constituent elements of the manganese oxide of the present invention can be represented by A-Mn-O. Specifically, the constituent element A represents one or more elements selected from Sc, Y, Dy, Ho, Er, Tm, Yb, and Lu. In addition, the constituent element Mn represents a manganese element which is a transition metal, and can have a valence of 2 to 7 depending on the bonded constituent element A, and is particularly stable in a state of +2, +3, +4, +6, or +7.

Here, when a molar ratio A/Mn of the constituent element A to Mn is 0.001 to 2.0, a material having a low transmittance in a visible light region and excellent transmission performance in a near-infrared region can be obtained. Furthermore, the molar ratio A/Mn of the constituent element A to Mn is more preferably 0.1 to 1.0, still more preferably 0.3 to 0.7, particularly preferably 0.4 to 0.6, and most preferably 0.5. Note that when the constituent element A is formed of a plurality of elements, "A" in the above-described molar ratio A/Mn is a sum of the numbers of moles of the plurality of elements as the constituent element A.

In addition, the constituent element O represents an oxygen element, and its amount only needs to satisfy an electroneutrality condition, and includes oxygen excess and oxygen deficiency.

In addition, the manganese oxide of the present invention is characterized in that the constituent element A contains one or more elements selected from H, an alkali metal, an alkaline earth metal, a rare earth element, B, F, Al, Si, P, S, Cl, Ti, V, Cr, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Au, Tl, Pb, and Bi.

When the manganese oxide of the present invention contains, as the constituent element A, one or more elements selected from H, an alkali metal, an alkaline earth metal, a rare earth element, B, F, Al, Si, P, S, Cl, Ti, V, Cr, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Au, Tl, Pb, and Bi in addition to one or more elements selected from Sc, Y, Dy, Ho, Er, Tm, Yb, and, Lu, a transmittance in a visible light region is low and a transmittance in a near-infrared region is high, which is preferable.

Furthermore, the manganese oxide of the present invention is preferably an inorganic compound, and preferably contains a metal element and/or a metalloid element. Note that, in the present specification, a Be element and a Mg element are included in an alkaline earth metal unless otherwise specified.

In addition, in the manganese oxide of the present invention, the constituent element A preferably contains one or more elements selected from Cr, Fe, Co, and Ni.

When the manganese oxide of the present invention contains one or more elements selected from Cr, Fe, Co, and Ni as the constituent element A in addition to one or more elements selected from Sc, Y, Dy, Ho, Er, Tm, Yb, and Lu as the constituent element A, a transmittance in a visible light region is low and a transmittance in a near-infrared region is high, which is preferable. For example, a part of Mn constituting the manganese oxide of the present invention may be replaced with one or more elements selected from Cr, Fe, Co, and Ni.

In addition, the manganese oxide of the present invention is characterized by having a peak derived from a (111) plane appearing at 2θ = 28.0° to 32.0° and a peak derived from a (112) plane appearing at 2θ = 31.0° to 35.0° in an XRD spectrum of the manganese oxide.

When the manganese oxide of the present invention has a peak derived from a (111) plane appearing at 2θ = 28.0° to 32.0° and a peak derived from a (112) plane appearing at 2θ = 31.0° to 35.0° in an XRD spectrum of the manganese oxide using a CuKα ray, it indicates that a crystal system of the manganese oxide of the present invention contains a hexagonal crystal, and a transmittance rapidly increases around a wavelength of 780 nm which is a boundary point between a visible light region and a near-infrared region, which is preferable. In addition, the XRD spectrum of the manganese oxide of the present invention using a CuKα ray, a peak derived from a (111) plane more preferably appears at 2θ = 29.5° to 31.0°, and a peak derived from a (112) plane more preferably appears at 2θ = 32.0° to 34.0°.

Specifically, the manganese oxidation of the present invention is sufficiently mixed and pulverized with an agate mortar, and then classified with a sieve having a mesh size of 75 µm, 0.5 g of the powder in a central part in a good mixed state in an undersieve container is fractionated onto a glass sample plate, and filling is performed using a glass plate so as to have a smooth surface to obtain a sample. The sample is subjected to X-ray powder diffraction measurement using a CuKα ray according to the following X-ray powder diffraction measurement conditions to obtain an X-ray diffraction pattern. Here, in the obtained X-ray diffraction pattern, a peak appearing at 2θ = 28.0° to 33.0° is derived from a hexagonal manganese oxide AMnO₃ (111) plane, and a peak appearing at 2θ = 31.0° to 35.0° is derived from a hexagonal manganese oxide AMnO₃ (112) plane. Note that "A" of the hexagonal manganese oxide AMnO₃ represents the above-described constituent element A.

### =X-ray powder diffraction measurement conditions=

- Apparatus: MiniFlexII (manufactured by Rigaku Corporation)
- Measurement range (20): 5 to 90°
- Sampling width: 0.02°
- Scan speed: 1.0°/min
- X-ray: CuKα ray
- Voltage: 30 kV
- Current: 15 mA
- Divergence slit: 1.25°
- Scattering slit: 1.25°
- Light receiving slit: 0.3 mm
- X-ray analysis software: PDXL2 Version 2.9.1.0

In addition, the manganese oxide of the present invention is characterized in that a crystal system of the manganese oxide contains a hexagonal crystal.

When the crystal system of the manganese oxide of the present invention contains a hexagonal crystal, a transmittance of the manganese oxide rapidly increases around a wavelength of 780 nm which is a boundary point between a visible light region and a near-infrared region, which is preferable.

In addition, the manganese oxide of the present invention is characterized by having a reflectance of 20%R or less for light having wavelengths of 550 nm and 700 nm.

With this configuration, the manganese oxide of the present invention having a low value of reflectance for light having wavelengths of 550 nm and 700 nm in a visible light region is considered to have not only an advantage of being excellent in performance of preventing diffuse reflection (halation) of light in the visible light region, that is, simply not transmitting visible light in the visible light region, but also another advantage of being excellent in performance of absorbing visible light. In addition, the reflectance for light having wavelengths of 550 nm and 700 nm is more preferably 15%R or less, still more preferably 12%R or less, particularly preferably 10%R or less, more particularly preferably 5%R or less, and most preferably 0%R. Furthermore, the reflectance of the manganese oxide particle of the present invention for light having wavelengths of 550 nm, 600 nm, 650 nm, and 700 nm is more preferably equal to or less than the above-described upper limit value. The reflectance of the manganese oxide of the present invention for light having wavelengths of 550 nm to 700 nm is still more preferably equal to or less than the above-described upper limit value. Note that the reflectance of the manganese oxide of the present invention for light having wavelengths of 550 nm and 700 nm is typically 0.001%R to 10%R. In addition, the reflectance for light having the wavelengths of 550 nm and 700 nm may be 0.1%R to 5%R, or 0.11%R to 3%R. Furthermore, the reflectance for light having the wavelengths of 550 nm and 700 nm may be 0.001%R to 0.99%R, or 0.001%R to 0.1%R.

The reflectance is measured using a spectrophotometer (ultraviolet visible near-infrared spectrophotometer UH4150 type manufactured by Hitachi High-Tech Science Corporation) to which a φ60 mm integrating sphere unit is attached. A sample filled with the manganese oxide according to the present invention is attached thereto, and a reflectance for light having wavelengths of 550 nm and 700 nm is measured.

In addition, the manganese oxide of the present invention preferably has a band gap of 0.62 eV or more and 1.77 eV or less.

When the band gap of the manganese oxide of the present invention is 0.62 eV or more and 1.77 eV or less, a transmittance in a visible light region is low, while a transmittance in a near-infrared region is high, which is preferable. Specifically, 0.62 eV corresponds to light having a wavelength of 2000 nm in a near-infrared region, and 1.77 eV corresponds to light having a wavelength of 700 nm near a lower end of a visible light region. In addition, the band gap is more preferably 1.10 eV or more and 1.77 eV or less, still more preferably 1.18 eV or more and 1.55 eV or less, particularly preferably 1.20 eV or more and 1.53 eV or less, and more particularly preferably 1.25 eV or more and 1.50 eV or less.

The manganese oxide of the present invention has a low transmittance in a visible light region and a high transmittance in a near-infrared region, that is, wavelength dependence of the transmittance has a direct causal relationship with a band gap of the manganese oxide. A substance having a band gap strongly absorbs light having energy equal to or higher than energy of the band gap, and thus an absorptivity largely changes before and after the energy of the band gap. Therefore, the band gap determines a wavelength region that transitions from a short wavelength region with a low transmittance to a long wavelength region with a high transmittance. For example, when an absorptivity for light having a wavelength of 700 nm, that is, energy of 1.77 eV increases, a transmittance for light having a wavelength of 700 nm (visible light region) tends to decrease, and when an absorptivity for light having a wavelength of 2000 nm, that is, energy of 0.62 eV decreases, a transmittance for light having a wavelength of 2000 nm (near-infrared region) tends to increase. In order to obtain the wavelength dependence of the transmittance by absorption of light by a band gap, there is desirably a band gap between 0.62 eV and 1.77 eV. On the other hand, the near-infrared transmission material of the present invention causes not only band gap absorption by the manganese oxide of the present invention but also scattering, refraction, or absorption by a component other than the manganese oxide of the present invention. Therefore, wavelength dependence of a transmittance due to light absorption by the band gap of the manganese oxide of the present invention and wavelength dependence of a transmittance of the near-infrared transmission material of the present invention containing the manganese oxide of the present invention do not completely coincide with each other, but there is a strong positive correlation.

The band gap of the manganese oxide of the present invention can be determined as follows. First, a diffuse reflectance of the manganese oxide of the present invention from an ultraviolet region to a near-infrared region is measured using a standard integral class ultraviolet visible near-infrared spectrometer. Next, the measured diffuse reflectance from an ultraviolet region to a near-infrared region is subjected to Kubelka-Munk conversion to determine a Kubelka-Munk function f. Note that the Kubelka-Munk function f is obtained from a formula of (1-R)²/2R, in which R is the diffuse reflectance.

A Tauc plot with a horizontal axis representing energy of light E = hv and a vertical axis representing (hvf)^{1/n} is created. A tangent is drawn at a position of an inflection point in the curve, and a point intersecting with the horizontal axis is defined as a value of a band gap in the manganese oxide of the present invention. Here, since a band gap transition of the manganese oxide of the present invention, that is, YMnO₃ is a direct allowable transition, n = 1/2 is used.

In addition, the manganese oxide of the present invention is characterized in that a compositional formula thereof is represented by AxMnyOz, and x/y = 0.001 or more and 5.00 or less is satisfied.

When the coefficient x of the constituent element A and the coefficient y of the constituent element Mn in the compositional formula (AxMnyOz) of the manganese oxide of the present invention satisfy x/y = 0.001 or more and 5.00 or less, transparency is gradually improved from around a wavelength of 1000 nm and a high transmittance is exhibited in a long wavelength region around a wavelength of 2000 nm, which is preferable. In addition, x/y = 0.001 or more and 2.00 or less is more preferable, and x/y = 0.10 or more and 1.5 or less is still more preferable When an oxide in which an atomic ratio between the constituent element A and Mn is 1 : 2 is mainly used, x/y = 0.40 or more and 0.60 or less is more preferable. When an oxide in which an atomic ratio between the constituent element A and Mn is 1 : 1 is mainly used, x/y = 0.90 or more and 1.10 or less is more preferable. In addition, when the constituent element A is formed of a plurality of elements, the coefficient x of the constituent element A is a sum of coefficients of the plurality of elements as the constituent element A. Note that the coefficient z of the constituent element O only needs to be a value that neutralizes a sum of charges of the constituent elements A and Mn. Each of the coefficients x, y, and z represents atom% when the total amount of AxMnyOz is 100 atom%.

In addition, in the manganese oxide of the present invention, when the constituent element A contains Y, a transmittance rapidly rises from a low wavelength side around a wavelength of 1000 nm in a near-infrared region, and thereafter high transparency is exhibited while transmission in a visible light region is suppressed, which is preferable.

In addition, in the manganese oxide of the present invention, in a case where the constituent element A contains Y, when x/y = 0.001 or more and 5.00 or less is satisfied, high transparency is exhibited in a near-infrared region while transmission in a visible light region is suppressed, which is preferable. In addition, x/y = 0.001 or more and 2.00 or less is more preferable, and x/y = 0.10 or more and 1.5 or less is still more preferable When an oxide in which an atomic ratio between the constituent element A and Mn is 1 : 2 is mainly used, x/y = 0.40 or more and 0.60 or less is more preferable. When an oxide in which an atomic ratio between the constituent element A and Mn is 1 : 1 is mainly used, x/y = 0.90 or more and 1.10 or less is more preferable.

Furthermore, in the manganese oxide of the present invention, when the constituent element A contains Y, an intensity ratio (211)/(112) of a peak intensity derived from a (211) plane of Mn₃O₄ appearing at 2θ = 32.5 to 33.5° to a peak intensity derived from a (112) plane of an oxide appearing at 2θ = 35.5 to 36.5° in an XRD spectrum of the manganese oxide using a CuKα ray is preferably 2.50 or less, and more preferably 0.10 or more and 1.00 or less, and when the intensity ratio (211)/(112) is 0, it is suggested that Mn₃O₄ is not present. The oxide is particularly preferable from a viewpoint of high uniformity and high blackness (a* (reddishness) and b* (yellowness) measured using CIE1976, that is, a CIE1976 (L*a*b*) color space, are each close to 0).

In addition, the manganese oxide of the present invention is for a near-infrared transmission material.

As described above, the manganese oxide of the present invention has a low transmittance in a visible light region and excellent transmission performance in a near-infrared region, and therefore can be used for a near-infrared transmission material.

The manganese oxide particles of the present invention are characterized by containing the above-described manganese oxide of the present invention.

The manganese oxide particles of the present invention are in a powder form, are preferably inorganic compound particles, and preferably contain a metal element and/or a metalloid element.

The manganese oxide particles of the present invention are a manganese oxide whose constituent element is represented by A-Mn-O, and are characterized in that the constituent element A contains one or more elements selected from Sc, Y, Dy, Ho, Er, Tm, Yb, and Lu.

The constituent elements of the manganese oxide particles of the present invention can be represented by A-Mn-O. Specifically, the constituent element A represents one or more elements selected from Sc, Y, Dy, Ho, Er, Tm, Yb, and Lu. In addition, the constituent element Mn represents a manganese element which is a transition metal, and can have a valence of 2 to 7 depending on the bonded constituent element A, and is particularly stable in a state of +2, +3, +4, +6, or +7.

In addition, the constituent element O represents an oxygen element, and its amount only needs to satisfy an electroneutrality condition, and includes oxygen excess and oxygen deficiency.

In addition, the manganese oxide particles of the present invention may contain, as the constituent element A, one or more elements selected from H, an alkali metal, an alkaline earth metal, a rare earth element, B, F, Al, Si, P, S, Cl, Ti, V, Cr, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Au, Tl, Pb, and Bi in addition to one or more elements selected from Sc, Y, Dy, Ho, Er, Tm, Yb, and, Lu.

In addition, the manganese oxide particles of the present invention preferably contain, as the constituent element A, one or more elements selected from Cr, Fe, Co, and Ni.

When the manganese oxide particles of the present invention contain, as the constituent element A, one or more elements selected from Cr, Fe, Co, and Ni in addition to one or more elements selected from Sc, Y, Dy, Ho, Er, Tm, Yb, and Lu, a transmittance in a visible light region is low and a transmittance in a near-infrared region is high, which is preferable. For example, a part of Mn constituting the manganese oxide particles of the present invention may be replaced with one or more elements selected from Cr, Fe, Co, and Ni.

In addition, the manganese oxide particles of the present invention are characterized by having a peak derived from a (111) plane appearing at 2θ = 28.0° to 32.0° and a peak derived from a (112) plane appearing at 2θ = 31.0° to 35.0° in an XRD spectrum of the manganese oxide particles.

Since the manganese oxide particles of the present invention have a peak derived from a (111) plane appearing at 2θ = 28.0° to 32.0° and a peak derived from a (112) plane appearing at 2θ = 31.0° to 35.0° in an XRD spectrum of the manganese oxide particles using a CuKα ray, it indicates that a crystal system of the manganese oxide particles of the present invention contains a hexagonal crystal, and a transmittance rapidly increases around a wavelength of 780 nm which is a boundary point between a visible light region and a near-infrared region, which is preferable.

In addition, the manganese oxide particles of the present invention are characterized in that a crystal system of the manganese oxide particles contains a hexagonal crystal.

When the crystal system of the manganese oxide particles of the present invention contains a hexagonal crystal, a transmittance of the manganese oxide particles rapidly increases around a wavelength of 780 nm which is a boundary point between a visible light region and a near-infrared region, which is preferable.

In addition, the manganese oxide particles of the present invention are characterized by having a reflectance of 20%R or less for light having wavelengths of 550 nm and 700 nm.

When the reflectance of the manganese oxide particles of the present invention for light having wavelengths of 550 nm and 700 nm is 20%R or less, the manganese oxide particles not only simply transmit no visible light but also has excellent visible light absorption performance, which is preferable. The reflectance for light having wavelengths of 550 nm and 700 nm is more preferably 15%R or less, still more preferably 12%R or less, particularly preferably 10%R or less, more particularly preferably 5%R or less, and most preferably 0%R. Furthermore, the reflectance of the manganese oxide particles of the present invention for light having wavelengths of 550 nm, 600 nm, 650 nm, and 700 nm is more preferably equal to or less than the above-described upper limit value. The reflectance of the manganese oxide particles of the present invention for light having wavelengths of 550 nm to 700 nm is still more preferably equal to or less than the above-described upper limit value. Note that the reflectance of the manganese oxide particles of the present invention for light having wavelengths of 550 nm and 700 nm is typically 0.001%R to 10%R. In addition, the reflectance for light having the wavelengths of 550 nm and 700 nm may be 0.1%R to 5%R, or 0.11%R to 3%R. Furthermore, the reflectance for light having the wavelengths of 550 nm and 700 nm may be 0.001%R to 0.99%R, or 0.001%R to 0.1%R.

In addition, the manganese oxide particles of the present invention are characterized in that a compositional formula thereof is represented by AxMnyOz, and x/y = 0.001 or more and 5.00 or less is satisfied.

In the manganese oxide particles of the present invention, when the coefficient x of the constituent element A and the coefficient y of the constituent element Mn in the compositional formula (AxMnyOz) thereof satisfy x/y = 0.001 or more and 5.00 or less, transparency is gradually improved from around a wavelength of 1000 nm and a high transmittance is exhibited in a long wavelength region around a wavelength of 2000 nm, which is preferable. In addition, x/y = 0.001 or more and 2.00 or less is more preferable, and x/y = 0.10 or more and 1.5 or less is still more preferable When an oxide in which an atomic ratio between the constituent element A and Mn is 1 : 2 is mainly used, x/y = 0.40 or more and 0.60 or less is more preferable. When an oxide in which an atomic ratio between the constituent element A and Mn is 1 : 1 is mainly used, x/y = 0.90 or more and 1.10 or less is more preferable. In addition, when the constituent element A is formed of a plurality of elements, the coefficient x of the constituent element A is a sum of coefficients of the plurality of elements as the constituent element A. Note that the coefficient z of the constituent element O only needs to be a value that neutralizes a sum of charges of the constituent elements A and Mn.

In addition, in the manganese oxide particles of the present invention, when the constituent element A contains Y, a transmittance rapidly rises from a low wavelength side around a wavelength of 1000 nm in a near-infrared region, and thereafter high transparency is exhibited while transmission in a visible light region is suppressed, which is preferable.

In addition, in the manganese oxide particles of the present invention, when the constituent element A contains Y, a compositional formula of the manganese oxide is represented by AxMnyOz, and x/y = 0.001 or more and 5.00 or less is satisfied, a transmittance rapidly rises from a low wavelength side around a wavelength of 1000 nm in a near-infrared region, and thereafter high transparency is exhibited while transmission in a visible light region is suppressed, which is preferable. In addition, x/y = 0.001 or more and 2.00 or less is more preferable, and x/y = 0.10 or more and 1.5 or less is still more preferable When an oxide in which an atomic ratio between the constituent element A and Mn is 1 : 2 is mainly used, x/y = 0.40 or more and 0.60 or less is more preferable. When an oxide in which an atomic ratio between the constituent element A and Mn is 1 : 1 is mainly used, x/y = 0.90 or more and 1.10 or less is more preferable.

In addition, the manganese oxide particles of the present invention are characterized in that an average value of secondary particle sizes of the manganese oxide particles obtained by SEM observation is 10 nm or more and 20 µm or less.

When the average value of the secondary particle sizes of the manganese oxide particles of the present invention obtained by SEM observation is 10 nm or more and 20 µm or less, transparency for a near-infrared ray is improved, which is preferable.

In addition, the average value of the secondary particle sizes is more preferably 50 nm or more, and still more preferably 100 nm or more. On the other hand, the average value of the secondary particle sizes is more preferably 10 µm or less, still more preferably 2 µm or less, and particularly preferably 0.5 µm or less. Typically, the average value of the secondary particle sizes may be 50 nm to 1 µm, or 100 nm to 1 µm.

Here, the average value of the secondary particle sizes of the manganese oxide particles obtained by SEM observation can be determined by observing an SEM image under a condition of an accelerating voltage of 1 kV using a field emission scanning electron microscope (FE-SEM). Specifically, the manganese oxide particles of the present invention (optionally extracted 30 particles) are directly observed, the secondary particle sizes thereof are measured, and an arithmetic average value thereof is calculated, thereby obtaining an average value of the secondary particle sizes obtained by SEM observation. Note that, as a measurement magnification, it is only required to select an appropriate magnification in a range of 500 times to 100,000 times depending on the secondary particle size.

In addition, the manganese oxide particles of the present invention are characterized by having a specific surface area of 0.20 m²/g or more as measured by a BET method.

When the manganese oxide particles of the present invention have a specific surface area of 0.20 m²/g or more as measured by a BET method, dispersibility of the manganese oxide particles is improved, which is preferable. In addition, the specific surface area is more preferably 10.0 m²/g or more, and still more preferably 15.0 m²/g or more. Typically, the specific surface area measured by the BET method may be 0.20 m²/g to 500 m²/g, 0.20 m²/g to 300 m²/g, 0.20 m²/g to 200 m²/g, or 0.20 m²/g to 100 m²/g.

The specific surface area (SSA) of the manganese oxide particles of the present invention can be determined by performing measurement using "Macsorb (HM model-1201)" manufactured by Mountech Co., Ltd. in accordance with "(3.5) One-Point Method in 6.2 Flow Method" in JIS R 1626-1996 (Method for Measuring Specific Surface Area of Fine Ceramic Powder by Gas Adsorption BET Method). At this time, a mixed gas of helium as a carrier gas and nitrogen as an adsorbent gas is used. In addition, a nitrogen gas is used for calibration.

In addition, in the manganese oxide particles of the present invention, a particle size at which an integrated volume fraction by particle size distribution measurement using a laser diffraction/scattering method is 50% is preferably 0.1 µm or more and 20 µm or less, more preferably 0.2 µm or more and 10 µm or less, and still more preferably 0.3 µm or more and 1 µm or less.

A particle size distribution of the particles is evaluated by a laser diffraction/scattering method in accordance with JIS Z 8825:2013 using a laser diffraction/scattering method particle size distribution measuring apparatus (MT3300EXII manufactured by MicrotracBEL Corp.). In addition, without performing filtering, a sample is subjected to ultrasonic treatment at an ultrasonic output of 40 W for three minutes, and then measurement is performed.

Specifically, a slurry-like sample is put into a sample input port of a sample circulator disposed in the measuring apparatus until the measuring apparatus determines that the amount of the sample is within a measurable range, and then ultrasonic dispersion treatment (ultrasonic power 40 W, three minutes) built in the measuring apparatus is performed. After it is confirmed that display is stabilized, measurement is performed.

In addition, the manganese oxide particles of the present invention are characterized by having L* of 45 or less as measured by CIE1976.

In the manganese oxide particles of the present invention, when L* measured by CIE1976 is 45 or less, it is preferable from a viewpoint that an appearance is more blackened and a transmittance in a visible light region can be reduced. L* is more preferably 40 or less, still more preferably 35 or less, particularly preferably 30 or less, more particularly preferably 20 or less, still more particularly preferably 10 or less, and most preferably 0. Note that, in the manganese oxide particles of the present invention, L* measured by CIE1976 may be typically 1 to 45, 10 to 45, or 20 to 45.

Here, a value of L* measured using CIE1976, that is, a CIE1976 (L*a*b*) color space, indicates brightness. A value of L* closer to 100 indicates that the color becomes lighter toward white, and a value of L* closer to 0 indicates that the color becomes darker toward black. Specifically, a value of L* is determined by performing measurement in accordance with JIS Z 8722:2009 using a color difference meter (CR-300 manufactured by KONICA MINOLTA, INC.).

Furthermore, a value of a* in the CIE1976 (L*a*b*) color space is preferably -5 to 20, more preferably -5 to 15, still more preferably -5 to 10, particularly preferably -5 to 5, more particularly preferably -2 to 2, and most preferably 0. A value of a* closer to 0 indicates that coloring is suppressed. In addition, a value of b* in the CIE1976 (L*a*b*) color space is preferably -10 to 25, more preferably -5 to 20, still more preferably -5 to 15, particularly preferably -5 to 5, more particularly preferably -2 to 2, and most preferably 0. A value of b* closer to 0 indicates that coloring is suppressed. Specifically, similarly to a value of L*, values of a* and b* are determined by performing measurement in accordance with JIS Z 8722:2009 using a color difference meter (CR-300 manufactured by KONICA MINOLTA, INC.).

In addition, the manganese oxide particles of the present invention are for a near-infrared transmission material.

As described above, the manganese oxide particles of the present invention have a low transmittance in a visible light region and excellent transmission performance in a near-infrared region, and therefore are preferable for a near-infrared transmission material.

Note that the manganese oxide particles of the present invention may be subjected to a surface treatment or a surface treatment agent may be added to the system from a viewpoint of improving dispersibility. Examples of the surface treatment agent include a silane coupling agent. In addition, the surface treatment agent may be used singly or in any combination of two or more types thereof.

The near-infrared transmission material of the present invention is characterized by containing the above-described manganese oxide particles of the present invention and a dispersion containing a component that transmits a near-infrared ray.

The near-infrared transmission material of the present invention contains the above-described manganese oxide particles of the present invention and a dispersion containing a component that transmits a near-infrared ray, and may be a mixture obtained by mixing the manganese oxide particles and the dispersion, or may be one obtained by applying the manganese oxide particles onto a surface of the dispersion. In addition, the manganese oxide particles contained in the near-infrared transmission material of the present invention are preferably inorganic compound particles, and preferably contain a metal element and/or a metalloid element.

The manganese oxide particles contained in the near-infrared transmission material of the present invention are not limited to manganese oxide particles having the same composition and the same properties. For example, the manganese oxide particles may be obtained by appropriately mixing manganese oxide particles having the same composition and different particle size distributions in order to prepare fluidity. In addition, the manganese oxide particles may be obtained by appropriately mixing manganese oxide particles having different compositions in order to prepare a transmittance in a near-infrared region. Furthermore, the manganese oxide particles may be obtained by appropriately mixing manganese oxide particles having different compositions and different properties depending on an application.

In addition, the manganese oxide particles contained in the near-infrared transmission material of the present invention are manganese oxide particles whose constituent element is represented by A-Mn-O, and the constituent element A preferably contains one or more elements selected from Sc, Y, Dy, Ho, Er, Tm, Yb, and Lu.

When the constituent element of the manganese oxide particle contained in the near-infrared transmission material of the present invention is represented by A-Mn-O, and the constituent element A contains one or more elements selected from Sc, Y, Dy, Ho, Er, Tm, Yb, and Lu, a transmittance in a visible light region is low and a transmittance in a near-infrared region is high, which is preferable.

Here, the constituent element Mn represents a manganese element which is a transition metal, and can have a valence of 2 to 7 depending on the bonded constituent element A, and is particularly stable in a state of +2, +3, +4, +6, or +7. In addition, the constituent element O represents an oxygen element, and its amount only needs to satisfy an electroneutrality condition, and includes oxygen excess and oxygen deficiency.

In addition, the manganese oxide particles contained in the near-infrared transmission material of the present invention may contain, as the constituent element A, one or more elements selected from H, an alkali metal, an alkaline earth metal, a rare earth element, B, F, Al, Si, P, S, Cl, Ti, V, Cr, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Au, Tl, Pb, and Bi in addition to one or more elements selected from Sc, Y, Dy, Ho, Er, Tm, Yb, and, Lu.

In addition, the manganese oxide particles contained in the near-infrared transmission material of the present invention preferably contain, as the constituent element A, one or more elements selected from Cr, Fe, Co, and Ni in addition to one or more elements selected from Sc, Y, Dy, Ho, Er, Tm, Yb, and Lu.

When the manganese oxide particles contained in the near-infrared transmission material of the present invention contain, as the constituent element A, one or more elements selected from Cr, Fe, Co, and Ni in addition to one or more elements selected from Sc, Y, Dy, Ho, Er, Tm, Yb, and Lu, a transmittance in a visible light region is low and a transmittance in a near-infrared region is high, which is preferable. For example, a part of Mn constituting the manganese oxide particles contained in the near-infrared transmission material of the present invention may be replaced with one or more elements selected from Cr, Fe, Co, and Ni.

The dispersion only needs to contain a component that transmits a near-infrared ray, and does not indicate that all components contained in the dispersion are components that transmit a near-infrared ray.

Note that the near-infrared transmission material of the present invention includes not only a structure in which the manganese oxide particles are uniformly dispersed in the dispersion, but also a structure in which an aggregate in which the plurality of manganese oxide particles are aggregated is formed and dispersed in the dispersion, and a state in which the aggregate is segregated in the dispersion.

In addition, the near-infrared transmission material of the present invention is characterized by having a reflectance of 20%R or less for light having wavelengths of 550 nm and 700 nm.

When the reflectance of the near-infrared transmission material of the present invention for light having wavelengths of 550 nm and 700 nm is 20%R or less, the near-infrared transmission material not only simply transmits no visible light but also has excellent visible light absorption performance, which is preferable. The reflectance for light having wavelengths of 550 nm and 700 nm is more preferably 15%R or less, still more preferably 12%R or less, particularly preferably 10%R or less, more particularly preferably 5%R or less, and most preferably 0%R. Furthermore, the reflectance of the near-infrared transmission material of the present invention for light having wavelengths of 550 nm, 600 nm, 650 nm, and 700 nm is more preferably equal to or less than the above-described upper limit value. The reflectance of the near-infrared transmission material of the present invention for light having wavelengths of 550 nm to 700 nm is still more preferably equal to or less than the above-described upper limit value. Note that the reflectance of the near-infrared transmission material of the present invention for light having wavelengths of 550 nm and 700 nm is typically 0.001%R to 10%R. In addition, the reflectance for light having the wavelengths of 550 nm and 700 nm may be 0.1%R to 5%R, or 0.11%R to 3%R. Furthermore, the reflectance for light having the wavelengths of 550 nm and 700 nm may be 0.001%R to 0.99%R, or 0.001%R to 0.1%R.

The manganese oxide particles according to the present invention used for measuring a reflectance can be taken out from the near-infrared transmission material of the present invention by the following method. When the dispersion is a resin, the manganese oxide particles can be taken out by heating the near-infrared transmission material to a temperature and for a time at which and during which the resin is sufficiently burned out. In addition, when the dispersion is a solvent such as an organic solvent or water, the manganese oxide particles can be taken out by volatilizing the solvent.

In addition, the near-infrared transmission material of the present invention is characterized in that the dispersion is a resin, glass, an organic solvent, water, or a mixture of two or more types thereof.

The dispersion preferably contains a component that transmits a near-infrared ray.

The manganese oxide, the manganese oxide particles, and the near-infrared transmission material of the present invention may contain, as an additive, an oxide particle of Nb, Ta, Ti, Si, Zr, Zn, Al, Y, V, or a lanthanoid (La, Ce, Nd, Eu, Gd, Dy, Yb, or the like). The content of the additive in the manganese oxide, the manganese oxide particles, and the near-infrared transmission material of the present invention is preferably less than 1% by mass, more preferably less than 0.1% by mass, and still more preferably less than 0.01% by mass. Note that the content of the additive may exceed the above-described range as long as the properties of the manganese oxide, the manganese oxide particles, and the near-infrared transmission material of the present invention are not impaired.

Furthermore, the manganese oxide, the manganese oxide particles, and the near-infrared transmission material of the present invention may contain a component other than the components derived from the manganese oxide or the manganese oxide particles and the components derived from the dispersion (referred to as "other component") as long as action thereof and effect thereof are not inhibited. Examples of the other component include Nb, Ta, Ti, Si, Zr, Zn, Al, Y, V, and a lanthanoid (La, Ce, Nd, Eu, Gd, Dy, Yb, or the like). Note that the other component is not limited thereto. The content of the other component in the manganese oxide, the manganese oxide particles, and the near-infrared transmission material of the present invention is preferably less than 5% by mass, more preferably less than 4% by mass, and still more preferably less than 3% by mass. Note that the manganese oxide, the manganese oxide particles, and the near-infrared transmission material of the present invention are assumed to contain inevitable impurities which are not intended. The total content of the inevitable impurities is preferably less than 10% by mass, more preferably less than 7% by mass, still more preferably less than 5% by mass, particularly preferably less than 3% by mass, and more particularly preferably less than 1% by mass.

A method for manufacturing the compound particles of the present invention is characterized by including: a step of pulverizing and mixing two or more raw material compounds containing an element selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi to obtain a mixed raw material; a step of firing the obtained mixed raw material to obtain a compound; and a step of pulverizing the obtained compound to obtain compound particles.

In the method for manufacturing the compound particles of the present invention, the step of pulverizing and mixing two or more raw material compounds containing an element selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi to obtain a mixed raw material is referred to as a "pulverizing and mixing step", the step of firing the obtained mixed raw material to obtain a compound is referred to as a "firing step", and the step of pulverizing the obtained compound to obtain compound particles is referred to as a "pulverizing step", and description thereof will be given below.

First, in the pulverizing and mixing step, two or more raw material compounds containing an element selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi are pulverized and mixed to obtain a mixed raw material.

As the raw material compound, the following compounds are preferably used.

Examples of a manganese raw material include electrolytic manganese dioxide (MnO₂), manganese (II) oxide (manganese monoxide), manganese(II, III) oxide, manganese(III) oxide, manganese(IV) oxide (manganese dioxide), manganese(VI) oxide, and manganese(VII) oxide. In particular, electrolytic manganese dioxide (MnO₂) is high-purity manganese dioxide obtained by electrolysis of a high-purity manganese sulfate solution obtained, for example, by pulverizing manganese dioxide ore or the like as a raw material, and subjecting the pulverized product to steps such as reduction to manganese monoxide, dissolution in sulfuric acid, and purification, contains a smaller amount of impurities, has a finer and more uniform shape than general manganese dioxide, and therefore is excellent in reactivity during firing, capable of generating a target product at a lower temperature, and contributes to micronization of a product, which is preferable.

Examples of a yttrium raw material include yttrium oxide (Y₂O₃), yttrium carbonate (Y₂(CO₃)₃•3H₂O), yttrium acetate (Y(CH₃COO)₃•4H₂O), yttrium fluoride (YF₃), and yttrium nitrate (Y (Y(NO₃)₃•nH₂O). In particular, yttrium oxide (Y₂O₃) is preferable.

Examples of a lithium raw material include lithium hydroxide (LiOH), lithium carbonate (Li₂CO₃), lithium nitrate (LiNO₃), lithium hydroxide hydrate (LiOH•H₂O), lithium oxide (Li₂O), fatty acid lithium, and a lithium halogen compound. In particular, a hydroxide of lithium, a carbonate of lithium, and a nitrate of lithium are preferable.

Examples of a magnesium raw material include magnesium oxide (MgO), magnesium hydroxide (Mg(OH)₂), magnesium fluoride (MgF₂), magnesium nitrate (Mg(NO₃)₂), magnesium chloride (MgCl₂), and magnesium sulfate (MgSO₄). In particular, magnesium oxide is preferable.

Examples of an aluminum raw material include aluminum hydroxide (Al(OH)₃) and aluminum fluoride (AlF₃). In particular, aluminum hydroxide is preferable.

Examples of a zinc raw material include zinc oxide (ZnO), zinc sulfide (ZnS), zinc fluoride tetrahydrate (ZnF₂•4H₂O), and zinc stearate ([CH₃ (CH₂)₁₆COO]₂Zn). In particular, zinc oxide (ZnO) is preferable.

Examples of a sodium raw material include sodium carbonate (Na₂CO₃), sodium hydroxide (NaOH), sodium hydrogen carbonate (NaHCO₃), sodium nitrate (NaNO₃), sodium sulfate (Na₂SO₄), and sodium chloride (NaCl). In particular, sodium carbonate (Na₂CO₃) is preferable.

Examples of a calcium raw material include calcium carbonate (CaCO₃), calcium oxide (CaO), calcium hydroxide (CaOH), calcium nitrate (Ca(NO₃)₂), and calcium sulfate (CaSO₄). In particular, calcium carbonate (CaCO₃) is preferable.

Examples of a strontium raw material include strontium carbonate (SrCo₃), strontium sulfate (SrSO₄), strontium nitrate (Sr(NO₃)₂), and strontium chloride (SrCl₂).

Examples of a barium raw material include barium carbonate (BaCO₃), barium sulfate (BaSO₄), barium hydroxide (Ba(OH)₂), and barium fluoride (BaF₂). In particular, barium carbonate (BaCO₃) is preferable.

Examples of a bismuth raw material include bismuth oxide (Bi₂O₃), basic bismuth carbonate ((BiO)₂CO₃), bismuth sulfate (Bi₂(SO₄)₃), and bismuth nitrate pentahydrate (Bi(NO₃)₃•5H₂O). In particular, basic bismuth carbonate ((BiO)₂CO₃) is preferable.

Examples of a lanthanum raw material include lanthanum oxide (La₂O₃), lanthanum carbonate (La₂(CO₃)₃), lanthanum hydroxide (La(OH)₃), lanthanum sulfate (La₂(SO₄)₃•9H₂O), and lanthanum nitrate (La(NO₃)₃•6H₂O). In particular, lanthanum carbonate (La₂(CO₃)₃) is preferable.

Examples of a praseodymium raw material include praseodymium oxide (Pr₆O₁₁), praseodymium acetate ((CH₃COO)₃Pr•nH₂O), praseodymium fluoride (PrF₃), and praseodymium carbonate octahydrate (Pr₂(CO₃)₃•8H₂O). In particular, praseodymium oxide (Pr₆O₁₁) is preferable.

Examples of a neodymium raw material include neodymium oxide (Nd₂O₃), neodymium carbonate (Nd₂(CO₃)₃•8H₂O), and neodymium fluoride (NdF₃). In particular, neodymium carbonate (Nd₂(CO₃)₃•8H₂O) is preferable.

Examples of an iron raw material include iron oxide (Fe₂O₃), iron oxide (Fe₃O₄), iron sulfate (FeSO₄), iron carbonate (FeCO₃), and iron nitrate (Fe(NO₃)₃). In particular, iron oxide (Fe₂O₃) is preferable.

Examples of a titanium raw material include titanium oxide (TiO₂) (rutile, anatase, brookite, or bronze) and titanium tetraisopropoxide ([(CH₃)₂CHO]₄Ti). In particular, titanium oxide (TiO₂) (anatase) is preferable.

Examples of a nickel raw material include basic nickel(II) carbonate (NiCO₃•2Ni(OH)₂•4H₂O), nickel(II) oxide (NiO), nickel(II) sulfate hexahydrate (NiSO₄•6H₂O), nickel(II) chloride hexahydrate (NiCl₂•6H₂O), nickel(II) nitrate hexahydrate (Ni(NO₃)₂•6H₂O), nickel(II) acetate tetrahydrate ((CH₃COO)₂Ni•4H₂O), and nickel(II) hydroxide (Ni(OH)₂). In particular, basic nickel (II) carbonate (NiCO₃•2Ni(OH)₂•4H₂O) is preferable.

Examples of a chromium raw material include chromium(III) oxide (Cr₂O₃), chromium(III) acetate (Cr(CH₃COO)₃), chromium(III) chloride (CrCl₃), chromium(III) fluoride (CrF₃), chromium(III) nitrate nonahydrate (Cr(NO₃)₃₈9H₂O), and chromium(III) sulfate (Cr₂(SO₄)₃). In particular, chromium(III) oxide (Cr₂O₃) is preferable.

Examples of a cobalt raw material include cobalt(II) hydroxide (Co(OH)₂), cobalt(II, III) oxide (Co₃O₄), cobalt(II) oxide (CoO), cobalt(II) carbonate (CoCO₃), cobalt(II) acetate ((CH₃COO)₂Co), cobalt (II) nitrate hexahydrate (Co(NO₃)₂•6H₂O), and cobalt(II) sulfate heptahydrate (CoSO₄•7H₂O). In particular, cobalt(II) hydroxide (Co(OH)₂) is preferable.

Examples of a scandium raw material include scandium oxide (Sc₂O₃) and scandium nitrate pentahydrate (Sc(NO₃)₃•5H₂O). In particular, scandium oxide (Sc₂O₃) is preferable.

Examples of a dysprosium raw material include dysprosium oxide (Dy₂O₃), dysprosium carbonate dihydrate (Dy₂(CO₃)₃•2H₂O), dysprosium fluoride (III) (DyF₃), and dysprosium nitrate hexahydrate (Dy(NO₃)₃•6H₂O). In particular, dysprosium oxide (Dy₂O₃) is preferable.

Examples of a holmium raw material include holmium oxide (Ho₂O₃), holmium acetate monohydrate (Ho(OOCCH₃)₃•H₂O), and holmium carbonate dihydrate (Ho₂(CO₃)₃•2H₂O). In particular, holmium oxide (Ho₂O₃) is preferable.

Examples of an erbium raw material include erbium oxide (Er₂O₃), erbium fluoride (ErF₃), and erbium(III) acetate tetrahydrate (Er(CH₃COO)₃₈4H₂O). In particular, erbium oxide (Er₂O₃) is preferable.

Examples of a thulium raw material include thulium oxide (Tm₂O₃) and thulium(III) acetate tetrahydrate (Tm(OOCCH₃)₃•4H₂O. In particular, thulium oxide (Tm₂O₃) is preferable.

Examples of a ytterbium raw material include ytterbium oxide (Yb₂O₃), ytterbium(III) fluoride (YbF₃), ytterbium(III) chloride (YbCl₃), and ytterbium(III) isopropoxide (Yb(OC₃H₇)₃). In particular, ytterbium oxide is preferable.

Examples of a lutetium raw material include lutetium oxide (Lu₂O₃), lutetium acetate tetrahydrate ((CH₃COO)₃Lu•4H₂O, and lutetium(III) chloride hexahydrate (LuCl₃•6H₂O). In particular, lutetium oxide (Lu₂O₃) is preferable.

When two or more raw material compounds selected from the above-described raw material compounds are mixed, a boron compound may be added to these raw material compounds.

The boron compound is added as a flux component in order to promote complexation of the raw material compounds. In addition, the boron compound remains as an impurity on surfaces of the compound particles of the present invention without being solid-solved after firing, but can be removed by washing with water, wet pulverization, or the like. The content of the boron compound in the compound particles of the present invention is preferably less than 5% by mass, more preferably less than 3% by mass, and still more preferably less than 1% by mass. Note that the content of the boron compound is calculated as a weight ratio of the content as a "boron (B)" element by ICP emission spectrometry (AG-5110 manufactured by Agilent Technologies).

Here, the boron compound is preferably boric acid or lithium borate. Examples of the lithium borate include lithium borate in various forms, such as lithium metaborate (LiBO₃), lithium tetraborate (Li₂B₄O₇), lithium pentaborate (LiB₅O₈), and lithium perborate (Li₂B₂O₆), and lithium tetraborate (Li₂B₄O₇) is particularly preferable.

The above-described method for pulverizing and mixing various raw material compounds can be performed in a dry or wet manner. In the case of the dry manner, the fired powder can be pulverized using a commercially available dry pulverizer such as an attritor, a blade type pulverizer, a jet mill, a hammer mill, a pin mill, or a ball mill. On the other hand, in the case of the wet manner, the fired powder is mixed with water or an organic solvent to form a slurry in which the fired powder is dispersed in water or the organic solvent. Next, the fired powder dispersed in the slurry can be pulverized using a commercially available wet pulverizer such as a media mill such as a ball mill or a bead mill, or an emulsifier/disperser using high-speed shearing. Examples of beads to be used include zirconia beads, alumina beads, glass beads, SUS beads, tungsten carbide beads, and silicon carbide beads. In addition, a media-less pulverizer that pulverizes particles by inter-particle collision under high pressure conditions without using a pulverizing medium may be used, which is preferable from a viewpoint of reducing a risk of contamination of metal powder or the like generated from the pulverizing medium. A method for mixing the raw material compounds is not particularly limited as long as the raw material compounds can be uniformly mixed.

Specifically, it is only required to add the raw material compounds simultaneously or in an appropriate order using a known mixer such as a mixer and to stir and mix the raw material compounds in a wet or dry manner. In the case of wet mixing, preferably, a solvent for pulverization or a liquid medium such as a dispersant is added and wet-mixed to form a slurry, and the obtained slurry is pulverized by a wet pulverizer. Here, examples of the solvent for pulverization include water and an organic solvent (an alcohol, acetone, toluene, or the like). In addition, one or more solvents selected from these solvents for pulverization may be used. In addition, examples of the dispersant include one or more selected from the group consisting of phosphoric acids, and a polycarboxylic acid, a polycarboxylate, a salt of a naphthalene sulfonic acid formalin condensate, polyvinyl alcohol, polyethylene glycose, polyvinyl pyrrolidone, and a copolymer thereof. Furthermore, the slurry is preferably pulverized to a submicron order. The slurry is pulverized to a submicron order and then granulated and fired, whereby uniformity of the particles before the firing reaction can be enhanced, and reactivity can be enhanced.

In this way, in the pulverizing and mixing step, the raw material compounds are pulverized and mixed to obtain a powdery mixed raw material.

In addition, when an average particle size D50 of the powdery mixed raw material obtained by pulverizing and mixing the raw material compounds is 4.2 µm or less, a uniform oxide can be easily formed even when a firing temperature of the mixed raw material is low, which is preferable. In addition, the average particle size D50 of the powdery mixed raw material is more preferably 4 µm or less, still more preferably 3.5 µm or less, particularly preferably 3 µm or less, more particularly preferably 2.5 µm or less, still more particularly preferably 2 µm or less, and further still more particularly preferably 1.5 µm or less. Typically, the average particle size D50 of the powdery mixed raw material may be 0.01 µm to 4.2 µm, 0.1 µm to 1.5 µm, or 0.2 µm to 1.2 µm.

A particle size distribution of the mixed raw material is evaluated by a laser diffraction/scattering method in accordance with JIS Z 8825:2013 using a laser diffraction/scattering method particle size distribution measuring apparatus (MT3300EXII manufactured by MicrotracBEL Corp.). In addition, without performing filtering, a sample is subjected to ultrasonic treatment at an ultrasonic output of 40 W for three minutes, and then measurement is performed.

Specifically, a slurry-like sample is put into a sample input port of a sample circulator disposed in the measuring apparatus until the measuring apparatus determines that the amount of the sample is within a measurable range, and then ultrasonic dispersion treatment (ultrasonic power 40 W, three minutes) built in the measuring apparatus is performed. After it is confirmed that display is stabilized, measurement is performed.

In addition, the mixed raw material obtained through the pulverizing and mixing step may be granulated and dried as necessary.

Specifically, a granulation method may be a wet method or a dry method as long as various pulverized raw material compounds are dispersed in the granulated particles without being separated, and may be an extrusion granulation method, a rolling granulation method, a fluidized granulation method, a mixed granulation method, a spray drying granulation method, a pressure molding granulation method, or a flake granulation method using a roll or the like. Note that, when the raw materials are wet-granulated, it is necessary to sufficiently dry the granulated particles before firing. A drying method may be a known drying method such as a spray heat drying method, a hot air drying method, a vacuum drying method, or a freeze drying method, and the spray heat drying method is particularly preferable. The spray heat drying method is preferably performed using a heat spray dryer (spray dryer). By granulating the raw materials using a heat spray dryer (spray dryer), not only a particle size distribution can be made sharper, but also the particles can be prepared so as to contain aggregated particles (secondary particles) formed by round aggregation.

Next, in the firing step, the mixed raw material obtained in the pulverizing and mixing step is fired to obtain a compound.

Specifically, the mixed raw material is preferably fired in a firing furnace in an air atmosphere, an oxygen gas atmosphere, an atmosphere with an adjusted oxygen partial pressure, a carbon dioxide gas atmosphere, or another atmosphere by raising a temperature at a temperature rising rate of 50 to 200°C/hr and hold the temperature at a temperature of 400 to 1500°C (which means a temperature when a thermocouple is brought into contact with a fired product in the firing furnace) for 0.5 to 30 hours. Note that, when firing is performed together with the boron compound, firing can be performed in a temperature range lower than the firing temperature described above. Note that the type of the firing furnace is not particularly limited. For example, firing can be performed using a rotary kiln, a stationary furnace, or another firing furnace.

When a firing temperature of the mixed raw material is 1100°C or lower, firing at a relatively low temperature can be implemented as compared with known compound manufacturing conditions, and energy cost can be reduced, which is preferable. In addition, the firing temperature of the mixed raw material is more preferably 1050°C or lower, and still more preferably 1000°C or lower. Typically, the firing temperature of the mixed raw material may be 400°C to 1200°C, 500°C to 1100°C, 700°C to 1000°C, or 850°C to 950°C.

In addition, when a firing time of the mixed raw material is 50 hours or less, firing in a relatively short time can be implemented as compared with known compound manufacturing conditions, and energy cost can be reduced, which is preferable. In addition, the firing time of the mixed raw material is more preferably 40 hours or less, and still more preferably 20 hours or less. Typically, the firing time of the mixed raw material may be one hour to 50 hours, six hours to 30 hours, or ten hours to 25 hours.

In the pulverizing step, the compound obtained through the firing step is pulverized to obtain compound particles.

In the firing step, the compound obtained by firing the mixed raw material, that is, the fired powder is pulverized by the following pulverization method to obtain the compound particles of the present invention. In addition, the undersize (fine particle side) particles obtained by classifying the pulverized fired powder with a sieve or the like may be used as the compound particles of the present invention. The oversize (coarse particle side) particles may be pulverized again, classified, and used.

Specifically, a method for pulverizing the fired powder can be performed in a dry or wet manner. In the case of the dry manner, the fired powder can be pulverized using a commercially available dry pulverizer such as an attritor, a blade type pulverizer, a jet mill, a hammer mill, a pin mill, or a ball mill. On the other hand, in the case of the wet manner, the fired powder is mixed with water or an organic solvent to form a slurry in which the fired powder is dispersed in water or the organic solvent. Next, the fired powder dispersed in the slurry can be pulverized using a commercially available wet pulverizer such as a media mill such as a ball mill or a bead mill, or an emulsifier/disperser using high-speed shearing. Examples of beads to be used include zirconia beads, alumina beads, glass beads, SUS beads, tungsten carbide beads, and silicon carbide beads. In addition, a media-less pulverizer that pulverizes particles by inter-particle collision under high pressure conditions without using a pulverizing medium may be used, which is preferable from a viewpoint of reducing a risk of contamination of metal powder or the like generated from the pulverizing medium. Note that a dispersant may be added together with the slurry as necessary. Here, examples of the solvent for pulverization include water and an organic solvent (an alcohol, acetone, toluene, or the like). In addition, one or more solvents selected from these solvents for pulverization may be used. In addition, examples of the dispersant include one or more selected from the group consisting of phosphoric acids, and a polycarboxylic acid, a polycarboxylate, a salt of a naphthalene sulfonic acid formalin condensate, polyvinyl alcohol, polyethylene glycose, polyvinyl pyrrolidone, and a copolymer thereof.

In the case of wet pulverization, the pulverized fired powder and the solvent are separated from each other using a filter, a centrifugal separator, or the like, and dried at a temperature at which the solvent volatilizes, whereby the pulverized compound particles of the present invention are obtained.

In addition, in the method for pulverizing the fired powder, the compound particles of the present invention having a smaller size may be obtained by performing a two-stage pulverization treatment in which the above-described pulverization is repeated twice. Examples of a first stage of the pulverization method include a pulverization method using the above-described dry pulverizer or wet pulverizer. Examples of a second stage of the pulverization method include a pulverization method using the above-described dry pulverizer or wet pulverizer.

A method for manufacturing the heat shielding member of the present invention is characterized by including: a lower film forming step of forming a near-infrared reflecting lower film containing a near-infrared reflecting material on a base material; and an upper film forming step of forming a near-infrared transmitting upper film containing a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi on the near-infrared reflecting lower film.

As the lower film forming step, a method for disposing a flaky near-infrared reflecting material on a base material, a method for applying a coating material obtained by mixing a near-infrared reflecting material and a dispersion, or a thin film forming method such as vacuum vapor deposition, sputtering, electroplating, or electroless plating can be used.

By these methods, a near-infrared reflecting lower film containing a near-infrared reflecting material is formed on the base material.

As the upper film forming step, a method for applying a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi on the near-infrared reflecting lower film formed in the lower film forming step, or a thin film forming method such as vacuum deposition, sputtering, electroplating, or electroless plating can be used. In addition, the compound particles contained in the near-infrared transmitting upper film are manufactured by the method for manufacturing the compound particles of the present invention.

By these methods, a near-infrared transmitting upper film containing a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi is formed on the near-infrared reflecting lower film.

In this way, the heat shielding member of the present invention is obtained.

Note that, in the present specification, the expression "X to Y" (X and Y are any numbers) includes a meaning of "preferably more than X" or "preferably less than Y" as well as a meaning of "X or more and Y or less" unless otherwise specified. In addition, the expression "X or more" (X is any number) or "Y or less" (Y is any number) includes a meaning of "preferably more than X" or "preferably less than Y".

### Advantageous Effects of Invention

The compound, the compound particles, the near-infrared transmission material, and the near-infrared transmission film of the present invention do not transmit visible light as much as possible, but can transmit a near-infrared ray.

### Brief Description of Drawings

Fig. 1 is a list of physical property values and measurement results of near-infrared transmission materials according to Examples 1 to 8 of the present invention, a titanium oxide mixture according to Comparative Example 1, and a carbon black mixture according to Comparative Example 2.
Fig. 2 is a graph illustrating transmittances of coating films formed from near-infrared transmission materials according to Examples 1 to 8 of the present invention for a wavelength of 400 nm to 2400 nm.
Fig. 3 is a list of physical property values and measurement results of a near-infrared transmission material according to Example B1 of the present invention, a near-infrared transmission material according to Reference Example B1, a titanium oxide mixture according to Comparative Example B1, a carbon black mixture according to Comparative Example B2, and a manganese oxide mixture according to Comparative Example B3.
Fig. 4 is a graph illustrating transmittances of coating films formed from near-infrared transmission materials according to Example B1 of the present invention and Reference Example B1 for a wavelength of 400 nm to 2400 nm.
Fig. 5 is a list of physical property values and measurement results of heat shielding members according to Example C1 of the present invention and Comparative Examples C1 to C4.
Fig. 6 is a graph illustrating reflectances of heat shielding members according to Example C1 of the present invention and Comparative Examples C1 to C4 for a wavelength of 550 nm to 2000 nm.
Fig. 7 is a list of physical property values and measurement results of near-infrared transmission materials according to Examples D1 to D7 of the present invention, a titanium oxide mixture according to Comparative Example D1, and a carbon black mixture according to Comparative Example D2.
Fig. 8 is a graph illustrating transmittances of coating films formed from near-infrared transmission materials according to Examples D1 to D7 of the present invention for a wavelength of 400 nm to 2400 nm.
Fig. 9 is a list of physical property values and measurement results of near-infrared transmission materials according to Examples E1 to E8 of the present invention, a titanium oxide mixture according to Comparative Example E1, and a carbon black mixture according to Comparative Example E2.
Fig. 10 is a graph illustrating transmittances of coating films formed from near-infrared transmission materials according to Examples E1 to E8 of the present invention for a wavelength of 400 nm to 2400 nm.
Fig. 11 is a list of physical property values and measurement results of near-infrared transmission materials according to Experimental Examples 1 to 3 of the present invention, a titanium oxide mixture according to Comparative Example 1, and a carbon black mixture according to Comparative Example 2.
Fig. 12 is a list of physical property values and measurement results of near-infrared transmission materials according to Experimental Examples 4 to 14 of the present invention.
Fig. 13 is a list of physical property values and measurement results of near-infrared transmission materials according to Experimental Examples 15 to 20 of the present invention.
Fig. 14 is a list of physical property values and measurement results of near-infrared transmission materials according to Experimental Examples 21 to 26 of the present invention.
Fig. 15 is a list of physical property values and measurement results of near-infrared transmission materials according to Experimental Examples 1 to 3, 10, and 26 of the present invention.
Fig. 16 is a list of physical property values and measurement results of near-infrared transmission materials according to Experimental Examples 27 to 30 of the present invention.
Fig. 17 is a list of physical property values and measurement results of near-infrared transmission materials according to Experimental Examples 31 to 38 of the present invention.
Fig. 18 is a list of physical property values and measurement results of near-infrared transmission materials according to Experimental Examples 39 to 41 of the present invention.
Fig. 19 is a graph illustrating transmittances of coating films formed from near-infrared transmission materials according to Experimental Examples 1 to 3 of the present invention for a wavelength of 400 nm to 2400 nm.
Fig. 20(a) is a graph illustrating transmittances of coating films formed from near-infrared transmission materials according to Experimental Examples 4 to 9 of the present invention for a wavelength of 400 nm to 2400 nm, and Fig. 20(b) is a graph illustrating transmittances of coating films formed from near-infrared transmission materials according to Experimental Examples 10 to 14 of the present invention for a wavelength of 400 nm to 2400 nm.
Fig. 21 is a graph illustrating transmittances of coating films formed from near-infrared transmission materials according to Experimental Examples 15 to 20 of the present invention for a wavelength of 400 nm to 2400 nm.
Fig. 22 is a graph illustrating transmittances of coating films formed from near-infrared transmission materials according to Experimental Examples 21 to 26 of the present invention for a wavelength of 400 nm to 2400 nm.
Fig. 23 is a graph illustrating transmittances of coating films formed from near-infrared transmission materials according to Experimental Examples 1 to 3, 10, and 26 of the present invention for a wavelength of 400 nm to 2400 nm.
Fig. 24 is a graph illustrating transmittances of coating films formed from near-infrared transmission materials according to Experimental Examples 27 to 30 of the present invention for a wavelength of 400 nm to 2400 nm.
Fig. 25 is a graph illustrating transmittances of coating films formed from near-infrared transmission materials according to Experimental Examples 31 to 38 of the present invention for a wavelength of 400 nm to 2400 nm.
Fig. 26 is a graph illustrating transmittances of coating films formed from near-infrared transmission materials according to Experimental Examples 39 to 41 of the present invention for a wavelength of 400 nm to 2400 nm.
Fig. 27 is a graph illustrating transmittances of coating films formed from near-infrared transmission materials according to Experimental Examples 10, 35, and 36 of the present invention for a wavelength of 400 nm to 2400 nm.

### Best Mode for Carrying Out the Invention

Hereinafter, the compound, the compound particles, the near-infrared transmission material, and the near-infrared transmission film of the embodiment according to the present invention will be further described with reference to the following Examples. Note that the following Examples do not limit the present invention.

### (Example 1)

A compound according to Example 1 is formed of yttrium manganate particles (YMO-Fe) in which when a compositional formula thereof is represented by AxXyOz, the constituent elements A are Y and Fe and the constituent element X is Mn.

In the yttrium manganate particles (YMO-Fe) according to Example 1, the number of moles of the constituent element A (Y, Fe) was 1.1 mol, the number of moles of the constituent element X (Mn) was 0.9 mol, the number of moles of A+X was 2.000 mol, a molar ratio of A/(A+X) was 0.550, a molar ratio of X/(A+X) was 0.450, and a molar ratio of A/X was 1.222.

Specifically, trimanganese tetraoxide (228.81 g/mol), yttrium oxide (225.81 g/mol), and iron oxide (159.69 g/mol) were weighed so as to have a molar ratio of Mn : Y : Fe = 0.9 : 1.0 : 0.1, and mixed to obtain a mixed raw material.

The obtained mixed raw material was put into a crucible made of alumina, held at a firing temperature (holding temperature) of 1100°C for 20 hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

The fired powder thus obtained by firing was subjected to a two-stage pulverization treatment as follows.

First, as a first stage pulverization treatment, 30 g of the fired powder obtained by firing, 100 g of φ0.8 mm zirconia beads, and 45 g of pure water were put into a 100 mL plastic container, the plastic container was set in a locking shaker manufactured by Seiwa Giken Co., Ltd., and a pulverization treatment was performed for four hours using the locking shaker. Thereafter, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain a dried powder that had been subjected to the first-stage pulverization treatment.

Next, as a second stage pulverization treatment, 30 g of the dry powder pulverized in the first stage, 100 g of φ0.2 mm zirconia beads, and 45 g of pure water were put into a 100 mL plastic container, the plastic container was set in a locking shaker manufactured by Seiwa Giken Co., Ltd., and pulverization treatment was performed for four hours using the locking shaker. Thereafter, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain the yttrium manganate particles (YMO-Fe) according to Example 1

Then, 20.0 g of the yttrium manganate particles (YMO-Fe) according to Example 1, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%, and the resulting mixture was dispersed for two hours using a paint shaker to obtain a near-infrared transmission material according to Example 1.

The near-infrared transmission material according to Example 1 thus obtained was applied onto a PET film ("Lumirror (registered trademark)": #100-T60 manufactured by Toray Industries, Inc.) using a bar coater (No. 10) to form a coating film, and thus a near-infrared transmission film (film thickness: 5 µm) according to Example 1 was obtained.

### (Example 2)

A compound according to Example 2 is formed of yttrium manganate particles (YMO-Ni) in which when a compositional formula thereof is represented by AxXyOz, the constituent elements A are Y and Ni and the constituent element X is Mn.

In the yttrium manganate particles (YMO-Ni) according to Example 2, the number of moles of the constituent element A (Y, Ni) was 1.1 mol, the number of moles of the constituent element X (Mn) was 0.9 mol, the number of moles of A+X was 2.000 mol, a molar ratio of A/(A+X) was 0.550, a molar ratio of X/(A+X) was 0.450, and a molar ratio of A/X was 1.222.

The yttrium manganate particles (YMO-Ni) according to Example 2 were obtained in a similar manner to Example 1 except that trimanganese tetraoxide (228.81 g/mol), yttrium oxide (225.81 g/mol), and basic nickel(II) carbonate (376.18 g/mol) were weighed so as to have a molar ratio of Mn : Y : Ni = 0.9 : 1.0 : 0.1, and mixed to obtain a mixed raw material.

In addition, a near-infrared transmission material according to Example 2 and a near-infrared transmission film (film thickness: 5 µm) according to Example 2 were obtained in a similar manner to Example 1.

### (Example 3)

A compound according to Example 3 is formed of yttrium manganate particles (YMO-Cr) in which when a compositional formula thereof is represented by AxXyOz, the constituent elements A are Y and Cr and the constituent element X is Mn.

In the yttrium manganate particles (YMO-Cr) according to Example 3, the number of moles of the constituent element A (Y, Cr) was 1.1 mol, the number of moles of the constituent element X (Mn) was 0.9 mol, the number of moles of A+X was 2.000 mol, a molar ratio of A/(A+X) was 0.550, a molar ratio of X/(A+X) was 0.450, and a molar ratio of A/X was 1.222.

The yttrium manganate particles (YMO-Cr) according to Example 3 were obtained in a similar manner to Example 1 except that trimanganese tetraoxide (228.81 g/mol), yttrium oxide (225.81 g/mol), and chromium(III) oxide (151.99 g/mol) were weighed so as to have a molar ratio of Mn : Y : Cr = 0.9 : 1.0 : 0.1, and mixed to obtain a mixed raw material.

In addition, a near-infrared transmission material according to Example 3 and a near-infrared transmission film (film thickness: 5 µm) according to Example 3 were obtained in a similar manner to Example 1.

### (Example 4)

A compound according to Example 4 is formed of yttrium manganate particles (YMO-Co) in which when a compositional formula thereof is represented by AxXyOz, the constituent elements A are Y and Co and the constituent element X is Mn.

In the yttrium manganate particles (YMO-Co) according to Example 4, the number of moles of the constituent element A (Y, Cr) was 1.1 mol, the number of moles of the constituent element X (Mn) was 0.9 mol, the number of moles of A+X was 2.000 mol, a molar ratio of A/(A+X) was 0.550, a molar ratio of X/(A+X) was 0.450, and a molar ratio of A/X was 1.222.

The yttrium manganate particles (YMO-Co) according to Example 4 were obtained in a similar manner to Example 1 except that trimanganese tetraoxide (228.81 g/mol), yttrium oxide (225.81 g/mol), and cobalt(II) hydroxide (92.96 g/mol) were weighed so as to have a molar ratio of Mn : Y : Co = 0.9 : 1.0 : 0.1, and mixed to obtain a mixed raw material.

In addition, the yttrium manganate particles (YMO-Co) according to Example 4, a near-infrared transmission material according to Example 4 and a near-infrared transmission film (film thickness: 5 µm) according to Example 4 were obtained in a similar manner to Example 1.

### (Example 5)

A compound according to Example 5 is formed of yttrium manganate particles (YMO-Fe) in which when a compositional formula thereof is represented by AxXyOz, the constituent elements A are Y and Fe and the constituent element X is Mn.

In the yttrium manganate particles (YMO-Fe) according to Example 5, the number of moles of the constituent element A (Y, Fe) was 1.010 mol, the number of moles of the constituent element X (Mn) was 0.990 mol, the number of moles of A+X was 2.000 mol, a molar ratio of A/(A+X) was 0.505, a molar ratio of X/(A+X) was 0.495, and a molar ratio of A/X was 1.020.

The yttrium manganate particles (YMO-Fe) according to Example 5 were obtained in a similar manner to Example 1 except that trimanganese tetraoxide (228.81 g/mol), yttrium oxide (225.81 g/mol), and iron oxide (159.69 g/mol) were weighed so as to have a molar ratio of Mn : Y : Fe = 0.99 : 1.0 : 0.01, and mixed to obtain a mixed raw material.

In addition, the yttrium manganate particles (YMO-Fe) according to Example 5, a near-infrared transmission material according to Example 5 and a near-infrared transmission film (film thickness: 5 µm) according to Example 5 were obtained in a similar manner to Example 1.

### (Example 6)

A compound according to Example 6 is formed of yttrium manganate particles (YMO-Fe) in which when a compositional formula thereof is represented by AxXyOz, the constituent elements A are Y and Fe and the constituent element X is Mn.

In the yttrium manganate particles (YMO-Fe) according to Example 6, the number of moles of the constituent element A (Y, Fe) was 1.050 mol, the number of moles of the constituent element X (Mn) was 0.950 mol, the number of moles of A+X was 2.000 mol, a molar ratio of A/(A+X) was 0.525, a molar ratio of X/(A+X) was 0.475, and a molar ratio of A/X was 1.105.

The yttrium manganate particles (YMO-Fe) according to Example 6 were obtained in a similar manner to Example 1 except that trimanganese tetraoxide (228.81 g/mol), yttrium oxide (225.81 g/mol), and iron oxide (159.69 g/mol) were weighed so as to have a molar ratio of Mn : Y : Fe = 0.95 : 1.0 : 0.05, and mixed to obtain a mixed raw material.

In addition, the yttrium manganate particles (YMO-Fe) according to Example 6, a near-infrared transmission material according to Example 6 and a near-infrared transmission film (film thickness: 5 µm) according to Example 6 were obtained in a similar manner to Example 1.

### (Example 7)

A compound according to Example 7 is formed of yttrium manganate particles (YMO-Fe) in which when a compositional formula thereof is represented by AxXyOz, the constituent elements A are Y and Fe and the constituent element X is Mn.

In the yttrium manganate particles (YMO-Fe) according to Example 7, the number of moles of the constituent element A (Y, Fe) was 1.200 mol, the number of moles of the constituent element X (Mn) was 0.800 mol, the number of moles of A+X was 2.000 mol, a molar ratio of A/(A+X) was 0.600, a molar ratio of X/(A+X) was 0.400, and a molar ratio of A/X was 1.500.

The yttrium manganate particles (YMO-Fe) according to Example 7 were obtained in a similar manner to Example 1 except that trimanganese tetraoxide (228.81 g/mol), yttrium oxide (225.81 g/mol), and iron oxide (159.69 g/mol) were weighed so as to have a molar ratio of Mn : Y : Fe = 0.8 : 1.0 : 0.2, and mixed to obtain a mixed raw material.

In addition, the yttrium manganate particles (YMO-Fe) according to Example 7, a near-infrared transmission material according to Example 7 and a near-infrared transmission film (film thickness: 5 µm) according to Example 7 were obtained in a similar manner to Example 1.

### (Example 8)

A compound according to Example 8 is formed of yttrium manganate particles (YMO) in which when a compositional formula thereof is represented by AxXyOz, the constituent element A is Y and the constituent element X is Mn, and YMn₂O₅.

In the yttrium manganate particles (YMO) and YMn₂O₅ according to Example 8, the number of moles of the constituent element A (Y) was 1.000 mol, the number of moles of the constituent element X (Mn) was 1.000 mol, the number of moles of A+X was 2.000 mol, a molar ratio of A/(A+X) was 0.500, a molar ratio of X/(A+X) was 0.500, and a molar ratio of A/X was 1.000.

Specifically, electrolytic manganese dioxide (86.94 g/mol) and yttrium carbonate trihydrate (357.83 g/mol) as raw material compounds were weighed so as to have a molar ratio of Mn : Y = 1.0 : 1.0, and pulverized and mixed using a ball mill pulverizer to obtain a mixed raw material. Into a 5 L plastic container, 100 g of the raw material compounds and 6 kg of φ15 mm zirconia beads were put, and pulverized and mixed for five hours to obtain a mixed raw material.

The obtained mixed raw material was put into a crucible made of alumina, held at a firing temperature (holding temperature) of 900°C for 20 hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

The fired powder thus obtained by firing was subjected to a two-stage pulverization treatment in a similar manner to Example 1 to obtain yttrium manganate particles (YMO) and YMn₂O₅ according to Example 8. As described above, in Example 8, by changing the raw material compound to yttrium carbonate trihydrate and changing the firing temperature to 900°C, a product (YMnO₃, YMn₂O₅) having a crystal structure different from that of Example 1 could be synthesized, and a transmittance and a color difference could be adjusted.

In addition, a near-infrared transmission material according to Example 8 and a near-infrared transmission film (film thickness: 5 µm) according to Example 8 were obtained in a similar manner to Example 1.

### (Comparative Example 1)

In Comparative Example 1, a transparent resin (acrylic polyol; 100 parts by mass) and a curing agent (hexamethylene diisocyanate; 20 parts by mass) were blended with an aggregate of titanium oxide (7 parts by mass) having a primary particle size of 35 nm and a secondary particle size of 140 nm, and melted and mixed to obtain a titanium oxide mixture according to Comparative Example 1.

### (Comparative Example 2)

In Comparative Example 2, carbon black, which was a single black pigment having a primary particle size of 15 nm and a BET specific surface area of 120 m²/g, was used. Specifically, a transparent resin (methyl methacrylate/methacrylic acid copolymer; 100 parts by mass) and PGMEA (120 parts by mass) were blended and kneaded with an aggregate of the carbon black (20 parts by mass) using three rolls to obtain a carbon black mixture according to Comparative Example 2.

Hereinafter, the compound powder, the near-infrared transmission material, and the near-infrared transmission film of the embodiment according to the present invention will be further described with reference to the following Examples. Note that the following Examples do not limit the present invention.

### (Example B1)

When a compositional formula of a compound powder according to Example B1 is represented by AxXyOz as compound particles, the compound powder contains yttrium manganate particles (YMO) in which the constituent element A is Y and the constituent element X is Mn, and sodium polycarboxylate as a dispersant.

In the yttrium manganate particles (YMO) according to Example B1, the number of moles of the constituent element A (Y) was 1.0 mol, the number of moles of the constituent element X (Mn) was 1.0 mol, the number of moles of A+X was 2.000 mol, a molar ratio of A/(A+X) was 0.500, a molar ratio of X/(A+X) was 0.500, and a molar ratio of A/X was 1.000.

Specifically, trimanganese tetraoxide (228.81 g/mol) and yttrium oxide (225.81 g/mol) were weighed so as to have a molar ratio of Mn : Y = 1.0 : 1.0, and mixed to obtain a mixed raw material.

The obtained mixed raw material was put into a crucible made of alumina, held at a firing temperature (holding temperature) of 1200°C for six hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

To the fired powder thus obtained by firing, sodium polycarboxylate was added as a dispersant, and the mixture was subjected to a two-stage pulverization treatment as follows.

First, as a first stage pulverization treatment, 20 g of the fired powder obtained by firing, 200 g of φ1.0 mm zirconia beads, 100 g of pure water, and 0.100 g of a dispersant (sodium polycarboxylate) were put into a 100 mL plastic container, the plastic container was set in a locking shaker manufactured by Seiwa Giken Co., Ltd., and a pulverization treatment was performed for four hours using the locking shaker. Thereafter, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain a dried powder that had been subjected to the first-stage pulverization treatment.

Next, as a second stage pulverization treatment, 20 g of the dry powder pulverized in the first stage, 100 g of φ0.2 mm zirconia beads, and 45 g of pure water were put into a 100 mL plastic container, the plastic container was set in a locking shaker manufactured by Seiwa Giken Co., Ltd., and a pulverization treatment was performed for four hours using the locking shaker. Thereafter, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain the compound powder (YMO powder) according to Example B1

Then, 20.0 g of the compound powder (YMO) according to Example B1, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%, and the resulting mixture was dispersed for two hours using a paint shaker to obtain a near-infrared transmission material according to Example B1.

The near-infrared transmission material according to Example B1 thus obtained was applied onto a PET film ("Lumirror (registered trademark)": #100-T60 manufactured by Toray Industries, Inc.) using a bar coater (No. 10) to form a coating film, and thus a near-infrared transmission film (film thickness: 5 µm) according to Example B1 was obtained.

### (Reference Example B1)

When a compositional formula of a compound powder according to Reference Example B1 is represented by AxXyOz as compound particles, the compound powder contains yttrium manganate particles (YMO) in which the constituent element A is Y and the constituent element X is Mn, but does not contain a dispersant.

In the yttrium manganate particles (YMO) according to Reference Example B1, the number of moles of the constituent element A (Y, Fe) was 1.0 mol, the number of moles of the constituent element X (Mn) was 1.0 mol, the number of moles of A+X was 2.000 mol, a molar ratio of A/(A+X) was 0.500, a molar ratio of X/(A+X) was 0.500, and a molar ratio of A/X was 1.000.

The compound powder according to Reference Example B1 is a dry powder obtained by performing the first stage pulverization treatment without adding sodium polycarboxylate as a dispersant in the first stage pulverization treatment of Example B1.

In addition, a near-infrared transmission material according to Reference Example B1 and a near-infrared transmission film (film thickness: 5 µm) according to Reference Example B1 were obtained in a similar manner to Example B1.

### (Comparative Example B1)

In Comparative Example B1, a transparent resin (acrylic polyol; 100 parts by mass) and a curing agent (hexamethylene diisocyanate; 20 parts by mass) were blended with an aggregate of titanium oxide (7 parts by mass) having a primary particle size of 35nm and a secondary particle size of 140 nm, and melted and mixed to obtain a titanium oxide mixture according to Comparative Example B1.

### (Comparative Example B2)

In Comparative Example B2, carbon black, which was a single black pigment having a primary particle size of 15 nm and a BET specific surface area of 120 m²/g, was used. Specifically, a transparent resin (methyl methacrylate/methacrylic acid copolymer; 100 parts by mass) and PGMEA (120 parts by mass) were blended and kneaded with an aggregate of the carbon black (20 parts by mass) using three rolls to obtain a carbon black mixture according to Comparative Example B2.

### (Comparative Example B3)

Comparative Example B3 is a manganese oxide mixture composed only of trimanganese tetraoxide.

In the manganic acid particles according to Comparative Example B3, the number of moles of Mn was 1 mol, the number of moles of A+Mn was 1 mol, a molar ratio of A/(A+Mn) was 0.0, a molar ratio of Mn/(A+Mn) was 1.0, and a molar ratio of A/Mn was 0.0.

The manganic acid particles according to Comparative Example B3 were obtained in a similar manner to Example B1 except that (i) the manganic acid particles were composed only of trimanganese tetraoxide (228.81 g/mol) and (ii) a two-stage pulverization treatment described later was performed.

First, as a first stage pulverization treatment in Comparative Example B3, 30 g of the fired powder obtained by firing, 45 g of pure water, and 100 g of φ0.8 mm zirconia beads were put into a 100 mL plastic container, and a pulverization treatment was performed for four hours using a locking shaker manufactured by Seiwa Giken Co., Ltd. Next, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain a dried powder that had been subjected to the first-stage pulverization treatment.

As a second stage pulverization treatment in Comparative Example B3, 30 g of the dry powder obtained by the first stage pulverization treatment, 45 g of pure water, and 100 g of φ0.2 mm zirconia beads were put into a 100 mL plastic container, and a pulverization treatment was performed for four hours using a locking shaker manufactured by Seiwa Giken Co., Ltd. Next, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain oxidized manganic acid particles according to Comparative Example B3.

Next, a manganese oxide mixture according to Comparative Example B3 was obtained in a similar manner to Example B1 except that 7.6 g of the manganic acid particles according to Comparative Example B3, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

For formation of a coating film of the manganese oxide mixture according to Comparative Example B3, a manganese oxide mixture film (film thickness: 5 µm) according to Comparative Example B3 was obtained in a similar manner to Example B1.

Hereinafter, the heat shielding member according to the embodiment of the present invention will be further described with reference to the following Examples. Note that the following Examples do not limit the present invention.

### (Example C1)

First, 7.6 g of titanium oxide (TiO₂) as a near-infrared reflecting material, 11.1 g of an acrylic resin, and 18.9 g of ethyl acetate were mixed in a container, and the resulting mixture was subjected to a dispersion treatment for ten minutes using a paint shaker to obtain a mixed coating material according to Example C1.

The mixed coating material according to Example C1 was applied onto a base material (SUS304) with a brush and dried at 110°C for one hour to form a near-infrared reflecting lower film (film thickness: 53.5 µm) according to Example C1.

Next, the yttrium manganate particles (YMO) according to Example 8 which are compound particles constituting a near-infrared transmission material, 7.6 g of YMn₂O₅, 11.1 g of an acrylic resin, and 18.9 g of ethyl acetate were mixed in a container, and the obtained mixture was subjected to a dispersion treatment for two hours using a paint shaker to obtain a YMO coating material according to Example C1.

The YMO coating material according to Example C1 was applied onto the near-infrared reflecting lower film according to Example C1 using a spin coater (1000 rpm, 20 s) and dried to form a near-infrared transmitting upper film (film thickness: 14 µm) according to Example C1.

In this way, a heat shielding member according to Example C1 was obtained.

### (Comparative Example C1)

In a heat shielding member according to Comparative Example C1, a near-infrared reflecting lower film and a near-infrared transmitting upper film were not formed on a base material (SUS304).

### (Comparative Example C2)

First, 2.12 g of carbon black, 11.1 g of an acrylic resin, and 18.9 g of ethyl acetate were mixed in a container, and the resulting mixture was subjected to a dispersion treatment for two hours using a paint shaker to obtain a mixed coating material according to Comparative Example C2.

The mixed coating material according to Comparative Example C2 was applied onto a base material (SUS304) using a spin coater (1000 rpm, 20 s) and dried at 110°C for one hour to form a lower film (film thickness: 17 µm) according to Comparative Example C2.

In this way, a heat shielding member according to Comparative Example C2 was obtained. Note that a near-infrared transmitting upper film was not formed on the lower film according to Comparative Example C2.

### (Comparative Example C3)

First, 7.6 g of titanium oxide (TiO₂) as a near-infrared reflecting material, 11.1 g of an acrylic resin, and 18.9 g of ethyl acetate were mixed in a container, and the resulting mixture was subjected to a dispersion treatment for ten minutes using a paint shaker to obtain a mixed coating material according to Comparative Example C3.

The mixed coating material according to Comparative Example C3 was applied onto a base material (SUS304) with a brush and dried at 110°C for one hour to form a near-infrared reflecting lower film (film thickness: 58 µm) according to Comparative Example C3.

In this way, a heat shielding member according to Comparative Example C3 was obtained. Note that a near-infrared transmitting upper film was not formed on the near-infrared reflecting lower film according to Comparative Example C3.

### (Comparative Example C4)

First, 2.12 g of carbon black, 11.1 g of an acrylic resin, and 18.9 g of ethyl acetate were mixed in a container, and the resulting mixture was subjected to a dispersion treatment for two hours using a paint shaker to obtain a mixed coating material according to Comparative Example C4.

The mixed coating material according to Comparative Example C4 was applied onto a base material (SUS304) using a spin coater (1000 rpm, 20 s) and dried at 110°C for one hour to form a lower film (film thickness: 17 µm) according to Comparative Example C4.

Next, yttrium manganate particles (YMO) according to Example 8 which are compound particles constituting a near-infrared transmission material, 7.6 g of YMn₂O₅, 11.1 g of an acrylic resin, and 18.9 g of ethyl acetate were mixed in a container, and the obtained mixture was subjected to a dispersion treatment for two hours using a paint shaker to obtain a YMO coating material according to Comparative Example C4.

The YMO coating material according to Comparative Example C4 was applied onto the lower film according to Comparative Example C4 using a spin coater (1000 rpm, 20 s) and dried to form a near-infrared transmitting upper film (film thickness: 14 µm) according to Comparative Example C4.

In this way, a heat shielding member according to Comparative Example C4 was obtained.

Hereinafter, the manganese oxide, the manganese oxide particles, the near-infrared transmission material, and the near-infrared transmission film of the embodiment according to the present invention will be further described with reference to the following Examples. Note that the following Examples do not limit the present invention.

### (Example D1)

A manganese oxide according to Example D1 is formed of yttrium manganate particles (YMO) in which when a compositional formula thereof is represented by AxXyOz, the constituent element A is Y and the constituent element X is Mn.

In the yttrium manganate particles (YMO) according to Example D1, the number of moles of the constituent element A (Y) was 1.000 mol, the number of moles of the constituent element X (Mn) was 1.000 mol, the number of moles of A+X was 2.000 mol, a molar ratio of A/(A+X) was 0.500, a molar ratio of X/(A+X) was 0.500, and a molar ratio of A/X was 1.000.

Specifically, trimanganese tetraoxide (228.81 g/mol) and yttrium oxide (225.81 g/mol) were weighed so as to have a molar ratio of Mn : Y = 1.0 : 1.0, and mixed to obtain a mixed raw material.

The obtained mixed raw material was put into a crucible made of alumina, held at a firing temperature (holding temperature) of 1200°C for 20 hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

The fired powder thus obtained by firing was subjected to a two-stage pulverization treatment as follows.

First, as a first stage pulverization treatment, 30 g of the fired powder obtained by firing, 100 g of φ0.8 mm zirconia beads, and 45 g of pure water were put into a 100 mL plastic container, the plastic container was set in a locking shaker manufactured by Seiwa Giken Co., Ltd., and a pulverization treatment was performed for four hours using the locking shaker. Thereafter, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain a dried powder that had been subjected to the first-stage pulverization treatment.

Next, as a second stage pulverization treatment, 30 g of the dry powder pulverized in the first stage, 100 g of φ0.2 mm zirconia beads, and 45 g of pure water were put into a 100 mL plastic container, the plastic container was set in a locking shaker manufactured by Seiwa Giken Co., Ltd., and pulverization treatment was performed for four hours using the locking shaker. Thereafter, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain the yttrium manganate particles (YMO) according to Example D1.

The yttrium manganate particles (YMO) according to Example D1 thus obtained were sufficiently mixed and pulverized with an agate mortar, and then classified with a sieve having a mesh size of 75 µm, 0.5 g of the powder in a central part in a good mixed state in an undersieve container was fractionated onto a glass sample plate, and filling was performed using a glass plate so as to have a smooth surface to obtain a sample. The sample was subjected to X-ray powder diffraction measurement using a CuKα ray according to the above-described X-ray powder diffraction measurement conditions to obtain an X-ray diffraction pattern. From the obtained X-ray diffraction pattern, a peak derived from a YMnO₃ (111) plane and appearing at 2θ = 28.0° to 33.0° and a peak derived from a YMnO₃ (112) plane and appearing at 2θ = 31.0° to 35.0° were observed. The crystal system of the yttrium manganate particles (YMO) according to Example D1 was confirmed to contain a hexagonal crystal.

Then, 20.0 g of the yttrium manganate particles (YMO) according to Example D1, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%, and the resulting mixture was dispersed for two hours using a paint shaker to obtain a near-infrared transmission material according to Example D1.

The near-infrared transmission material according to Example D1 thus obtained was applied onto a PET film ("Lumirror (registered trademark)": #100-T60 manufactured by Toray Industries, Inc.) using a bar coater (No. 10) to form a coating film, and thus a near-infrared transmission film (film thickness: 5 µm) according to Example D1 was obtained.

### (Example D2)

A manganese oxide according to Example D2 is formed of ytterbium manganate particles (YbMO) in which when a compositional formula thereof is represented by AxXyOz, the constituent element A is Yb and the constituent element X is Mn.

In the ytterbium manganate particles (YbMO) according to Example D2, the number of moles of the constituent element A (Yb) was 1.000 mol, the number of moles of the constituent element X (Mn) was 1.000 mol, the number of moles of A+X was 2.000 mol, a molar ratio of A/(A+X) was 0.500, a molar ratio of X/(A+X) was 0.500, and a molar ratio of A/X was 1.000.

The ytterbium manganate particles (YbMO) according to Example D2 were obtained in a similar manner to Example D1 except that trimanganese tetraoxide (228.81 g/mol) and ytterbium oxide (394.08 g/mol) were weighed so as to have a molar ratio of Mn : Yb = 1.0 : 1.0, and mixed to obtain a mixed raw material.

The ytterbium manganate particles (YbMO) according to Example D2 thus obtained were sufficiently mixed and pulverized with an agate mortar, and then classified with a sieve having a mesh size of 75 µm, 0.5 g of the powder in a central part in a good mixed state in an undersieve container was fractionated onto a glass sample plate, and filling was performed using a glass plate so as to have a smooth surface to obtain a sample. The sample was subjected to X-ray powder diffraction measurement using a CuKα ray according to the above-described X-ray powder diffraction measurement conditions to obtain an X-ray diffraction pattern. From the obtained X-ray diffraction pattern, a peak derived from a YbMnO₃ (111) plane and appearing at 2θ = 28.0° to 33.0° and a peak derived from a YbMnO₃ (112) plane and appearing at 2θ = 31.0° to 35.0° were observed. Therefore, the crystal system of the ytterbium manganate particles (YbMO) according to Example D2 was confirmed to contain a hexagonal crystal.

In addition, a near-infrared transmission material according to Example D2 and a near-infrared transmission film (film thickness: 5 µm) according to Example D2 were obtained in a similar manner to Example D1.

### (Example D3)

A compound according to Example D3 is formed of yttrium manganate particles (YMO-Fe) in which when a compositional formula thereof is represented by AxXyOz, the constituent elements A are Y and Fe and the constituent element X is Mn.

In the yttrium manganate particles (YMO-Fe) according to Example D3, the number of moles of the constituent element A (Y, Fe) was 1.010 mol, the number of moles of the constituent element X (Mn) was 0.990 mol, the number of moles of A+X was 2.000 mol, a molar ratio of A/(A+X) was 0.505, a molar ratio of X/(A+X) was 0.495, and a molar ratio of A/X was 1.020.

The yttrium manganate particles (YMO-Fe) according to Example D3 were obtained in a similar manner to Example D1 except that trimanganese tetraoxide (228.81 g/mol), yttrium oxide (225.81 g/mol), and iron oxide (159.69 g/mol) were weighed so as to have a molar ratio of Mn : Y : Fe = 0.99 : 1.0 : 0.01, and mixed to obtain a mixed raw material.

The yttrium manganate particles (YMO-Fe) according to Example D3 thus obtained were subjected to X-ray powder diffraction measurement in a similar manner to Example D1 to obtain an X-ray diffraction pattern. The crystal system of the yttrium manganate particles (YMO-Fe) according to Example D3 was confirmed to contain a hexagonal crystal.

In addition, a near-infrared transmission material according to Example D3 and a near-infrared transmission film (film thickness: 5 µm) according to Example D3 were obtained in a similar manner to Example D1.

### (Example D4)

A compound according to Example D4 is formed of yttrium manganate particles (YMO-Fe) in which when a compositional formula thereof is represented by AxXyOz, the constituent elements A are Y and Fe and the constituent element X is Mn.

In the yttrium manganate particles (YMO-Fe) according to Example D4, the number of moles of the constituent element A (Y, Fe) was 1.050 mol, the number of moles of the constituent element X (Mn) was 0.950 mol, the number of moles of A+X was 2.000 mol, a molar ratio of A/(A+X) was 0.525, a molar ratio of X/(A+X) was 0.475, and a molar ratio of A/X was 1.105.

The yttrium manganate particles (YMO-Fe) according to Example D4 were obtained in a similar manner to Example D1 except that trimanganese tetraoxide (228.81 g/mol), yttrium oxide (225.81 g/mol), and iron oxide (159.69 g/mol) were weighed so as to have a molar ratio of Mn : Y : Fe = 0.95 : 1.0 : 0.05, and mixed to obtain a mixed raw material.

The yttrium manganate particles (YMO-Fe) according to Example D4 thus obtained were subjected to X-ray powder diffraction measurement in a similar manner to Example D1 to obtain an X-ray diffraction pattern. The crystal system of the yttrium manganate particles (YMO-Fe) according to Example D4 was confirmed to contain a hexagonal crystal.

In addition, a near-infrared transmission material according to Example D4 and a near-infrared transmission film (film thickness: 5 µm) according to Example D4 were obtained in a similar manner to Example D1.

### (Example D5)

A compound according to Example D5 is formed of yttrium manganate particles (YMO-Fe) in which when a compositional formula thereof is represented by AxXyOz, the constituent elements A are Y and Fe and the constituent element X is Mn.

In the yttrium manganate particles (YMO-Fe) according to Example D5, the number of moles of the constituent element A (Y, Fe) was 1.200 mol, the number of moles of the constituent element X (Mn) was 0.800 mol, the number of moles of A+X was 2.000 mol, a molar ratio of A/(A+X) was 0.600, a molar ratio of X/(A+X) was 0.400, and a molar ratio of A/X was 1.500.

The yttrium manganate particles (YMO-Fe) according to Example D5 were obtained in a similar manner to Example D1 except that trimanganese tetraoxide (228.81 g/mol), yttrium oxide (225.81 g/mol), and iron oxide (159.69 g/mol) were weighed so as to have a molar ratio of Mn : Y : Fe = 0.8 : 1.0 : 0.2, and mixed to obtain a mixed raw material.

The yttrium manganate particles (YMO-Fe) according to Example D5 thus obtained were subjected to X-ray powder diffraction measurement in a similar manner to Example D1 to obtain an X-ray diffraction pattern. The crystal system of the yttrium manganate particles (YMO-Fe) according to Example D5 was confirmed to contain a hexagonal crystal.

In addition, a near-infrared transmission material according to Example D5 and a near-infrared transmission film (film thickness: 5 µm) according to Example D5 were obtained in a similar manner to Example D1.

### (Example D6)

A compound according to Example D6 is formed of yttrium manganate particles (YMO-La) in which when a compositional formula thereof is represented by AxXyOz, the constituent elements A are Y and La and the constituent element X is Mn.

In the yttrium manganate particles (YMO-La) according to Example D6, the number of moles of the constituent element A (Y, La) was 1.000 mol, the number of moles of the constituent element X (Mn) was 1.000 mol, the number of moles of A+X was 2.000 mol, a molar ratio of A/(A+X) was 0.500, a molar ratio of X/(A+X) was 0.500, and a molar ratio of A/X was 1.500.

The yttrium manganate particles (YMO-La) according to Example D6 were obtained in a similar manner to Example D1 except that trimanganese tetraoxide (228.81 g/mol), yttrium oxide (225.81 g/mol), and lanthanum carbonate (457.84 g/mol) were weighed so as to have a molar ratio of Mn : Y : La = 1.0 : 0.99 : 0.01, and mixed to obtain a mixed raw material.

The yttrium manganate particles (YMO-Fe) according to Example D6 thus obtained were subjected to X-ray powder diffraction measurement in a similar manner to Example D1 to obtain an X-ray diffraction pattern. The crystal system of the yttrium manganate particles (YMO-La) according to Example D6 was confirmed to contain a hexagonal crystal.

In addition, a near-infrared transmission material according to Example D6 and a near-infrared transmission film (film thickness: 5 µm) according to Example D6 were obtained in a similar manner to Example D1.

### (Example D7)

A compound according to Example D7 is formed of yttrium manganate particles (YMO-La) in which when a compositional formula thereof is represented by AxXyOz, the constituent elements A are Y and La and the constituent element X is Mn.

In the yttrium manganate particles (YMO-La) according to Example D7, the number of moles of the constituent element A (Y, La) was 1.000 mol, the number of moles of the constituent element X (Mn) was 1.000 mol, the number of moles of A+X was 2.000 mol, a molar ratio of A/(A+X) was 0.500, a molar ratio of X/(A+X) was 0.500, and a molar ratio of A/X was 1.500.

The yttrium manganate particles (YMO-La) according to Example D7 were obtained in a similar manner to Example D1 except that trimanganese tetraoxide (228.81 g/mol), yttrium oxide (225.81 g/mol), and lanthanum carbonate (457.84 g/mol) were weighed so as to have a molar ratio of Mn : Y : La = 1.0 : 0.95 : 0.05, and mixed to obtain a mixed raw material.

The yttrium manganate particles (YMO-Fe) according to Example D7 thus obtained were subjected to X-ray powder diffraction measurement in a similar manner to Example D1 to obtain an X-ray diffraction pattern. The crystal system of the yttrium manganate particles (YMO-La) according to Example D7 was confirmed to contain a hexagonal crystal.

In addition, a near-infrared transmission material according to Example D7 and a near-infrared transmission film (film thickness: 5 µm) according to Example D7 were obtained in a similar manner to Example D1.

### (Comparative Example D1)

In Comparative Example D1, a transparent resin (acrylic polyol; 100 parts by mass) and a curing agent (hexamethylene diisocyanate; 20 parts by mass) were blended with an aggregate of titanium oxide (7 parts by mass) having a primary particle size of 35nm and a secondary particle size of 140 nm, and melted and mixed to obtain a titanium oxide mixture according to Comparative Example D1.

### (Comparative Example D2)

In Comparative Example D2, carbon black, which was a single black pigment having a primary particle size of 15 nm and a BET specific surface area of 120 m²/g, was used. Specifically, a transparent resin (methyl methacrylate/methacrylic acid copolymer; 100 parts by mass) and PGMEA (120 parts by mass) were blended and kneaded with an aggregate of the carbon black (20 parts by mass) using three rolls to obtain a carbon black mixture according to Comparative Example D2.

Hereinafter, a method for manufacturing the compound particles of the embodiment according to the present invention will be further described with reference to the following Examples. Note that the following Examples do not limit the present invention.

### (Example E1)

A compound according to Example E1 is formed of yttrium manganate particles (YMO) in which when a compositional formula thereof is represented by AxXyOz, the constituent element A is Y and the constituent element X is Mn.

In the yttrium manganate particles (YMO) according to Example E1, the number of moles of the constituent element A (Y) was 1.000 mol, the number of moles of the constituent element X (Mn) was 1.000 mol, the number of moles of A+X was 2.000 mol, a molar ratio of A/(A+X) was 0.500, a molar ratio of X/(A+X) was 0.500, and a molar ratio of A/X was 1.000.

Specifically, electrolytic manganese dioxide (86.94 g/mol) and yttrium oxide (225.81 g/mol) as raw material compounds were weighed so as to have a molar ratio of Mn : Y = 1.0 : 1.0, and pulverized and mixed using a ball mill pulverizer to obtain a mixed raw material. Into a 5 L plastic container, 100 g of the raw material compounds and 6 kg of φ15 mm zirconia beads were put, and pulverized and mixed for five hours to obtain a mixed raw material. The obtained mixed raw material according to Example E1 had an average particle size D50 of 1.2 µm.

The obtained mixed raw material was put into a crucible made of alumina, held at a firing temperature (holding temperature) of 1000°C for 20 hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

The fired powder thus obtained by firing was subjected to a two-stage pulverization treatment as follows.

First, as a first stage pulverization treatment, 30 g of the fired powder obtained by firing, 100 g of φ0.8 mm zirconia beads, and 45 g of pure water were put into a 100 mL plastic container, the plastic container was set in a locking shaker manufactured by Seiwa Giken Co., Ltd., and a pulverization treatment was performed for four hours using the locking shaker. Thereafter, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain a dried powder that had been subjected to the first-stage pulverization treatment.

Next, as a second stage pulverization treatment, 30 g of the dry powder pulverized in the first stage, 100 g of φ0.2 mm zirconia beads, and 45 g of pure water were put into a 100 mL plastic container, the plastic container was set in a locking shaker manufactured by Seiwa Giken Co., Ltd., and pulverization treatment was performed for four hours using the locking shaker. Thereafter, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain the yttrium manganate particles (YMO) according to Example E1.

Then, 20.0 g of the yttrium manganate particles (YMO) according to Example E1, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%, and the resulting mixture was dispersed for two hours using a paint shaker to obtain a near-infrared transmission material according to Example E1.

The near-infrared transmission material according to Example E1 thus obtained was applied onto a PET film ("Lumirror (registered trademark)": #100-T60 manufactured by Toray Industries, Inc.) using a bar coater (No. 10) to form a coating film, and thus a near-infrared transmission film (film thickness: 5 µm) according to Example E1 was obtained.

### (Example E2)

A compound according to Example E2 is formed of yttrium manganate particles (YMO) in which when a compositional formula thereof is represented by AxXyOz, the constituent element A is Y and the constituent element X is Mn.

In the yttrium manganate particles (YMO) according to Example E2, the number of moles of the constituent element A (Y) was 1.000 mol, the number of moles of the constituent element X (Mn) was 1.000 mol, the number of moles of A+X was 2.000 mol, a molar ratio of A/(A+X) was 0.500, a molar ratio of X/(A+X) was 0.500, and a molar ratio of A/X was 1.000.

As for the yttrium manganate particles (YMO) according to Example E2, trimanganese tetraoxide (228.81 g/mol) and yttrium oxide (225.81 g/mol) were weighed so as to have a molar ratio of Mn : Y = 1.0 : 1.0, and mixed with a mortar to obtain a mixed raw material. The obtained mixed raw material according to Example E2 had an average particle size D50 of 4.3 µm. Note that it is preferable to add and mix lithium tetraborate (169.1218 g/mol) in an amount of 3.2% by mass with respect to the mixed raw material.

The obtained mixed raw material was put into a crucible made of alumina, held at a firing temperature (holding temperature) of 1200°C for 20 hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

The fired powder thus obtained by firing was subjected to a two-stage pulverization treatment in a similar manner to Example E1 to obtain yttrium manganate particles (YMO) according to Example E2.

In addition, a near-infrared transmission material according to Example E2 and a near-infrared transmission film (film thickness: 5 µm) according to Example E2 were obtained in a similar manner to Example E1.

### (Example E3)

A compound according to Example E3 is formed of yttrium manganate particles (YMO) in which when a compositional formula thereof is represented by AxXyOz, the constituent element A is Y and the constituent element X is Mn, and YMn₂O₅.

In the yttrium manganate particles (YMO) and YMn₂O₅ according to Example E3, the number of moles of the constituent element A (Y) was 1.000 mol, the number of moles of the constituent element X (Mn) was 1.000 mol, the number of moles of A+X was 2.000 mol, a molar ratio of A/(A+X) was 0.500, a molar ratio of X/(A+X) was 0.500, and a molar ratio of A/X was 1.000.

Specifically, electrolytic manganese dioxide (86.94 g/mol) and yttrium carbonate trihydrate (357.83 g/mol) as raw material compounds were weighed so as to have a molar ratio of Mn : Y = 1.0 : 1.0, and pulverized and mixed using a ball mill pulverizer to obtain a mixed raw material. Into a 5 L plastic container, 100 g of the raw material compounds and 6 kg of φ15 mm zirconia beads were put, and pulverized and mixed for five hours to obtain a mixed raw material. The obtained mixed raw material according to Example E3 had an average particle size D50 of 3.8 µm.

The obtained mixed raw material was put into a crucible made of alumina, held at a firing temperature (holding temperature) of 900°C for 20 hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

The fired powder thus obtained by firing was subjected to a two-stage pulverization treatment in a similar manner to Example E1 to obtain yttrium manganate particles (YMO) and YMn₂O₅ according to Example E3. As described above, in Example E3, by changing the raw material compound to yttrium carbonate trihydrate and changing the firing temperature to 900°C, a product (YMnO₃, YMn₂O₅) having a crystal structure different from that of Example E1 could be synthesized, and a transmittance and a color difference could be adjusted.

In addition, a near-infrared transmission material according to Example E3 and a near-infrared transmission film (film thickness: 5 µm) according to Example E3 were obtained in a similar manner to Example E1.

### (Example E4)

A compound according to Example E4 is formed of yttrium manganate particles (YMO) in which when a compositional formula thereof is represented by AxXyOz, the constituent elements A are Y and B and the constituent element X is Mn.

In the yttrium manganate particles (YMO) according to Example E4, the number of moles of the constituent element A (Y, B) was 1.0126 mol, the number of moles of the constituent element X (Mn) was 1.000 mol, the number of moles of A+X was 2.013 mol, a molar ratio of A/(A+X) was 0.500, a molar ratio of X/(A+X) was 0.500, and a molar ratio of A/X was 1.010.

Specifically, electrolytic manganese dioxide (86.94 g/mol), yttrium oxide (225.81 g/mol), and lithium tetraborate (169.1218 g/mol) as raw material compounds were weighed so as to have a molar ratio of Mn : Y : B = 1.0 : 1.0 : 0.013, and pulverized and mixed using a ball mill pulverizer to obtain a mixed raw material. Into a 5 L plastic container, 100 g of the raw material compounds and 6 kg of φ15 mm zirconia beads were put, and pulverized and mixed for five hours to obtain a mixed raw material. The obtained mixed raw material according to Example E4 had an average particle size D50 of 0.60 µm.

The obtained mixed raw material was put into a crucible made of alumina, held at a firing temperature (holding temperature) of 900°C for 20 hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

The fired powder thus obtained by firing was subjected to a two-stage pulverization treatment in a similar manner to Example E1 to obtain yttrium manganate particles (YMO) according to Example E4. As described above, in Example E4, by adding lithium tetraborate as a raw material compound and changing the firing temperature to 900°C, a product (YMnO₃, YMn₂O₅, Mn₃O₄) having a crystal structure different from that of Example E1 could be synthesized, and a transmittance and a color difference could be adjusted.

In addition, a near-infrared transmission material according to Example E4 and a near-infrared transmission film (film thickness: 5 µm) according to Example E4 were obtained in a similar manner to Example E1.

### (Example E5)

A compound according to Example E5 is formed of yttrium manganate particles (YMO) in which when a compositional formula thereof is represented by AxXyOz, the constituent elements A are Y and B and the constituent element X is Mn.

In the yttrium manganate particles (YMO) according to Example E5, the number of moles of the constituent element A (Y, B) was 1.0126 mol, the number of moles of the constituent element X (Mn) was 1.000 mol, the number of moles of A+X was 2.013 mol, a molar ratio of A/(A+X) was 0.500, a molar ratio of X/(A+X) was 0.500, and a molar ratio of A/X was 1.010.

Specifically, electrolytic manganese dioxide (86.94 g/mol), yttrium carbonate trihydrate (357.83 g/mol), and lithium tetraborate (169.1218 g/mol) as raw material compounds were weighed so as to have a molar ratio of Mn : Y : B = 1.0 : 1.0 : 0.013, and pulverized and mixed using a ball mill pulverizer to obtain a mixed raw material. Into a 5 L plastic container, 100 g of the raw material compounds and 6 kg of φ15 mm zirconia beads were put, and pulverized and mixed for five hours to obtain a mixed raw material. The obtained mixed raw material according to Example E5 had an average particle size D50 of 0.58 µm.

The obtained mixed raw material was put into a crucible made of alumina, held at a firing temperature (holding temperature) of 975°C for 20 hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

The fired powder thus obtained by firing was subjected to a two-stage pulverization treatment in a similar manner to Example E1 to obtain yttrium manganate particles (YMO) according to Example E5. As described above, in Example E5, by changing the raw material compound to yttrium carbonate trihydrate, adding lithium tetraborate, and changing the firing temperature to 975°C, a product (YMnO₃, YMn₂O₅) having a crystal structure different from that of Example E1 could be synthesized, and a transmittance and a color difference could be adjusted.

In addition, a near-infrared transmission material according to Example E5 and a near-infrared transmission film (film thickness: 5 µm) according to Example E5 were obtained in a similar manner to Example E1.

### (Example E6)

A compound according to Example E6 is formed of yttrium manganate particles (YMO) in which when a compositional formula thereof is represented by AxXyOz, the constituent elements A are Y and B and the constituent element X is Mn.

In the yttrium manganate particles (YMO) according to Example E6, the number of moles of the constituent element A (Y, B) was 1.0316 mol, the number of moles of the constituent element X (Mn) was 1.000 mol, the number of moles of A+X was 2.032 mol, a molar ratio of A/(A+X) was 0.510, a molar ratio of X/(A+X) was 0.490, and a molar ratio of A/X was 1.030.

Specifically, electrolytic manganese dioxide (86.94 g/mol), yttrium oxide (225.81 g/mol), and lithium tetraborate (169.1218 g/mol) as raw material compounds were weighed so as to have a molar ratio of Mn : Y : B = 1.0 : 1.0 : 0.032, and pulverized and mixed using a ball mill pulverizer to obtain a mixed raw material. Into a 5 L plastic container, 100 g of the raw material compounds and 6 kg of φ15 mm zirconia beads were put, and pulverized and mixed for five hours to obtain a mixed raw material. The obtained mixed raw material according to Example E6 had an average particle size D50 of 0.96 µm.

The obtained mixed raw material was put into a crucible made of alumina, held at a firing temperature (holding temperature) of 975°C for 20 hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

The fired powder thus obtained by firing was subjected to a two-stage pulverization treatment in a similar manner to Example E1 to obtain yttrium manganate particles (YMO) according to Example E6. As described above, in Example E6, by adding lithium tetraborate as a raw material compound and changing the firing temperature to 975°C, a product (YMnO₃, YBO₃) having a crystal structure different from that of Example E1 could be synthesized, and a transmittance and a color difference could be adjusted.

In addition, a near-infrared transmission material according to Example E6 and a near-infrared transmission film (film thickness: 5 µm) according to Example E6 were obtained in a similar manner to Example E1.

### (Example E7)

A compound according to Example E7 is formed of yttrium manganate particles (YMO) in which when a compositional formula thereof is represented by AxXyOz, the constituent element A is Y and the constituent element X is Mn.

In the yttrium manganate particles (YMO) according to Example E7, the number of moles of the constituent element A (Y) was 1.000 mol, the number of moles of the constituent element X (Mn) was 1.000 mol, the number of moles of A+X was 2.000 mol, a molar ratio of A/(A+X) was 0.500, a molar ratio of X/(A+X) was 0.500, and a molar ratio of A/X was 1.000.

Specifically, electrolytic manganese dioxide (86.94 g/mol) and yttrium carbonate trihydrate (357.83 g/mol) as raw material compounds were weighed so as to have a molar ratio of Mn : Y = 1.0 : 1.0, and pulverized and mixed using a ball mill pulverizer to obtain a mixed raw material. Into a 5 L plastic container, 100 g of the raw material compounds and 6 kg of φ15 mm zirconia beads were put, and pulverized and mixed for five hours to obtain a mixed raw material. The obtained mixed raw material according to Example E7 had an average particle size D50 of 0.69 µm.

The obtained mixed raw material was put into a crucible made of alumina, held at a firing temperature (holding temperature) of 975°C for 20 hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

The fired powder thus obtained by firing was subjected to a two-stage pulverization treatment in a similar manner to Example E1 to obtain yttrium manganate particles (YMO) according to Example E7. As described above, in Example E7, by changing the raw material compound to yttrium carbonate trihydrate and changing the firing temperature to 975°C, a product (YMnO₃) having a crystal structure different from that of Example E1 could be synthesized, and a transmittance and a color difference could be adjusted.

In addition, a near-infrared transmission material according to Example E7 and a near-infrared transmission film (film thickness: 5 µm) according to Example E7 were obtained in a similar manner to Example E1.

### (Example E8)

A compound according to Example E8 is formed of yttrium manganate particles (YMO) in which when a compositional formula thereof is represented by AxXyOz, the constituent elements A are Y and B and the constituent element X is Mn.

In the yttrium manganate particles (YMO) according to Example E8, the number of moles of the constituent element A (Y, B) was 1.126 mol, the number of moles of the constituent element X (Mn) was 1.000 mol, the number of moles of A+X was 2.126 mol, a molar ratio of A/(A+X) was 0.530, a molar ratio of X/(A+X) was 0.470, and a molar ratio of A/X was 1.126.

Specifically, electrolytic manganese dioxide (86.94 g/mol), yttrium carbonate trihydrate (357.83 g/mol), and lithium tetraborate (169.1218 g/mol) as raw material compounds were weighed so as to have a molar ratio of Mn : Y : B = 1.0 : 1.0 : 0.126, and pulverized and mixed using a ball mill pulverizer to obtain a mixed raw material. Into a 5 L plastic container, 100 g of the raw material compounds and 6 kg of φ15 mm zirconia beads were put, and pulverized and mixed for five hours to obtain a mixed raw material. The obtained mixed raw material according to Example E8 had an average particle size D50 of 0.65 µm.

The obtained mixed raw material was put into a crucible made of alumina, held at a firing temperature (holding temperature) of 975°C for 20 hours in an air atmosphere using a static electric furnace, and then naturally cooled to normal temperature, and then the fired powder obtained by firing was crushed with a mortar and classified with a sieve having a mesh size of 75 µm to obtain an undersize powder as a fired powder.

The fired powder thus obtained by firing was subjected to a two-stage pulverization treatment in a similar manner to Example E1 to obtain yttrium manganate particles (YMO) according to Example E8. As described above, in Example E8, by changing the raw material compound to yttrium carbonate trihydrate, adding lithium tetraborate, and changing the firing temperature to 975°C, a product (YMnO₃, YBO₃) having a crystal structure different from that of Example E1 could be synthesized, and a transmittance and a color difference could be adjusted.

In addition, a near-infrared transmission material according to Example E8 and a near-infrared transmission film (film thickness: 5 µm) according to Example E8 were obtained in a similar manner to Example E1.

### (Comparative Example E1)

In Comparative Example E1, a transparent resin (acrylic polyol; 100 parts by mass) and a curing agent (hexamethylene diisocyanate; 20 parts by mass) were blended with an aggregate of titanium oxide (7 parts by mass) having a primary particle size of 35nm and a secondary particle size of 140 nm, and melted and mixed to obtain a titanium oxide mixture according to Comparative Example E1.

### (Comparative Example E2)

In Comparative Example E2, carbon black, which was a single black pigment having a primary particle size of 15 nm and a BET specific surface area of 120 m²/g, was used. Specifically, a transparent resin (methyl methacrylate/methacrylic acid copolymer; 100 parts by mass) and PGMEA (120 parts by mass) were blended and kneaded with an aggregate of the carbon black (20 parts by mass) using three rolls to obtain a carbon black mixture according to Comparative Example E2.

The compound, the compound particles, the near-infrared transmission material, and the near-infrared transmission film of the embodiment according to the present invention will be further described with reference to the following Experimental Examples related to the present invention. Note that the following Experimental Examples do not limit the present invention.

### (Experimental Example 1)

A manganese oxide according to Experimental Example 1 is formed of lithium manganate particles (LMO-MgAl) in which the constituent elements A are Li, Mg, and Al.

In the lithium manganate particles (LMO-MgAl) according to Experimental Example 1, the number of moles of the constituent element A (Li, Mg, Al) was 0.625 mol, the number of moles of Mn was 1 mol, the number of moles of A+Mn was 1.625 mol, a molar ratio of A/(A+Mn) was 0.385, a molar ratio of Mn/(A+Mn) was 0.615, and a molar ratio of A/Mn was 0.625.

Specifically, trimanganese tetraoxide (228.81 g/mol), lithium carbonate (73.891 g/mol), magnesium oxide (40.304 g/mol), and aluminum hydroxide (78.000 g/mol) were weighed so as to have a molar ratio of Mn : Li : Mg : Al = 1.04 : 0.60 : 0.004 : 0.044, and mixed to obtain a mixed raw material.

The obtained mixed raw material was put into a crucible made of alumina, held at a firing temperature (holding temperature) of 770°C for 20 hours in an air atmosphere using a static electric furnace, and then naturally cooled to normal temperature to obtain a fired powder.

The fired powder obtained by firing was crushed with a mortar, and classified through a sieve with a mesh size of 75 µm to obtain an undersize powder as lithium manganate particles (LMO-MgAl) according to Experimental Example **1.**

Next, 20.0 g of the lithium manganate particles (LMO-MgAl) according to Experimental Example 1, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 80%, and the resulting mixture was dispersed for two hours using a paint shaker to obtain a near-infrared transmission material according to Experimental Example **1.**

The near-infrared transmission material according to Experimental Example 1 thus obtained was applied onto a PET film ("Lumirror (registered trademark)": #100-T60 manufactured by Toray Industries, Inc.) using a bar coater (No. 10) to form a coating film, and thus a near-infrared transmission film (film thickness: 5 µm) according to Experimental Example 1 was obtained.

### (Experimental Example 2)

A manganese oxide according to Experimental Example 2 is formed of lithium manganate particles (LMO-MgAl) in which the constituent elements A are Li, Mg, and Al.

In the lithium manganate particles (LMO-MgAl) according to Experimental Example 2, the number of moles of the constituent element A (Li, Mg, Al) was 0.625 mol, the number of moles of Mn was 1 mol, the number of moles of A+Mn was 1.625 mol, a molar ratio of A/(A+Mn) was 0.385, a molar ratio of Mn/(A+Mn) was 0.615, and a molar ratio of A/Mn was 0.625.

The lithium manganate particles (LMO-MgAl) according to Experimental Example 2 were obtained in a similar manner to Experimental Example 1 except that (i) the firing temperature at which the mixed raw materials was fired was 570°C and (ii) a pulverization treatment described later was performed.

As for the pulverization treatment in Experimental Example 2, 30 g of the fired powder obtained by firing, 45 g of pure water, and 100 g of φ0.8 mm zirconia beads were put into a 100 mL plastic container, and the pulverization treatment was performed for four hours using a locking shaker manufactured by Seiwa Giken Co., Ltd. Next, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain lithium manganate particles (LMO-MgAl) according to Experimental Example 2.

A near-infrared transmission material according to Experimental Example 2 was obtained in a similar manner to Experimental Example 1. A near-infrared transmission film (film thickness: 9 µm) according to Experimental Example 2 was obtained in a similar manner to Experimental Example 1 except that a coating film of the near-infrared transmission material according to Experimental Example 2 was formed by applying the near-infrared transmission material twice using a bar coater.

### (Experimental Example 3)

A manganese oxide according to Experimental Example 3 is formed of lithium manganate particles (LMO-MgAl) in which the constituent elements A are Li, Mg, and Al.

In the lithium manganate particles (LMO-MgAl) according to Experimental Example 3, the number of moles of the constituent element A (Li, Mg, Al) was 0.625 mol, the number of moles of Mn was 1 mol, the number of moles of A+Mn was 1.625 mol, a molar ratio of A/(A+Mn) was 0.385, a molar ratio of Mn/(A+Mn) was 0.615, and a molar ratio of A/Mn was 0.625.

The lithium manganate particles (LMO-MgAl) according to Experimental Example 3 were obtained in a similar manner to Experimental Example 1 except that (i) the firing temperature at which the mixed raw material was fired was 570°C, (ii) a two-stage pulverization treatment described later was performed, and (iii) the lithium manganate particles (LMO-MgAl) according to Experimental Example 3 were mixed with an acrylic resin and ethyl acetate such that a pigment concentration in terms of solid content (PWC) was 60%.

In the two-stage pulverization treatment in Experimental Example 3, first, the pulverization treatment in Experimental Example 2 was performed as a first stage pulverization treatment. Next, as a second stage pulverization treatment, 30 g of the dry powder obtained by the pulverization treatment in Experimental Example 2, 45 g of pure water, and 100 g of φ0.2 mm zirconia beads were put into a 100 mL plastic container, and a pulverization treatment was performed for four hours using a locking shaker manufactured by Seiwa Giken Co., Ltd. Next, the zirconia beads were separated using a mesh, then solid-liquid separation was performed using a small centrifuge (CT6E manufactured by Eppendorf Hymack Technologies, Inc.), and the solid content was dried and solidified at 110°C using a dryer to obtain lithium manganate particles (LMO-MgAl) according to Experimental Example 3.

A near-infrared transmission material according to Experimental Example 3 was obtained in a similar manner to Experimental Example 1. As for formation of a coating film of the near-infrared transmission material according to Experimental Example 3, a near-infrared transmission film (film thickness: 5 µm) according to Experimental Example 3 was obtained in a similar manner to Experimental Example 1.

### (Experimental Example 4)

A manganese oxide according to Experimental Example 4 is formed of sodium manganate particles (NaMnO) in which the constituent element A is Na.

In the sodium manganate particles (NaMnO) according to Experimental Example 4, the number of moles of the constituent element A (Na) was 0.5 mol, the number of moles of Mn was 1 mol, the number of moles of A+Mn was 1.5 mol, a molar ratio of A/(A+Mn) was 0.3, a molar ratio of Mn/(A+Mn) was 0.7, and a molar ratio of A/Mn was 0.5.

The sodium manganate particles (NaMnO) according to Experimental Example 4 were obtained in a similar manner to Experimental Example 1 except that trimanganese tetraoxide (228.81 g/mol) and sodium carbonate (105.99 g/mol) were weighed so as to have a molar ratio of Mn : Na = 1.00 : 0.50, and mixed to obtain a mixed raw material.

Next, a near-infrared transmission material according to Experimental Example 4 was obtained in a similar manner to Experimental Example 1 except that 7.6 g of the sodium manganate particles (NaMnO) according to Experimental Example 4, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 80%.

As for formation of a coating film of the near-infrared transmission material according to Experimental Example 4, a near-infrared transmission film (film thickness: 5 µm) according to Experimental Example 4 was obtained in a similar manner to Experimental Example 1.

### (Experimental Example 5)

A manganese oxide according to Experimental Example 5 is formed of calcium manganate particles (CaMnO) in which the constituent element A is Ca.

In the calcium manganate particles (CaMnO) according to Experimental Example 5, the number of moles of the constituent element A (Ca) was 0.5 mol, the number of moles of Mn was 1 mol, the number of moles of A+Mn was 1.5 mol, a molar ratio of A/(A+Mn) was 0.3, a molar ratio of Mn/(A+Mn) was 0.7, and a molar ratio of A/Mn was 0.5.

The calcium manganate particles (CaMnO) according to Experimental Example 5 were obtained in a similar manner to Experimental Example 1 except that (i) trimanganese tetraoxide (228.81 g/mol) and calcium carbonate (100.09 g/mol) were weighed so as to have a molar ratio of Mn : Ca = 1.00 : 0.50, and mixed to obtain a mixed raw material and (ii) the firing temperature at which the mixed raw material was fired was 1000°C.

Next, a near-infrared transmission material according to Experimental Example 5 was obtained in a similar manner to Experimental Example 1 except that 7.6 g of the calcium manganate particles (CaMnO) according to Experimental Example 5, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 80%.

As for formation of a coating film of the near-infrared transmission material according to Experimental Example 5, a near-infrared transmission film (film thickness: 5 µm) according to Experimental Example 5 was obtained in a similar manner to Experimental Example 1.

### (Experimental Example 6)

A manganese oxide according to Experimental Example 6 is formed of strontium manganate particles (SrMnO) in which the constituent element A is Sr.

In the strontium manganate particles (SrMnO) according to Experimental Example 6, the number of moles of the constituent element A (Sr) was 0.5 mol, the number of moles of Mn was 1 mol, the number of moles of A+Mn was 1.5 mol, a molar ratio of A/(A+Mn) was 0.3, a molar ratio of Mn/(A+Mn) was 0.7, and a molar ratio of A/Mn was 0.5.

The strontium manganate particles (SrMnO) according to Experimental Example 6 were obtained in a similar manner to Experimental Example 1 except that (i) trimanganese tetraoxide (228.81 g/mol) and strontium carbonate (147.63 g/mol) were weighed so as to have a molar ratio of Mn : Sr = 1.00 : 0.50, and mixed to obtain a mixed raw material and (ii) the firing temperature at which the mixed raw material was fired was 1000°C.

Next, a near-infrared transmission material according to Experimental Example 6 was obtained in a similar manner to Experimental Example 1 except that 7.6 g of the strontium manganate particles (SrMnO) according to Experimental Example 6, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 80%.

As for formation of a coating film of the near-infrared transmission material according to Experimental Example 6, a near-infrared transmission film (film thickness: 5 µm) according to Experimental Example 6 was obtained in a similar manner to Experimental Example 1.

### (Experimental Example 7)

A manganese oxide according to Experimental Example 7 is formed of barium manganate particles (BaMnO) in which the constituent element A is Ba.

In the barium manganate particles (BaMnO) according to Experimental Example 7, the number of moles of the constituent element A (Ba) was 0.5 mol, the number of moles of Mn was 1 mol, the number of moles of A+Mn was 1.5 mol, a molar ratio of A/(A+Mn) was 0.3, a molar ratio of Mn/(A+Mn) was 0.7, and a molar ratio of A/Mn was 0.5.

The barium manganate particles (BaMnO) according to Experimental Example 7 were obtained in a similar manner to Experimental Example 1 except that (i) trimanganese tetraoxide (228.81 g/mol) and barium carbonate (197.34 g/mol) were weighed so as to have a molar ratio of Mn : Ba = 1.00 : 0.50, and mixed to obtain a mixed raw material and (ii) the firing temperature at which the mixed raw material was fired was 1000°C.

Next, a near-infrared transmission material according to Experimental Example 7 was obtained in a similar manner to Experimental Example 1 except that 7.6 g of the barium manganate particles (BaMnO) according to Experimental Example 7, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 80%.

As for formation of a coating film of the near-infrared transmission material according to Experimental Example 7, a near-infrared transmission film (film thickness: 5 µm) according to Experimental Example 7 was obtained in a similar manner to Experimental Example 1.

### (Experimental Example 8)

A manganese oxide according to Experimental Example 8 is formed of yttrium manganate particles (YMO) in which the constituent element A is Y.

In the yttrium manganate particles (YMO) according to Experimental Example 8, the number of moles of the constituent element A (Y) was 0.5 mol, the number of moles of Mn was 1 mol, the number of moles of A+Mn was 1.5 mol, a molar ratio of A/(A+Mn) was 0.3, a molar ratio of Mn/(A+Mn) was 0.7, and a molar ratio of A/Mn was 0.5.

The yttrium manganate particles (YMO) according to Experimental Example 8 were obtained in a similar manner to Experimental Example 1 except that (i) trimanganese tetraoxide (228.81 g/mol) and yttrium oxide (225.81 g/mol) were weighed so as to have a molar ratio of Mn : Y = 1.00 : 0.50, and mixed to obtain a mixed raw material, (ii) the firing temperature at which the mixed raw material was fired was 1000°C, and (iii) the pulverization treatment in Experimental Example 2 was performed.

Next, a near-infrared transmission material according to Experimental Example 8 was obtained in a similar manner to Experimental Example 1 except that 7.6 g of the yttrium manganate particles (YMO) according to Experimental Example 8, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 80%.

As for formation of a coating film of the near-infrared transmission material according to Experimental Example 8, a near-infrared transmission film (film thickness: 5 µm) according to Experimental Example 8 was obtained in a similar manner to Experimental Example 1.

### (Experimental Example 9)

A manganese oxide according to Experimental Example 9 is formed of bismuth manganate particles (BiMnO) in which the constituent element A is Bi.

In the bismuth manganate particles (BiMnO) according to Experimental Example 9, the number of moles of the constituent element A (Bi) was 0.5 mol, the number of moles of Mn was 1 mol, the number of moles of A+Mn was 1.5 mol, a molar ratio of A/(A+Mn) was 0.3, a molar ratio of Mn/(A+Mn) was 0.7, and a molar ratio of A/Mn was 0.5.

The bismuth manganate particles (BiMnO) according to Experimental Example 9 were obtained in a similar manner to Experimental Example 1 except that (i) trimanganese tetraoxide (228.81 g/mol) and basic bismuth carbonate (509.97 g/mol) were weighed so as to have a molar ratio of Mn : Bi = 1.00 : 0.50, and mixed to obtain a mixed raw material and (ii) the firing temperature at which the mixed raw material was fired was 800°C.

Next, a near-infrared transmission material according to Experimental Example 9 was obtained in a similar manner to Experimental Example 1 except that 7.6 g of the bismuth manganate particles (BiMnO) according to Experimental Example 9, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 80%.

As for formation of a coating film of the near-infrared transmission material according to Experimental Example 9, a near-infrared transmission film (film thickness: 5 µm) according to Experimental Example 9 was obtained in a similar manner to Experimental Example 1.

### (Experimental Example 10)

A manganese oxide according to Experimental Example 10 is formed of yttrium manganate particles (YMnO) in which the constituent element A is Y.

In the yttrium manganate particles (YMO) according to Experimental Example 10, the number of moles of the constituent element A (Y) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.0.

The yttrium manganate particles (YMnO) according to Experimental Example 10 were obtained in a similar manner to Experimental Example 1 except that (i) trimanganese tetraoxide (228.81 g/mol) and yttrium oxide (225.81 g/mol) were weighed so as to have a molar ratio of Mn : Y = 1.00 : 1.00, and mixed to obtain a mixed raw material, (ii) the firing temperature at which the mixed raw material was fired was 1200°C, and (iii) the pulverization treatment in Experimental Example 2 was performed.

Next, a near-infrared transmission material according to Experimental Example 10 was obtained in a similar manner to Experimental Example 1 except that 7.6 g of the yttrium manganate particles (YMnO) according to Experimental Example 10, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 10, a near-infrared transmission film (film thickness: 5 µm) according to Experimental Example 10 was obtained in a similar manner to Experimental Example 1.

### (Experimental Example 11)

A manganese oxide according to Experimental Example 11 is formed of lanthanum manganate particles (LaMnO) in which the constituent element A is La.

In the lanthanum manganate particles (LaMnO) according to Experimental Example 11, the number of moles of the constituent element A (La) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.0.

The lanthanum manganate particles (LaMnO) according to Experimental Example 11 were obtained in a similar manner to Experimental Example 1 except that (i) trimanganese tetraoxide (228.81 g/mol) and lanthanum carbonate (457.84 g/mol) were weighed so as to have a molar ratio of Mn : La = 1.00 : 1.00, and mixed to obtain a mixed raw material, (ii) the firing temperature at which the mixed raw material was fired was 1200°C, and (iii) the pulverization treatment in Experimental Example 2 was performed.

Next, a near-infrared transmission material according to Experimental Example 11 was obtained in a similar manner to Experimental Example 1 except that 7.6 g of the lanthanum manganate particles (LaMnO) according to Experimental Example 11, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 11, a near-infrared transmission film (film thickness: 5 µm) according to Experimental Example 11 was obtained in a similar manner to Experimental Example 1.

### (Experimental Example 12)

A manganese oxide according to Experimental Example 12 is formed of praseodymium manganate particles (PrMnO) in which the constituent element A is Pr.

In the praseodymium manganate particles (PrMnO) according to Experimental Example 12, the number of moles of the constituent element A (Pr) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.0.

The praseodymium manganate particles (PrMnO) according to Experimental Example 12 were obtained in a similar manner to Experimental Example 1 except that (i) trimanganese tetraoxide (228.81 g/mol) and praseodymium oxide (1021.44 g/mol) were weighed so as to have a molar ratio of Mn : Pr = 1.00 : 1.00, and mixed to obtain a mixed raw material, (ii) the firing temperature at which the mixed raw material was fired was 1200°C, and (iii) the pulverization treatment in Experimental Example 2 was performed.

Next, a near-infrared transmission material according to Experimental Example 12 was obtained in a similar manner to Experimental Example 1 except that 7.6 g of the praseodymium manganate particles (PrMnO) according to Experimental Example 12, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 12, a near-infrared transmission film (film thickness: 5 µm) according to Experimental Example 12 was obtained in a similar manner to Experimental Example 1.

### (Experimental Example 13)

A manganese oxide according to Experimental Example 13 is formed of neodymium manganate particles (NdMnO) in which the constituent element A is Nd.

In the neodymium manganate particles (NdMnO) according to Experimental Example 13, the number of moles of the constituent element A (Nd) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.0.

The neodymium manganate particles (NdMnO) according to Experimental Example 13 were obtained in a similar manner to Experimental Example 1 except that (i) trimanganese tetraoxide (228.81 g/mol) and neodymium carbonate octahydrate (612.62 g/mol) were weighed so as to have a molar ratio of Mn : Nd = 1.00 : 1.00, and mixed to obtain a mixed raw material, (ii) the firing temperature at which the mixed raw material was fired was 1200°C, and (iii) the pulverization treatment in Experimental Example 2 was performed.

Next, a near-infrared transmission material according to Experimental Example 13 was obtained in a similar manner to Experimental Example 1 except that 7.6 g of the neodymium manganate particles (NdMnO) according to Experimental Example 13, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 13, a near-infrared transmission film (film thickness: 5 µm) according to Experimental Example 13 was obtained in a similar manner to Experimental Example 1.

### (Experimental Example 14)

A manganese oxide according to Experimental Example 14 is formed of iron manganate particles (FeMnO) in which the constituent element A is Fe.

In the iron manganate particles (FeMnO) according to Experimental Example 14, the number of moles of the constituent element A (Fe) was 2 mol, the number of moles of Mn was 1 mol, the number of moles of A+Mn was 3 mol, a molar ratio of A/(A+Mn) was 0.7, a molar ratio of Mn/(A+Mn) was 0.3, and a molar ratio of A/Mn was 2.0.

The iron manganate particles (FeMnO) according to Experimental Example 14 were obtained in a similar manner to Experimental Example 1 except that (i) trimanganese tetraoxide (228.81 g/mol) and iron(III) oxide (159.69 g/mol) were weighed so as to have a molar ratio of Mn : Fe = 0.50 : 1.00, and mixed to obtain a mixed raw material, (ii) the firing temperature at which the mixed raw material was fired was 1200°C, and (iii) the pulverization treatment in Experimental Example 2 was performed.

Next, a near-infrared transmission material according to Experimental Example 14 was obtained in a similar manner to Experimental Example 1 except that 7.6 g of the iron manganate particles (FeMnO) according to Experimental Example 14, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 14, a near-infrared transmission film (film thickness: 5 µm) according to Experimental Example 14 was obtained in a similar manner to Experimental Example 1.

### (Experimental Example 15)

A manganese oxide according to Experimental Example 15 is formed of lithium manganate particles (LMO) in which the constituent element A is Li.

In the lithium manganate particles (LMO) according to Experimental Example 15, the number of moles of the constituent element A (Li) was 0.001 mol, the number of moles of Mn was 1 mol, the number of moles of A+Mn was 1.001 mol, a molar ratio of A/(A+Mn) was 0.001, a molar ratio of Mn/(A+Mn) was 0.999, and a molar ratio of A/Mn was 0.001.

The lithium manganate particles (LMO) according to Experimental Example 15 were obtained in a similar manner to Experimental Example 1 except that (i) trimanganese tetraoxide (228.81 g/mol) and lithium carbonate (73.891 g/mol) were weighed so as to have a molar ratio of Mn : Li = 1.00 : 0.001, and mixed to obtain a mixed raw material and (ii) firing was performed for 24 hours at a firing temperature at which the mixed raw material was fired was 620°C.

Next, a near-infrared transmission material according to Experimental Example 15 was obtained in a similar manner to Experimental Example 1. As for formation of a coating film of the near-infrared transmission material according to Experimental Example 15, a near-infrared transmission film (film thickness: 5 µm) according to Experimental Example 15 was obtained in a similar manner to Experimental Example 1.

### (Experimental Example 16)

A manganese oxide according to Experimental Example 16 is formed of lithium manganate particles (LMO) in which the constituent element A is Li.

In the lithium manganate particles (LMO) according to Experimental Example 16, the number of moles of the constituent element A (Li) was 0.012 mol, the number of moles of Mn was 1 mol, the number of moles of A+Mn was 1.012 mol, a molar ratio of A/(A+Mn) was 0.012, a molar ratio of Mn/(A+Mn) was 0.988, and a molar ratio of A/Mn was 0.012.

The lithium manganate particles (LMO) according to Experimental Example 16 were obtained in a similar manner to Experimental Example 1 except that (i) trimanganese tetraoxide (228.81 g/mol) and lithium carbonate (73.891 g/mol) were weighed so as to have a molar ratio of Mn : Li = 1.00 : 0.012, and mixed to obtain a mixed raw material and (ii) firing was performed for 24 hours at a firing temperature at which the mixed raw material was fired was 620°C.

Next, a near-infrared transmission material according to Experimental Example 16 was obtained in a similar manner to Experimental Example 1. As for formation of a coating film of the near-infrared transmission material according to Experimental Example 16, a near-infrared transmission film (film thickness: 5 µm) according to Experimental Example 16 was obtained in a similar manner to Experimental Example 1.

### (Experimental Example 17)

A manganese oxide according to Experimental Example 17 is formed of lithium manganate particles (LMO) in which the constituent element A is Li.

In the lithium manganate particles (LMO) according to Experimental Example 17, the number of moles of the constituent element A (Li) was 0.1 mol, the number of moles of Mn was 1 mol, the number of moles of A+Mn was 1.1 mol, a molar ratio of A/(A+Mn) was 0.09, a molar ratio of Mn/(A+Mn) was 0.91, and a molar ratio of A/Mn was 0.1.

The lithium manganate particles (LMO) according to Experimental Example 17 were obtained in a similar manner to Experimental Example 1 except that (i) trimanganese tetraoxide (228.81 g/mol) and lithium carbonate (73.891 g/mol) were weighed so as to have a molar ratio of Mn : Li = 1.00 : 0.10, and mixed to obtain a mixed raw material and (ii) firing was performed for 24 hours at a firing temperature at which the mixed raw material was fired was 620°C.

Next, a near-infrared transmission material according to Experimental Example 17 was obtained in a similar manner to Experimental Example 1. As for formation of a coating film of the near-infrared transmission material according to Experimental Example 17, a near-infrared transmission film (film thickness: 5 µm) according to Experimental Example 17 was obtained in a similar manner to Experimental Example 1.

### (Experimental Example 18)

A manganese oxide according to Experimental Example 18 is formed of lithium manganate particles (LMO) in which the constituent element A is Li.

In the lithium manganate particles (LMO) according to Experimental Example 18, the number of moles of the constituent element A (Li) was 0.5 mol, the number of moles of Mn was 1 mol, the number of moles of A+Mn was 1.5 mol, a molar ratio of A/(A+Mn) was 0.33, a molar ratio of Mn/(A+Mn) was 0.67, and a molar ratio of A/Mn was 0.5.

The lithium manganate particles (LMO) according to Experimental Example 18 were obtained in a similar manner to Experimental Example 1 except that (i) trimanganese tetraoxide (228.81 g/mol) and lithium carbonate (73.891 g/mol) were weighed so as to have a molar ratio of Mn : Li = 1.00 : 0.50, and mixed to obtain a mixed raw material and (ii) firing was performed for 24 hours at a firing temperature at which the mixed raw material was fired was 620°C.

Next, a near-infrared transmission material according to Experimental Example 18 was obtained in a similar manner to Experimental Example 1. As for formation of a coating film of the near-infrared transmission material according to Experimental Example 18, a near-infrared transmission film (film thickness: 5 µm) according to Experimental Example 18 was obtained in a similar manner to Experimental Example 1.

### (Experimental Example 19)

A manganese oxide according to Experimental Example 19 is formed of lithium manganate particles (LMO) in which the constituent element A is Li.

In the lithium manganate particles (LMO) according to Experimental Example 19, the number of moles of the constituent element A (Li) was 1 mol, the number of moles of Mn was 1 mol, the number of moles of A+Mn was 2 mol, a molar ratio of A/(A+Mn) was 0.50, a molar ratio of Mn/(A+Mn) was 0.50, and a molar ratio of A/Mn was 1.

The lithium manganate particles (LMO) according to Experimental Example 19 were obtained in a similar manner to Experimental Example 1 except that (i) trimanganese tetraoxide (228.81 g/mol) and lithium carbonate (73.891 g/mol) were weighed so as to have a molar ratio of Mn : Li = 1.00 : 1.00, and mixed to obtain a mixed raw material and (ii) firing was performed for 24 hours at a firing temperature at which the mixed raw material was fired was 620°C.

Next, a near-infrared transmission material according to Experimental Example 19 was obtained in a similar manner to Experimental Example 1. As for formation of a coating film of the near-infrared transmission material according to Experimental Example 19, a near-infrared transmission film (film thickness: 5 µm) according to Experimental Example 19 was obtained in a similar manner to Experimental Example 1.

### (Experimental Example 20)

A manganese oxide according to Experimental Example 20 is formed of lithium manganate particles (LMO) in which the constituent element A is Li.

In the lithium manganate particles (LMO) according to Experimental Example 20, the number of moles of the constituent element A (Li) was 1.5 mol, the number of moles of Mn was 1 mol, the number of moles of A+Mn was 2.5 mol, a molar ratio of A/(A+Mn) was 0.60, a molar ratio of Mn/(A+Mn) was 0.40, and a molar ratio of A/Mn was 1.5.

The lithium manganate particles (LMO) according to Experimental Example 20 were obtained in a similar manner to Experimental Example 1 except that (i) trimanganese tetraoxide (228.81 g/mol) and lithium carbonate (73.891 g/mol) were weighed so as to have a molar ratio of Mn : Li = 1.00 : 1.50, and mixed to obtain a mixed raw material and (ii) firing was performed for 24 hours at a firing temperature at which the mixed raw material was fired was 620°C.

Next, a near-infrared transmission material according to Experimental Example 20 was obtained in a similar manner to Experimental Example 1. As for formation of a coating film of the near-infrared transmission material according to Experimental Example 20, a near-infrared transmission film (film thickness: 5 µm) according to Experimental Example 20 was obtained in a similar manner to Experimental Example 1.

### (Experimental Example 21)

A manganese oxide according to Experimental Example 21 is formed of yttrium manganate particles (YMO) in which the constituent element A is Y.

In the yttrium manganate particles (YMO) according to Experimental Example 21, the number of moles of the constituent element A (Y) was 0.1 mol, the number of moles of Mn was 1 mol, the number of moles of A+Mn was 1.1 mol, a molar ratio of A/(A+Mn) was 0.1, a molar ratio of Mn/(A+Mn) was 0.9, and a molar ratio of A/Mn was 0.1.

The yttrium manganate particles (YMO) according to Experimental Example 21 were obtained in a similar manner to Experimental Example 1 except that (i) trimanganese tetraoxide (228.81 g/mol) and yttrium oxide (225.81 g/mol) were weighed so as to have a molar ratio of Mn : Y = 1.00 : 0.10, and mixed to obtain a mixed raw material, (ii) the firing temperature at which the mixed raw material was fired was 1200°C, and (iii) the two-stage pulverization treatment in Experimental Example 3 was performed.

Next, a near-infrared transmission material according to Experimental Example 21 was obtained in a similar manner to Experimental Example 1 except that 7.6 g of the yttrium manganate particles (YMO) according to Experimental Example 21, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 21, a near-infrared transmission film (film thickness: 5 µm) according to Experimental Example 21 was obtained in a similar manner to Experimental Example 1.

### (Experimental Example 22)

A manganese oxide according to Experimental Example 22 is formed of yttrium manganate particles (YMO) in which the constituent element A is Y.

In the yttrium manganate particles (YMO) according to Experimental Example 22, the number of moles of the constituent element A (Y) was 0.4 mol, the number of moles of Mn was 1 mol, the number of moles of A+Mn was 1.4 mol, a molar ratio of A/(A+Mn) was 0.3, a molar ratio of Mn/(A+Mn) was 0.7, and a molar ratio of A/Mn was 0.4.

The yttrium manganate particles (YMO) according to Experimental Example 22 were obtained in a similar manner to Experimental Example 1 except that (i) trimanganese tetraoxide (228.81 g/mol) and yttrium oxide (225.81 g/mol) were weighed so as to have a molar ratio of Mn : Y = 1.00 : 0.40, and mixed to obtain a mixed raw material, (ii) the firing temperature at which the mixed raw material was fired was 1200°C, and (iii) the two-stage pulverization treatment in Experimental Example 3 was performed.

Next, a near-infrared transmission material according to Experimental Example 22 was obtained in a similar manner to Experimental Example 1 except that 7.6 g of the yttrium manganate particles (YMO) according to Experimental Example 22, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 22, a near-infrared transmission film (film thickness: 5 µm) according to Experimental Example 22 was obtained in a similar manner to Experimental Example 1.

### (Experimental Example 23)

A manganese oxide according to Experimental Example 23 is formed of yttrium manganate particles (YMO) in which the constituent element A is Y.

In the yttrium manganate particles (YMO) according to Experimental Example 23, the number of moles of the constituent element A (Y) was 0.5 mol, the number of moles of Mn was 1 mol, the number of moles of A+Mn was 1.5 mol, a molar ratio of A/(A+Mn) was 0.3, a molar ratio of Mn/(A+Mn) was 0.7, and a molar ratio of A/Mn was 0.5.

The yttrium manganate particles (YMO) according to Experimental Example 23 were obtained in a similar manner to Experimental Example 1 except that (i) trimanganese tetraoxide (228.81 g/mol) and yttrium oxide (225.81 g/mol) were weighed so as to have a molar ratio of Mn : Y = 1.00 : 0.50, and mixed to obtain a mixed raw material, (ii) the firing temperature at which the mixed raw material was fired was 1200°C, and (iii) the two-stage pulverization treatment in Experimental Example 3 was performed.

Next, a near-infrared transmission material according to Experimental Example 23 was obtained in a similar manner to Experimental Example 1 except that 7.6 g of the yttrium manganate particles (YMO) according to Experimental Example 23, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 23, a near-infrared transmission film (film thickness: 5 µm) according to Experimental Example 23 was obtained in a similar manner to Experimental Example 1.

### (Experimental Example 24)

A manganese oxide according to Experimental Example 24 is formed of yttrium manganate particles (YMO) in which the constituent element A is Y.

In the yttrium manganate particles (YMO) according to Experimental Example 24, the number of moles of the constituent element A (Y) was 0.6 mol, the number of moles of Mn was 1 mol, the number of moles of A+Mn was 1.6 mol, a molar ratio of A/(A+Mn) was 0.4, a molar ratio of Mn/(A+Mn) was 0.6, and a molar ratio of A/Mn was 0.6.

The yttrium manganate particles (YMO) according to Experimental Example 24 were obtained in a similar manner to Experimental Example 1 except that (i) trimanganese tetraoxide (228.81 g/mol) and yttrium oxide (225.81 g/mol) were weighed so as to have a molar ratio of Mn : Y = 1.00 : 0.60, and mixed to obtain a mixed raw material, (ii) the firing temperature at which the mixed raw material was fired was 1200°C, and (iii) the two-stage pulverization treatment in Experimental Example 3 was performed.

Next, a near-infrared transmission material according to Experimental Example 24 was obtained in a similar manner to Experimental Example 1 except that 7.6 g of the yttrium manganate particles (YMO) according to Experimental Example 24, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 24, a near-infrared transmission film (film thickness: 5 µm) according to Experimental Example 24 was obtained in a similar manner to Experimental Example 1.

### (Experimental Example 25)

A manganese oxide according to Experimental Example 25 is formed of yttrium manganate particles (YMO) in which the constituent element A is Y.

In the yttrium manganate particles (YMO) according to Experimental Example 25, the number of moles of the constituent element A (Y) was 0.75 mol, the number of moles of Mn was 1 mol, the number of moles of A+Mn was 1.75 mol, a molar ratio of A/(A+Mn) was 0.43, a molar ratio of Mn/(A+Mn) was 0.57, and a molar ratio of A/Mn was 0.75.

The yttrium manganate particles (YMO) according to Experimental Example 25 were obtained in a similar manner to Experimental Example 1 except that (i) trimanganese tetraoxide (228.81 g/mol) and yttrium oxide (225.81 g/mol) were weighed so as to have a molar ratio of Mn : Y = 1.00 : 0.75, and mixed to obtain a mixed raw material, (ii) the firing temperature at which the mixed raw material was fired was 1200°C, and (iii) the two-stage pulverization treatment in Experimental Example 3 was performed.

Next, a near-infrared transmission material according to Experimental Example 25 was obtained in a similar manner to Experimental Example 1 except that 7.6 g of the yttrium manganate particles (YMO) according to Experimental Example 25, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 25, a near-infrared transmission film (film thickness: 5 µm) according to Experimental Example 25 was obtained in a similar manner to Experimental Example 1.

### (Experimental Example 26)

A manganese oxide according to Experimental Example 26 is formed of yttrium manganate particles (YMO) in which the constituent element A is Y.

In the yttrium manganate particles (YMO) according to Experimental Example 26, the number of moles of the constituent element A (Y) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.0.

The yttrium manganate particles (YMO) according to Experimental Example 26 were obtained in a similar manner to Experimental Example 1 except that (i) trimanganese tetraoxide (228.81 g/mol) and yttrium oxide (225.81 g/mol) were weighed so as to have a molar ratio of Mn : Y = 1.00 : 1.00, and mixed to obtain a mixed raw material, (ii) the firing temperature at which the mixed raw material was fired was 1200°C, and (iii) the two-stage pulverization treatment in Experimental Example 3 was performed.

Next, a near-infrared transmission material according to Experimental Example 26 was obtained in a similar manner to Experimental Example 1 except that 7.6 g of the yttrium manganate particles (YMO) according to Experimental Example 26, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 26, a near-infrared transmission film (film thickness: 5 µm) according to Experimental Example 26 was obtained in a similar manner to Experimental Example 1.

### (Experimental Example 27)

A manganese oxide according to Experimental Example 27 is formed of lithium manganate particles (LMO-Ti) in which the constituent elements A are Li and Ti.

In the lithium manganate particles (LMO-Ti) according to Experimental Example 27, the number of moles of the constituent elements A (Li, Ti) was 1.1 mol, the number of moles of Mn was 1.9 mol, the number of moles of A+Mn was 3 mol, a molar ratio of A/(A+Mn) was 0.4, a molar ratio of Mn/(A+Mn) was 0.6, and a molar ratio of A/Mn was 0.58.

The lithium manganate particles (LMO-Ti) according to Experimental Example 27 were obtained in a similar manner to Experimental Example 1 except that (i) trimanganese tetraoxide (228.81 g/mol), lithium carbonate (73.891 g/mol), and titanium oxide (79.87 g/mol) were weighed so as to have a molar ratio of Mn : Li : Ti = 1.90 : 1.00 : 0.10, and mixed to obtain a mixed raw material, (ii) the firing temperature at which the mixed raw material was fired was 1000°C, and (iii) the pulverization treatment in Experimental Example 2 was performed.

Next, a near-infrared transmission material according to Experimental Example 27 was obtained in a similar manner to Experimental Example 1. As for formation of a coating film of the near-infrared transmission material according to Experimental Example 27, a near-infrared transmission film (film thickness: 5 µm) according to Experimental Example 27 was obtained in a similar manner to Experimental Example 1.

### (Experimental Example 28)

A manganese oxide according to Experimental Example 28 is formed of lithium manganate particles (LMO-Ti) in which the constituent elements A are Li and Ti.

In the lithium manganate particles (LMO-Ti) according to Experimental Example 28, the number of moles of the constituent elements A (Li, Ti) was 1.5 mol, the number of moles of Mn was 1.5 mol, the number of moles of A+Mn was 3 mol, a molar ratio of A/(A+Mn) was 0.5, a molar ratio of Mn/(A+Mn) was 0.5, and a molar ratio of A/Mn was 1.00.

The lithium manganate particles (LMO-Ti) according to Experimental Example 28 were obtained in a similar manner to Experimental Example 1 except that (i) trimanganese tetraoxide (228.81 g/mol), lithium carbonate (73.891 g/mol), and titanium oxide (79.87 g/mol) were weighed so as to have a molar ratio of Mn : Li : Ti = 1.50 : 1.00 : 0.50, and mixed to obtain a mixed raw material, (ii) the firing temperature at which the mixed raw material was fired was 1000°C, and (iii) the pulverization treatment in Experimental Example 2 was performed.

Next, a near-infrared transmission material according to Experimental Example 28 was obtained in a similar manner to Experimental Example 1. As for formation of a coating film of the near-infrared transmission material according to Experimental Example 28, a near-infrared transmission film (film thickness: 5 µm) according to Experimental Example 28 was obtained in a similar manner to Experimental Example 1.

### (Experimental Example 29)

A manganese oxide according to Experimental Example 29 is formed of lithium manganate particles (LMO-Y) in which the constituent elements A are Li and Y.

In the lithium manganate particles (LMO-Y) according to Experimental Example 29, the number of moles of the constituent elements A (Li, Y) was 1.1 mol, the number of moles of Mn was 1.9 mol, the number of moles of A+Mn was 3 mol, a molar ratio of A/(A+Mn) was 0.4, a molar ratio of Mn/(A+Mn) was 0.6, and a molar ratio of A/Mn was 0.58.

The lithium manganate particles (LMO-Y) according to Experimental Example 29 were obtained in a similar manner to Experimental Example 1 except that (i) trimanganese tetraoxide (228.81 g/mol), lithium carbonate (73.891 g/mol), and yttrium oxide (225.81 g/mol) were weighed so as to have a molar ratio of Mn : Li : Y = 1.90 : 1.00 : 0.10, and mixed to obtain a mixed raw material, (ii) the firing temperature at which the mixed raw material was fired was 1000°C, and (iii) the pulverization treatment in Experimental Example 2 was performed.

Next, a near-infrared transmission material according to Experimental Example 29 was obtained in a similar manner to Experimental Example 1. As for formation of a coating film of the near-infrared transmission material according to Experimental Example 29, a near-infrared transmission film (film thickness: 5 µm) according to Experimental Example 29 was obtained in a similar manner to Experimental Example 1.

### (Experimental Example 30)

A manganese oxide according to Experimental Example 30 is formed of lithium manganate particles (LMO-Y) in which the constituent elements A are Li and Y.

In the lithium manganate particles (LMO-Y) according to Experimental Example 30, the number of moles of the constituent elements A (Li, Y) was 1.5 mol, the number of moles of Mn was 1.5 mol, the number of moles of A+Mn was 3 mol, a molar ratio of A/(A+Mn) was 0.5, a molar ratio of Mn/(A+Mn) was 0.5, and a molar ratio of A/Mn was 1.00.

The lithium manganate particles (LMO-Y) according to Experimental Example 30 were obtained in a similar manner to Experimental Example 1 except that (i) trimanganese tetraoxide (228.81 g/mol), lithium carbonate (73.891 g/mol), and yttrium oxide (225.81 g/mol) were weighed so as to have a molar ratio of Mn : Li : Y = 1.50 : 1.00 : 0.50, and mixed to obtain a mixed raw material, (ii) the firing temperature at which the mixed raw material was fired was 1000°C, and (iii) the pulverization treatment in Experimental Example 2 was performed.

Next, a near-infrared transmission material according to Experimental Example 30 was obtained in a similar manner to Experimental Example 1. As for formation of a coating film of the near-infrared transmission material according to Experimental Example 30, a near-infrared transmission film (film thickness: 5 µm) according to Experimental Example 30 was obtained in a similar manner to Experimental Example 1.

### (Experimental Example 31)

A manganese oxide according to Experimental Example 31 is formed of yttrium manganate particles (YMO-Ti) in which the constituent elements A are Y and Ti.

In the yttrium manganate particles (YMO-Ti) according to Experimental Example 31, the number of moles of the constituent elements A (Y, Ti) was 1.1 mol, the number of moles of Mn was 0.9 mol, the number of moles of A+Mn was 2 mol, a molar ratio of A/(A+Mn) was 0.55, a molar ratio of Mn/(A+Mn) was 0.45, and a molar ratio of A/Mn was 1.22.

The yttrium manganate particles (YMO-Ti) according to Experimental Example 31 were obtained in a similar manner to Experimental Example 1 except that (i) trimanganese tetraoxide (228.81 g/mol), yttrium oxide (225.81 g/mol): 1mol, and titanium oxide (79.87 g/mol) were weighed so as to have a molar ratio of Mn : Y: Ti = 0.90 : 1.00 : 0.1, and mixed to obtain a mixed raw material, (ii) the firing temperature at which the mixed raw material was fired was 1200°C, and (iii) the pulverization treatment in Experimental Example 2 was performed.

Next, a near-infrared transmission material according to Experimental Example 31 was obtained in a similar manner to Experimental Example 1 except that 7.6 g of the yttrium manganate particles (YMO-Ti) according to Experimental Example 31, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 31, a near-infrared transmission film (film thickness: 5 µm) according to Experimental Example 31 was obtained in a similar manner to Experimental Example 1.

### (Experimental Example 32)

A manganese oxide according to Experimental Example 32 is formed of yttrium manganate particles (YMO-Ti) in which the constituent elements A are Y and Ti.

In the yttrium manganate particles (YMO-Ti) according to Experimental Example 32, the number of moles of the constituent elements A (Y, Ti) was 1.3 mol, the number of moles of Mn was 0.7 mol, the number of moles of A+Mn was 2 mol, a molar ratio of A/(A+Mn) was 0.65, a molar ratio of Mn/(A+Mn) was 0.35, and a molar ratio of A/Mn was 1.86.

The yttrium manganate particles (YMO-Ti) according to Experimental Example 32 were obtained in a similar manner to Experimental Example 1 except that (i) trimanganese tetraoxide (228.81 g/mol), lithium carbonate (73.891 g/mol), and yttrium oxide (225.81 g/mol) were weighed so as to have a molar ratio of Mn : Li : Y = 1.70 : 1.00 : 0.30, and mixed to obtain a mixed raw material, (ii) the firing temperature at which the mixed raw material was fired was 1200°C, and (iii) the pulverization treatment in Experimental Example 2 was performed.

Next, a near-infrared transmission material according to Experimental Example 32 was obtained in a similar manner to Experimental Example 1 except that 7.6 g of the yttrium manganate particles (YMO-Ti) according to Experimental Example 32, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 32, a near-infrared transmission film (film thickness: 5 µm) according to Experimental Example 32 was obtained in a similar manner to Experimental Example 1.

### (Experimental Example 33)

A manganese oxide according to Experimental Example 33 is formed of yttrium manganate particles (YMO-Ti) in which the constituent elements A are Y and Ti.

In the yttrium manganate particles (YMO-Ti) according to Experimental Example 33, the number of moles of the constituent elements A (Y, Ti) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.00.

The yttrium manganate particles (YMO-Ti) according to Experimental Example 33 were obtained in a similar manner to Experimental Example 1 except that (i) trimanganese tetraoxide (228.81 g/mol), lithium carbonate (73.891 g/mol), and yttrium oxide (225.81 g/mol) were weighed so as to have a molar ratio of Mn : Li : Y = 1.00 : 0.90 : 0.10, and mixed to obtain a mixed raw material, (ii) the firing temperature at which the mixed raw material was fired was 1200°C, and (iii) the pulverization treatment in Experimental Example 2 was performed.

Next, a near-infrared transmission material according to Experimental Example 33 was obtained in a similar manner to Experimental Example 1 except that 7.6 g of the yttrium manganate particles (YMO-Ti) according to Experimental Example 33, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 33, a near-infrared transmission film (film thickness: 5 µm) according to Experimental Example 33 was obtained in a similar manner to Experimental Example 1.

### (Experimental Example 34)

A manganese oxide according to Experimental Example 34 is formed of yttrium manganate particles (YMO-Ti) in which the constituent elements A are Y and Ti.

In the yttrium manganate particles (YMO-Ti) according to Experimental Example 34, the number of moles of the constituent elements A (Y, Ti) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.00.

The yttrium manganate particles (YMO-Ti) according to Experimental Example 34 were obtained in a similar manner to Experimental Example 1 except that (i) trimanganese tetraoxide (228.81 g/mol), lithium carbonate (73.891 g/mol), and yttrium oxide (225.81 g/mol) were weighed so as to have a molar ratio of Mn : Li : Y = 1.00 : 0.70 : 0.30, and mixed to obtain a mixed raw material, (ii) the firing temperature at which the mixed raw material was fired was 1200°C, and (iii) the pulverization treatment in Experimental Example 2 was performed.

Next, a near-infrared transmission material according to Experimental Example 34 was obtained in a similar manner to Experimental Example 1 except that 7.6 g of the yttrium manganate particles (YMO-Ti) according to Experimental Example 34, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 34, a near-infrared transmission film (film thickness: 5 µm) according to Experimental Example 34 was obtained in a similar manner to Experimental Example 1.

### (Experimental Example 35)

A manganese oxide according to Experimental Example 35 is formed of yttrium manganate particles (YMO-Zn) in which the constituent elements A are Y and Zn.

In the yttrium manganate particles (YMO-Zn) according to Experimental Example 35, the number of moles of the constituent elements A (Y, Zn) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.00.

The yttrium manganate particles (YMO-Zn) according to Experimental Example 35 were obtained in a similar manner to Experimental Example 1 except that (i) trimanganese tetraoxide (228.81 g/mol), yttrium oxide (225.81 g/mol), and zinc oxide (81.41 g/mol) were weighed so as to have a molar ratio of Mn : Y : Zn = 1.00 : 0.90 : 0.10, and mixed to obtain a mixed raw material, (ii) the firing temperature at which the mixed raw material was fired was 1200°C, and (iii) the pulverization treatment in Experimental Example 2 was performed.

Next, a near-infrared transmission material according to Experimental Example 35 was obtained in a similar manner to Experimental Example 1 except that 7.6 g of the yttrium manganate particles (YMO-Zn) according to Experimental Example 35, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 35, a near-infrared transmission film (film thickness: 5 µm) according to Experimental Example 35 was obtained in a similar manner to Experimental Example 1.

### (Experimental Example 36)

A manganese oxide according to Experimental Example 36 is formed of yttrium manganate particles (YMO-Zn) in which the constituent elements A are Y and Zn.

In the yttrium manganate particles (YMO-Zn) according to Experimental Example 36, the number of moles of the constituent elements A (Y, Zn) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.00.

The yttrium manganate particles (YMO-Zn) according to Experimental Example 36 were obtained in a similar manner to Experimental Example 1 except that (i) trimanganese tetraoxide (228.81 g/mol), yttrium oxide (225.81 g/mol), and zinc oxide (81.41 g/mol) were weighed so as to have a molar ratio of Mn : Y : Zn = 1.00 : 0.90 : 0.10, and mixed to obtain a mixed raw material, (ii) the firing temperature at which the mixed raw material was fired was 1200°C, and (iii) the two-stage pulverization treatment in Experimental Example 3 was performed.

Next, a near-infrared transmission material according to Experimental Example 36 was obtained in a similar manner to Experimental Example 1 except that 7.6 g of the yttrium manganate particles (YMO-Zn) according to Experimental Example 36, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 36, a near-infrared transmission film (film thickness: 5 µm) according to Experimental Example 36 was obtained in a similar manner to Experimental Example 1.

### (Experimental Example 37)

A manganese oxide according to Experimental Example 37 is formed of yttrium manganate particles (YMO-Zn) in which the constituent elements A are Y and Zn.

In the yttrium manganate particles (YMO-Zn) according to Experimental Example 37, the number of moles of the constituent elements A (Y, Zn) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.00.

The yttrium manganate particles (YMO-Zn) according to Experimental Example 37 were obtained in a similar manner to Experimental Example 1 except that (i) trimanganese tetraoxide (228.81 g/mol), yttrium oxide (225.81 g/mol), and zinc oxide (81.41 g/mol) were weighed so as to have a molar ratio of Mn : Y : Zn = 1.00 : 0.95 : 0.05, and mixed to obtain a mixed raw material, (ii) the firing temperature at which the mixed raw material was fired was 1200°C, and (iii) the two-stage pulverization treatment in Experimental Example 3 was performed.

Next, a near-infrared transmission material according to Experimental Example 37 was obtained in a similar manner to Experimental Example 1 except that 7.6 g of the yttrium manganate particles (YMO-Zn) according to Experimental Example 37, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 37, a near-infrared transmission film (film thickness: 5 µm) according to Experimental Example 37 was obtained in a similar manner to Experimental Example 1.

### (Experimental Example 38)

A manganese oxide according to Experimental Example 38 is formed of yttrium manganate particles (YMO-Zn) in which the constituent elements A are Y and Zn.

In the yttrium manganate particles (YMO-Zn) according to Experimental Example 38, the number of moles of the constituent elements A (Y, Zn) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.00.

The yttrium manganate particles (YMO-Zn) according to Experimental Example 38 were obtained in a similar manner to Experimental Example 1 except that (i) trimanganese tetraoxide (228.81 g/mol), yttrium oxide (225.81 g/mol), and zinc oxide (81.41 g/mol) were weighed so as to have a molar ratio of Mn : Y : Zn = 1.00 : 0.70 : 0.30, and mixed to obtain a mixed raw material, (ii) the firing temperature at which the mixed raw material was fired was 1200°C, and (iii) the two-stage pulverization treatment in Experimental Example 3 was performed.

Next, a near-infrared transmission material according to Experimental Example 38 was obtained in a similar manner to Experimental Example 1 except that 7.6 g of the yttrium manganate particles (YMO-Zn) according to Experimental Example 38, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 38, a near-infrared transmission film (film thickness: 5 µm) according to Experimental Example 38 was obtained in a similar manner to Experimental Example 1.

### (Experimental Example 39)

A manganese oxide according to Experimental Example 39 is formed of yttrium manganate particles (YMO-CaAlTiFeZnBi) in which the constituent elements A are Y, Ca, Al, Ti, Fe, Zn, and Bi.

In the yttrium manganate particles (YMO-CaAlTiFeZnBi) according to Experimental Example 39, the number of moles of the constituent elements A (Y, Ca, Al, Ti, Fe, Zn, Bi) was 1 mol, the number of moles of Mn was 1 mol, the number of moles of A+Mn was 2 mol, a molar ratio of A/(A+Mn) was 0.5, a molar ratio of Mn/(A+Mn) was 0.5, and a molar ratio of A/Mn was 1.00.

The yttrium manganate particles (YMO-CaAlTiFeZnBi) according to Experimental Example 39 were obtained in a similar manner to Experimental Example 1 except that (i) trimanganese tetraoxide (228.81 g/mol), yttrium oxide (225.81 g/mol), calcium carbonate (100.09 g/mol), aluminum hydroxide (78.00 g/mol), titanium oxide (79.87 g/mol), iron oxide (159.69 g/mol), zinc oxide (81.41 g/mol), basic bismuth carbonate (509.97 g/mol) were weighed so as to have a molar ratio of Mn : Y : Ca : Al : Ti : Fe : Zn : Bi = 1.00 : 0.94 : 0.01 : 0.01 : 0.01 : 0.01 : 0.01 : 0.01, and mixed to obtain a mixed raw material, (ii) firing was performed for 15 hours at a firing temperature at which the mixed raw material was fired was 800°C, and (iii) the pulverization treatment in Experimental Example 2 was performed.

Next, a near-infrared transmission material according to Experimental Example 39 was obtained in a similar manner to Experimental Example 1 except that 7.6 g of the yttrium manganate particles (YMO-CaAlTiFeZnBi) according to Experimental Example 39, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 39, a near-infrared transmission film (film thickness: 5 µm) according to Experimental Example 39 was obtained in a similar manner to Experimental Example 1.

### (Experimental Example 40)

A manganese oxide according to Experimental Example 40 is formed of lithium manganate particles (LMO-CaAlTiFeZnBi) in which the constituent elements A are Li, Ca, Al, Ti, Fe, Zn, and Bi.

In the lithium manganate particles (LMO-CaAlTiFeZnBi) according to Experimental Example 40, the number of moles of the constituent elements A (Li, Ca, Al, Ti, Fe, Zn, Bi) was 1 mol, the number of moles of Mn was 2 mol, the number of moles of A+Mn was 3 mol, a molar ratio of A/(A+Mn) was 0.33, a molar ratio of Mn/(A+Mn) was 0.67, and a molar ratio of A/Mn was 0.5.

The lithium manganate particles (LMO-CaAlTiFeZnBi) according to Experimental Example 40 were obtained in a similar manner to Experimental Example 1 except that (i) trimanganese tetraoxide (228.81 g/mol), lithium carbonate (73.891 g/mol), calcium carbonate (100.09 g/mol), aluminum hydroxide (78.00 g/mol), titanium oxide (79.87 g/mol), iron oxide (159.69 g/mol), zinc oxide (81.41 g/mol), basic bismuth carbonate (509.97 g/mol) were weighed so as to have a molar ratio of Mn : Li : Ca : Al : Ti : Fe : Zn : Bi = 1.00 : 0.94 : 0.01 : 0.01 : 0.01 : 0.01 : 0.01 : 0.01, and mixed to obtain a mixed raw material, (ii) firing was performed for 15 hours at a firing temperature at which the mixed raw material was fired was 800°C, and (iii) the pulverization treatment in Experimental Example 2 was performed.

Next, a near-infrared transmission material according to Experimental Example 40 was obtained in a similar manner to Experimental Example 1 except that 7.6 g of the lithium manganate particles (LMO-CaAlTiFeZnBi) according to Experimental Example 40, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 40, a near-infrared transmission film (film thickness: 5 µm) according to Experimental Example 40 was obtained in a similar manner to Experimental Example 1.

### (Experimental Example 41)

A manganese oxide according to Experimental Example 41 is formed of lithium manganate yttrium particles (LYMO-CaAlTiFeZnBi) in which the constituent elements A are Li, Y, Ca, Al, Ti, Fe, Zn, and Bi.

In the lithium manganate yttrium particles (LYMO-CaAlTiFeZnBi) according to Experimental Example 41, the number of moles of the constituent elements A (Li, Y, Ca, Al, Ti, Fe, Zn, Bi) was 1.06 mol, the number of moles of Mn was 0.94 mol, the number of moles of A+Mn was 2 mol, a molar ratio of A/(A+Mn) was 0.53, a molar ratio of Mn/(A+Mn) was 0.47, and a molar ratio of A/Mn was 1.13.

The lithium manganate yttrium particles (LYMO-CaAlTiFeZnBi) according to Experimental Example 41 were obtained in a similar manner to Experimental Example 1 except that (i) trimanganese tetraoxide (228.81 g/mol), lithium carbonate (73.891 g/mol), yttrium oxide (225.81 g/mol), calcium carbonate (100.09 g/mol), aluminum hydroxide (78.00 g/mol), titanium oxide (79.87 g/mol), iron oxide (159.69 g/mol), zinc oxide (81.41 g/mol), basic bismuth carbonate (509.97 g/mol) were weighed so as to have a molar ratio of Mn : Li : Ca : Al : Ti : Fe : Zn : Bi = 0.94 : 0.50 : 0.50 : 0.01 : 0.01 : 0.01 : 0.01 : 0.01 : 0.01, and mixed to obtain a mixed raw material, (ii) firing was performed for 15 hours at a firing temperature at which the mixed raw material was fired was 800°C, and (iii) the pulverization treatment in Experimental Example 2 was performed.

Next, a near-infrared transmission material according to Experimental Example 41 was obtained in a similar manner to Experimental Example 1 except that 7.6 g of the lithium manganate yttrium particles (LYMO-CaAlTiFeZnBi) according to Experimental Example 41, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

As for formation of a coating film of the near-infrared transmission material according to Experimental Example 41, a near-infrared transmission film (film thickness: 5 µm) according to Experimental Example 41 was obtained in a similar manner to Experimental Example 1.

### (Comparative Example 3)

Comparative Example 3 is a manganese oxide mixture composed only of trimanganese tetraoxide.

In the manganic acid particles according to Comparative Example 3, the number of moles of Mn was 1 mol, the number of moles of A+Mn was 1 mol, a molar ratio of A/(A+Mn) was 0.0, a molar ratio of Mn/(A+Mn) was 1.0, and a molar ratio of A/Mn was 0.0.

The manganic acid particles according to Comparative Example 3 were obtained in a similar manner to Experimental Example 1 except that (i) the manganic acid particles were composed only of trimanganese tetraoxide (228.81 g/mol), (ii) the firing temperature at which the mixed raw material was fired was 1200°C, and (iii) the two-stage pulverization treatment in Experimental Example 3 was performed.

Next, a manganese oxide mixture according to Comparative Example 3 was obtained in a similar manner to Experimental Example 1 except that 7.6 g of the manganic acid particles according to Comparative Example 3, 11.1 g of an acrylic resin (Dianal LR167 manufactured by Mitsubishi Rayon Co., Ltd.), and 18.9 g of ethyl acetate were mixed in a container such that a pigment concentration in terms of solid content (PWC) was 60%.

For formation of a coating film of the manganese oxide mixture according to Comparative Example 3, a manganese oxide mixture film (film thickness: 5 µm) according to Comparative Example 3 was obtained in a similar manner to Experimental Example 1.

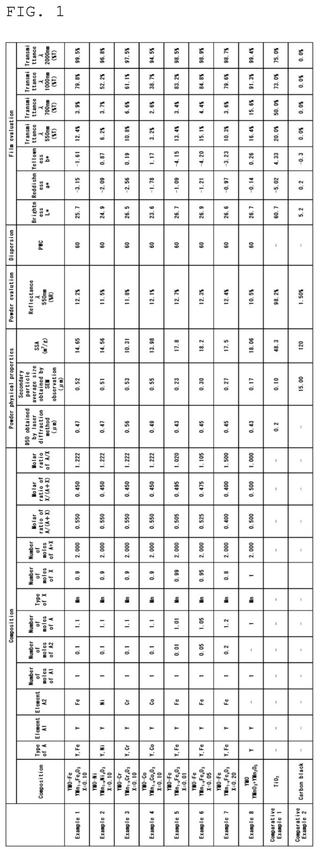

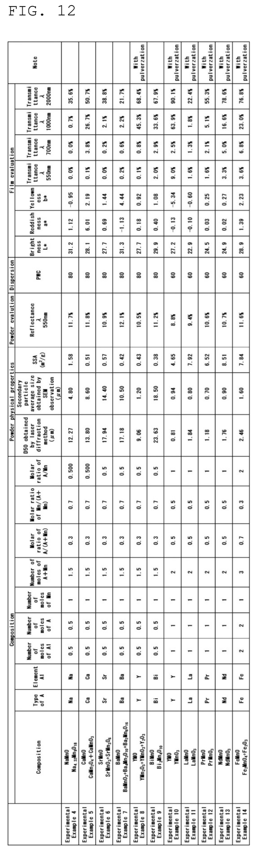

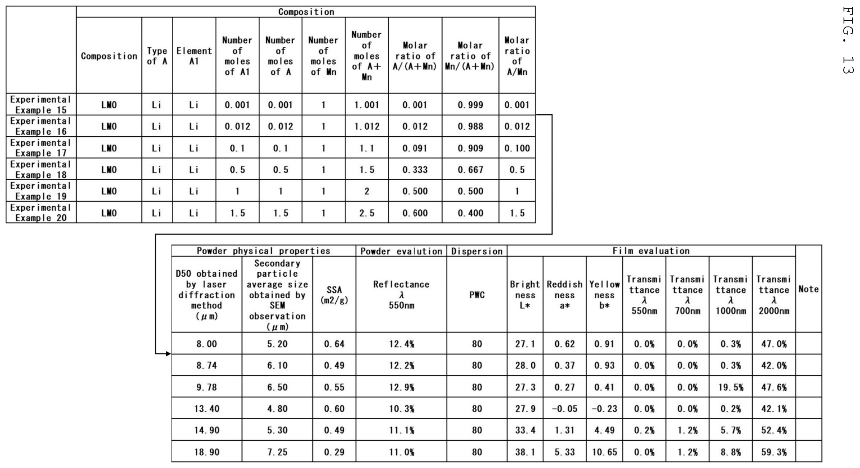

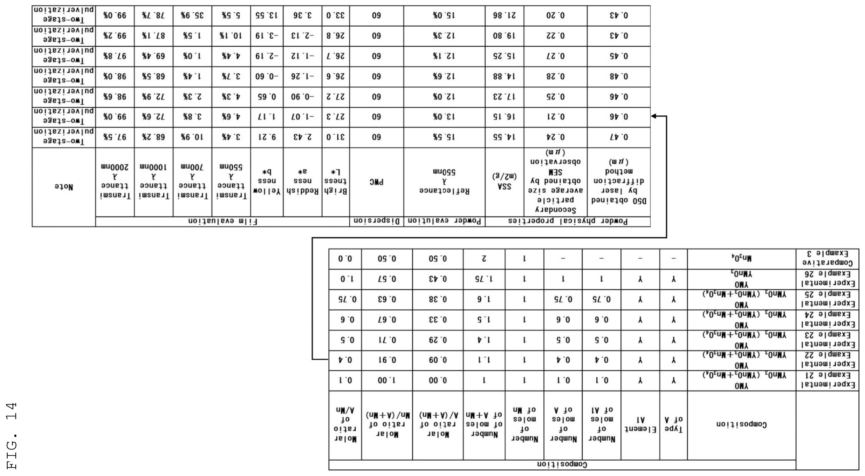

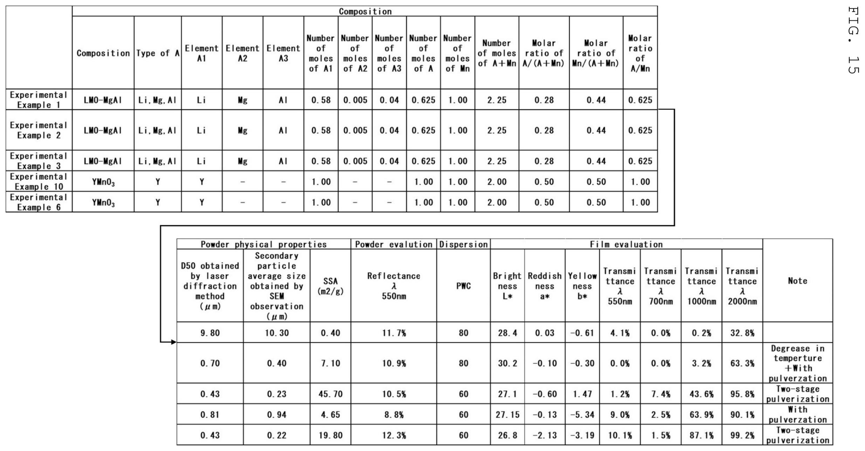

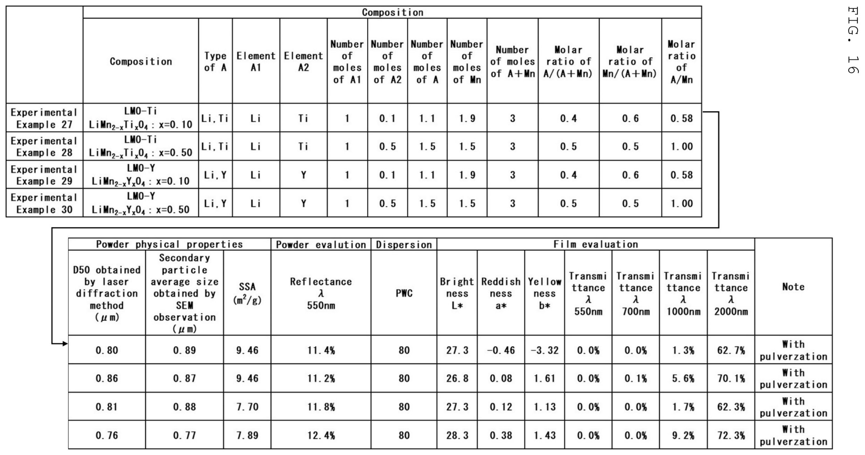

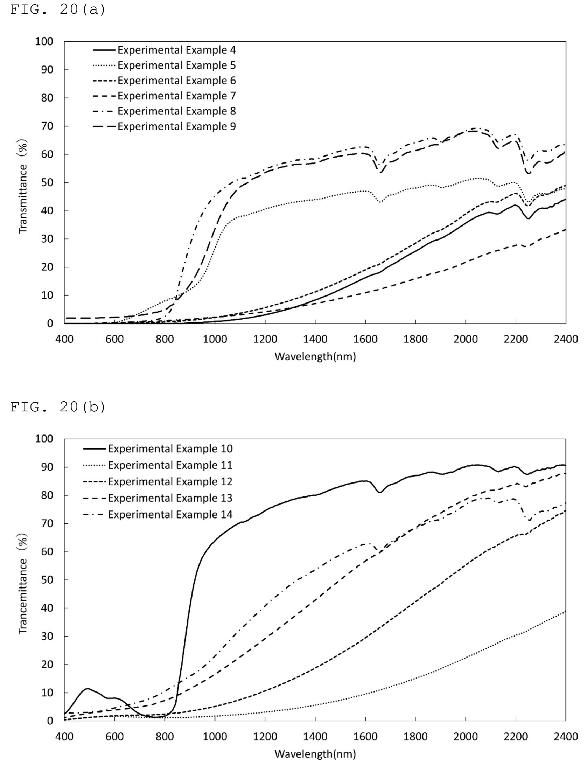

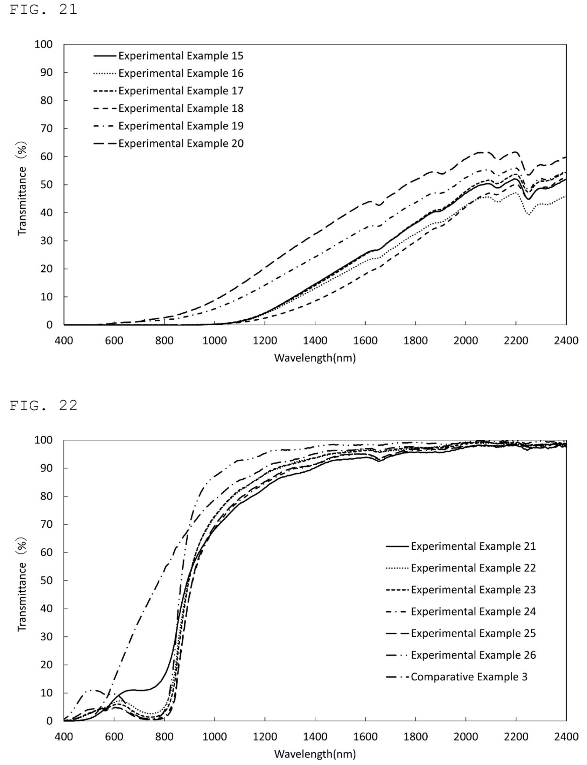

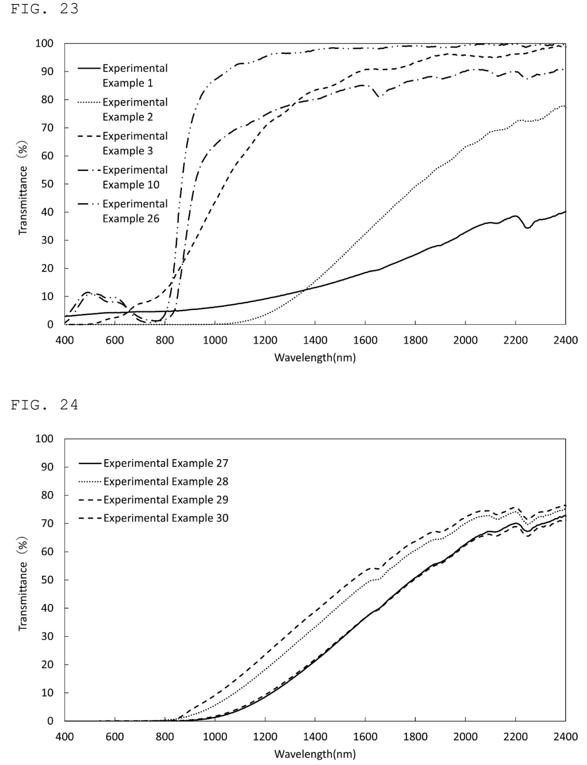

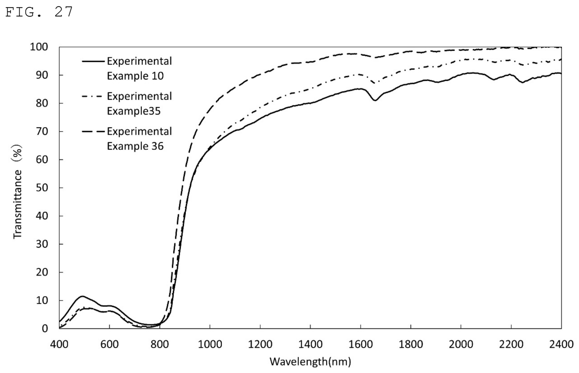

Then, the following physical properties were measured for the near-infrared transmission materials according to Examples 1 to 8, B1, D1 to D7, and E1 to E8, the heat shielding member according to Example C1, the near-infrared transmission material according to Reference Example B1, the near-infrared transmission materials according to Experimental Examples 1 to 41, the titanium oxide mixtures according to Comparative Examples 1, B1, D1, and E1, the carbon black mixtures according to Comparative Examples 2, B2, D2, and E2, the manganese oxide mixtures according to Comparative Examples 3 and B3, and the heat shielding members according to Comparative Examples C1 to C4. Measured physical property values and a method for measuring the physical property values are described below, and measurement results are illustrated in Figs. 1 to 27.

### <Element analysis>

Compositions (atomic ratios) of the compound particles contained in the near-infrared transmission materials according to Examples 1 to 8 and E1 to E8 and Reference Example B1, the compound powder contained in the near-infrared transmission material according to Example B1, and the manganese oxide particles contained in the near-infrared transmission materials according to Examples D1 to D7 and Experimental Example 1 to 41 were analyzed using inductivity coupled plasma optical emission spectrometry (ICP-OES) which is a multi-type ICP emission spectrometer. ICP-OES (700 series) manufactured by Agilent Technologies Inc. was used as the ICP-OES apparatus used for analysis.

### <Laser diffraction/scattering method>

A particle size distribution of the particles was evaluated by a laser diffraction/scattering method in accordance with JIS Z 8825:2013 using a laser diffraction/scattering method particle size distribution measuring apparatus (MT3300EXII manufactured by MicrotracBEL Corp.). In addition, without performing filtering, a sample was subjected to ultrasonic treatment at an ultrasonic output of 40 W for three minutes, and then measurement was performed. Here, the compound particles contained in the near-infrared transmission materials according to Examples 1 to 8, E1 to E8 and Reference Example B1, the compound powder contained in the near-infrared transmission material according to Example B1, and the manganese oxide particles contained in the near-infrared transmission materials according to Examples D1 to D7 and Experimental Example 1 to 41 were mixed with a dispersion, and particle size distributions thereof could not be evaluated in the mixed state. Therefore, the particle size distributions were evaluated using the compound particles, the compound powder, or the manganese oxide particles before being mixed with the dispersion. Note that D50 represents a particle size reaching 50% in terms of volume fraction.

Specifically, a slurry-like sample was put into a sample input port of a sample circulator disposed in the measuring apparatus until the measuring apparatus determined that the amount of the sample was within a measurable range, and then ultrasonic dispersion treatment (ultrasonic power 40 W, three minutes) built in the measuring apparatus was performed. After it was confirmed that display was stabilized, measurement was performed. On the other hand, the titanium oxide mixtures according to Comparative Examples 1, B1, D1, and E1, the carbon black mixtures according to Comparative Examples 2, B2, D2, and E2, and the manganese oxide mixtures according to Comparative Examples 3 and B3 were also measured in a similar manner.

### <Measurement of particle size>

An average value of secondary particle sizes of each of the compound particles contained in the near-infrared transmission materials according to Examples 1 to 8 and E1 to E8 and Reference Example B1, the compound powder contained in the near-infrared transmission material according to Example B1, and the manganese oxide particles contained in the near-infrared transmission materials according to Examples D1 to D7 and Experimental Example 1 to 41 was calculated by analyzing a particle image photographed by a field emission scanning electron microscope (FE-SEM) (manufactured by Hitachi High-Tech Science Corporation: S-4800).

Specifically, horizontal Feret's diameters of 20 secondary particles were measured, and a number average value thereof was taken as the average value of the secondary particle sizes. The compound particles contained in the near-infrared transmission materials according to Examples 1 to 8, E1 to E8 and Reference Example B1, the compound powder contained in the near-infrared transmission material according to Example B1, and the manganese oxide particles contained in the near-infrared transmission materials according to Examples D1 to D7 and Experimental Example 1 to 41 were mixed with a dispersion. Therefore, the compound particles, the compound powder, or the manganese oxide particles before being mixed with the dispersion were observed by SEM under a condition of an accelerating voltage of 1 kV and directly measured using FE-SEM. On the other hand, the titanium oxide mixtures according to Comparative Examples 1, B1, D1, and E1, the carbon black mixtures according to Comparative Examples 2, B2, D2, and E2, and the manganese oxide mixtures according to Comparative Examples 3 and B3 were also measured in a similar manner.

### <Specific surface area (SSA)>

The specific surface area (SSA) was measured using "Macsorb (HM model-1201)" manufactured by Mountech Co., Ltd. in accordance with "(3.5) One-Point Method in 6.2 Flow Method" in JIS R 1626-1996 (Method for Measuring Specific Surface Area of Fine Ceramic Powder by Gas Adsorption BET Method). At this time, a mixed gas of helium as a carrier gas and nitrogen as an adsorbent gas was used. In addition, a nitrogen gas was used for calibration. Here, the compound particles contained in the near-infrared transmission materials according to Examples 1 to 8, E1 to E8 and Reference Example B1, the compound powder contained in the near-infrared transmission material according to Example B1, and the manganese oxide particles contained in the near-infrared transmission materials according to Examples D1 to D7 and Experimental Example 1 to 41 were mixed with a dispersion, and the specific surface areas (SSA) thereof could not be evaluated in the mixed state. Therefore, the specific surface areas (SSA) were measured using the compound particles, the compound powder, or the manganese oxide particles before being mixed with the dispersion. On the other hand, the titanium oxide mixtures according to Comparative Examples 1, B1, D1, and E1, the carbon black mixtures according to Comparative Examples 2, B2, D2, and E2, and the manganese oxide mixtures according to Comparative Examples 3 and B3 were also measured in a similar manner.

### <Measurement of reflectance>

As for measurement of reflectances of samples filled with the compound particles contained in the near-infrared transmission materials according to Examples 1 to 8 and E1 to E8 and Reference Example B1, a sample filled with the compound powder contained in the near-infrared transmission material according to Example B1, samples filled with the manganese oxide particles contained in the near-infrared transmission materials according to Examples D1 to D7 and Experimental Example 1 to 41, samples filled with the titanium oxide mixtures according to Comparative Examples 1, B1, D1, and E1, samples filled with the carbon black mixtures according to Comparative Examples 2, B2, D2, and E2, and samples filled with the manganese oxide mixtures according to Comparative Examples 3 and B3, reflectances thereof for a wavelength of 550 nm were measured using a spectrophotometer (ultraviolet visible near-infrared spectrophotometer UH4150 type manufactured by Hitachi High-Tech Science Corporation) equipped with a φ60 mm integrating sphere unit. Here, the compound particles contained in the near-infrared transmission materials according to Examples 1 to 8, E1 to E8 and Reference Example B1, the compound powder contained in the near-infrared transmission material according to Example B1, and the manganese oxide particles contained in the near-infrared transmission materials according to Examples D1 to D7 and Experimental Example 1 to 41 were mixed with a dispersion, and the reflectances thereof could not be evaluated in the mixed state. Therefore, the reflectances were measured using the compound particles, the compound powder, or the manganese oxide particles before being mixed with the dispersion. On the other hand, the titanium oxide mixtures according to Comparative Examples 1, B1, D1, and E1, the carbon black mixtures according to Comparative Examples 2, B2, D2, and E2, and the manganese oxide mixtures according to Comparative Examples 3 and B3 were also measured in a similar manner.

### <Measurement of L*a*b*>

As described above, the values of L*, a*, and b* in the CIE1976 (L*a*b*) color space were determined in accordance with JIS Z 8722:2009 using a color difference meter (CR-300 manufactured by Konica Minolta, Inc.) for coating film samples each having a film thickness of 5 µm in Examples 1 to 8, B1, D1 to D7, E1 to E8, and Experimental Examples 1 and 3 to 41, and a coating film sample having a film thickness of 9 µm in Experimental Example 2, formed by applying each of the near-infrared transmission materials according to Examples 1 to 8, B1, D1 to D7, E1 to E8, Reference Example B1, and Experimental Examples 1 to 41 onto a PET film ("Lumirror (registered trademark)": #100-T60 manufactured by Toray Industries, Inc.) using a bar coater (No. 10). Note that the value of L* indicates brightness, and the value of a* (a positive value is closer to red, and a negative value is closer to green) and the value of b* (a positive value is closer to yellow, and a negative value is closer to blue) indicate chromaticity. On the other hand, coating film samples were similarly prepared and measured for the titanium oxide mixtures according to Comparative Examples 1, B1, D1, and E1, the carbon black mixtures according to Comparative Examples 2, B2, D2, and E2, and the manganese oxide mixtures according to Comparative Examples 3 and B3.

### <Measurement of transmittance>

For transmittances of near-infrared transmission films (samples) according to Examples 1 to 8, B1, D1 to D7, E1 to E8, Reference Example B1, and Experimental Examples 1 to 41 obtained by applying the near-infrared transmission materials according to Examples 1 to 8, B1, D1 to D7, E1 to E8, Reference Example B1, and Experimental Examples 1 to 41 onto a PET film ("Lumirror (registered trademark)" manufactured by Toray Industries, Inc.: #100-T60), respectively, an ultraviolet-visible absorption spectrum (UV-Vis absorption spectrum) was measured in accordance with JIS K 0115, 2004 "General Rules for Absorbance Photometry Methods" according to the following transmittance measurement conditions. In addition, transmittances of titanium oxide mixture films (samples) according to Comparative Examples 1, B1, D1, and E1 obtained by applying the titanium oxide mixtures according to Comparative Examples 1, B1, D1, and E1 onto the PET film, respectively, carbon black films (samples) according to Comparative Examples 2, B2, D2, and E2 obtained by applying the carbon black mixtures according to Comparative Example 2, B2, D2, and E2, respectively, and manganese oxide mixture films (samples) according to Comparative Examples 3 and B3 obtained by applying the manganese oxide mixtures according to Comparative Examples 3 and B3 onto the PET film, respectively, were also measured with a spectrophotometer according to the following transmittance measurement conditions.

### =Transmittance measurement conditions=

- Measuring apparatus: ultraviolet visible near-infrared spectrophotometer UH4150 type (manufactured by Hitachi High-Tech Science Corporation)
- Measurement mode: wavelength scan
- Data mode:%T (transmitting)
- Measurement wavelength range: 240 to 2500 nm
- Scan speed: 600 nm/min
- Sampling interval: 2 nm

Transmittances for wavelengths of 500 nm, 700 nm, 1000 nm, and 2000 nm were calculated from the transmittances obtained by the measurement on the basis of the transmittance measurement conditions.

### <Measurement of reflectance of heat shielding member>

Reflectances of the heat shielding members according to Example C1 and Comparative Examples C1 to C4 for wavelengths of 240 to 2500 nm were measured using a spectrophotometer equipped with a φ60 mm integrating sphere unit according to the following reflectance measurement conditions. From the measured reflectances, reflectances for wavelengths of 550 nm, 700 nm, 1000 nm, and 2000 nm were calculated.

### =Reflectance measurement conditions=

- Measuring apparatus: ultraviolet visible near-infrared spectrophotometer UH4150 type (manufactured by Hitachi High-Tech Science Corporation)
- Measurement mode: wavelength scan
- Data mode:%R (reflection)
- Measurement wavelength range: 240 to 2500 nm
- Scan speed: 600 nm/min
- Sampling interval: 2 nm

### <Measurement of L*a*b* of heat shielding member>

For each of outermost layers of the heat shielding members according to Example C1 and Comparative Examples C1 to C4, values of L*, a*, and b* in the CIE1976 (L*a*b*) color space were determined in accordance with JIS Z 8722:2009 using a color difference meter (CR-300 manufactured by Konica Minolta, Inc.). Note that the value of L* indicates brightness, and the value of a* (a positive value is closer to red, and a negative value is closer to green) and the value of b* (a positive value is closer to yellow, and a negative value is closer to blue) indicate chromaticity.

### <Ultraviolet visible-near-infrared spectroscopy (UV-vis)>

A powder sample of manganese oxide particles contained in each of the near-infrared transmission materials according to Examples D1 to D7 was filled in an aluminum sample cell, and a surface of the sample cell was covered with quartz glass and sealed to prepare a test cell for optical measurement. The test cell was mounted on a standard integral class ultraviolet visible near-infrared spectrometer, and a diffuse reflectance from an ultraviolet region to a near-infrared region was determined according to the following diffuse reflectance measurement conditions.

### =Diffuse reflectance measurement conditions=

- Measuring apparatus: ultraviolet visible near-infrared spectrophotometer UH4150 type (manufactured by Hitachi High-Tech Science Corporation)
- Measurement mode: wavelength scan
- Data mode:%R (reflectance)
- Measurement wavelength range: 240 to 2500 nm
- Scan speed: 600 nm/min in a wavelength range of 240 nm to 850 nm, and 1500 nm/min in a wavelength range of 850 nm to 2400 nm
- Sampling interval: 2 nm

### <Calculation of band gap>

Band gaps in powder samples of the manganese oxide particles contained in the near-infrared transmission materials according to Examples D1 to D7 were determined as follows. First, a diffuse reflectance from an ultraviolet region to a near-infrared region measured by the above-described ultraviolet visible near-infrared spectroscopy (UV-vis) was subjected to Kubelka-Munk conversion to determine a Kubelka-Munk function f. The Kubelka-Munk function f is obtained from a formula of (1-R)²/2R, in which R is the diffuse reflectance.

Next, a Tauc plot with a horizontal axis representing energy of light E = hv and a vertical axis representing (hvf)^{1/n} was created. A tangent was drawn at a position of an inflection point in the curve, and a point intersecting with the horizontal axis was defined as a value of a band gap in the powder sample of the manganese oxide particles contained in each of the near-infrared transmission materials according to Examples 1 to 7. Here, since a band gap transition of the manganese oxide particles contained in each of the near-infrared transmission materials according to Examples D1 to D7, that is, YMnO₃ was a direct allowable transition, n = 1/2 was used.

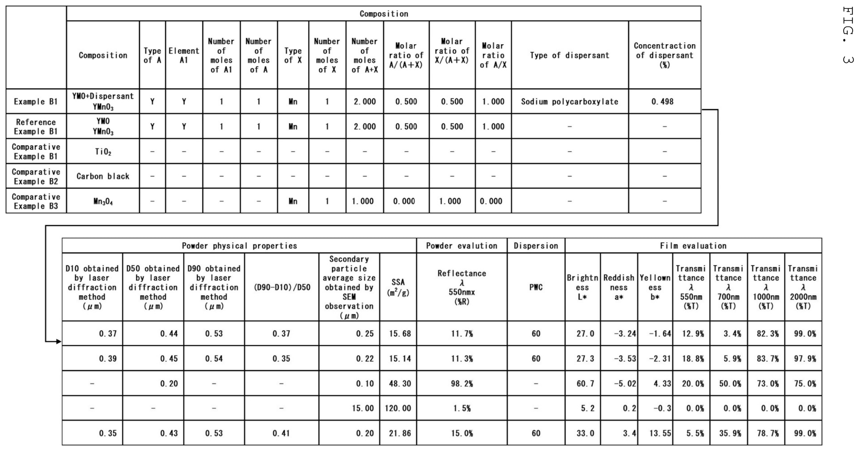

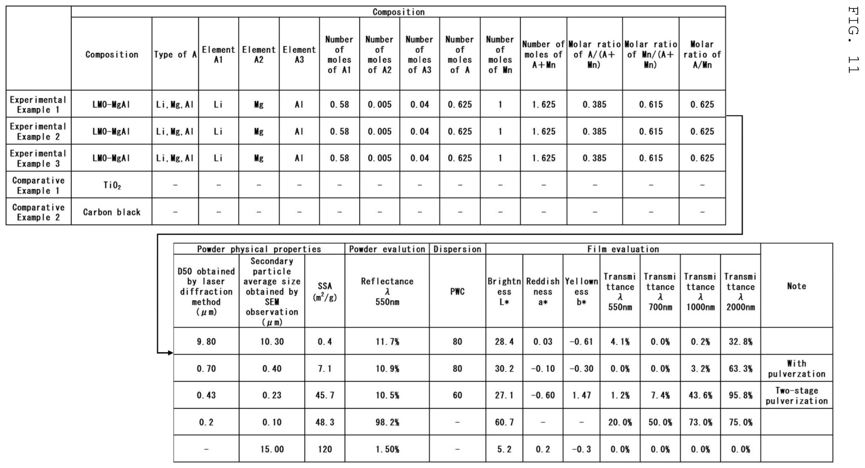

As illustrated in Figs. 1 and 3, when the compounds, the compound particles, and the near-infrared transmission materials according to Examples 1 to 8 or the compound powder and the near-infrared transmission material according to Example B1 contained, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi, these could transmit a near-infrared ray without transmitting visible light as much as possible. In addition, similarly, the manganese oxides, the manganese oxide particles, and the near-infrared transmission materials according to Experimental Examples 1 to 41 could transmit a near-infrared ray without transmitting visible light as much as possible (see Fig. 11 to 18).

In addition, the compounds, the compound particles, and the near-infrared transmission materials according to Examples 1 to 8 or the compound powder and the near-infrared transmission material according to Example B1 had a reflectance of 20%R or less for light having a wavelength of 550 nm, and therefore could transmit a near-infrared ray without transmitting visible light as much as possible. In addition, similarly, the manganese oxides, the manganese oxide particles, and the near-infrared transmission materials according to Experimental Examples 1 to 41 could transmit a near-infrared ray without transmitting visible light as much as possible (see Fig. 11 to 18).

In addition, when the compounds, the compound particles, and the near-infrared transmission materials according to Examples 1 to 8 or the compound powder and the near-infrared transmission material according to Example B1 were oxides, these could transmit a near-infrared ray without transmitting visible light as much as possible. In addition, similarly, the manganese oxides, the manganese oxide particles, and the near-infrared transmission materials according to Experimental Examples 1 to 41 could transmit a near-infrared ray without transmitting visible light as much as possible (see Fig. 11 to 18).

In addition, when the compounds, the compound particles, and the near-infrared transmission materials according to Examples 1 to 8 or the compound powder and the near-infrared transmission material according to Example B1 contained, as a constituent element, two or more elements selected from Li, Mg, Al, Ca, Ti, Cr, Mn, Fe, Co, Ni, Zn, Y, and Bi, these had a low transmittance in a visible light region and a high transmittance in a near-infrared region. In addition, similarly, the manganese oxides, the manganese oxide particles, and the near-infrared transmission materials according to Experimental Examples 1 to 3, 5, 8 to 10, and 14 to 41 had a low transmittance in a visible light region and a high transmittance in a near-infrared region (see Fig. 11 to 18).

In addition, when the compounds, the compound particles, and the near-infrared transmission materials according to Examples 1 to 8 or the compound powder and the near-infrared transmission material according to Example B1 contained, as a constituent element, one or more elements selected from Cr, Mn, Fe, Co, and Ni, these had a low transmittance in a visible light region and a high transmittance in a near-infrared region. In addition, similarly, the manganese oxides, the manganese oxide particles, and the near-infrared transmission materials according to Experimental Examples 1 to 41 had a low transmittance in a visible light region and a high transmittance in a near-infrared region (see Fig. 11 to 18).

When an average value of the secondary particle sizes of the compound particles according to Examples 1 to 8 or the compound powder according to Example B1 obtained by SEM observation was 10 nm or more and 20 µm or less, transmittances thereof in a near-infrared region were improved. Similarly, transmittances of the manganese oxide particles according to Experimental Example 1 to 41 in a near-infrared region were also improved (see Figs. 11 to 18).

In addition, when a specific surface area of the compound particles according to Examples 1 to 8 or the compound powder according to Example B1 measured by the BET method was 0.20 m²/g or more, dispersibility of the compound particles was improved. Similarly, dispersibility of the manganese oxide particles according to Experimental Examples 1 to 41 was also improved (see Figs. 11 to 18).

When the compound particles and the near-infrared transmission materials according to Examples 1 to 8 or the compound powder and the near-infrared transmission material according to Example B1 had L* of 45 or less as measured by CIE1976, appearances thereof were more blackened, and transmittances thereof in a visible light region could be reduced. Note that the values of L*, a*, and b* of Examples 1 to 8 measured by CIE1976 illustrated in Fig. 1 are measured values in the near-infrared transmission materials. However, the near-infrared transmission materials according to Examples 1 to 8 are obtained by adding an acrylic resin and ethyl acetate to and mixing with the compound particles according to Examples 1 to 8, and therefore indicate values equivalent to measured values in the compound particles according to Examples 1 to 8. In addition, the values of L*, a*, and b* of Example B1 measured by CIE1976 illustrated in Fig. 3 are measured values in the near-infrared transmission materials. However, the near-infrared transmission material according to Example B1 is obtained by adding an acrylic resin and ethyl acetate to and mixing with the compound powder according to Example B1, and therefore indicates values equivalent to measured values in the compound powder according to Example B1. Also in the manganese oxide particles and the near-infrared transmission materials according to Experimental Examples 1 to 41, appearances thereof were similarly more blackened, and transmittances thereof in a visible light region could be reduced (see Figs. 11 to 18).

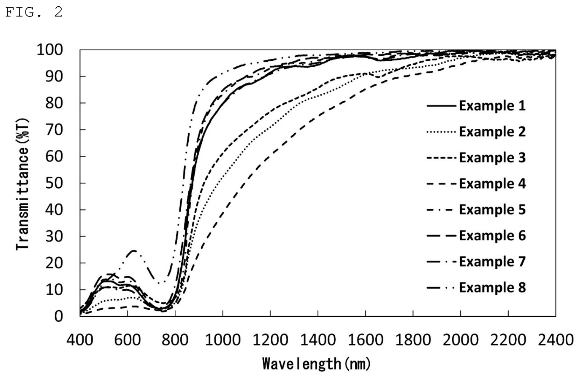

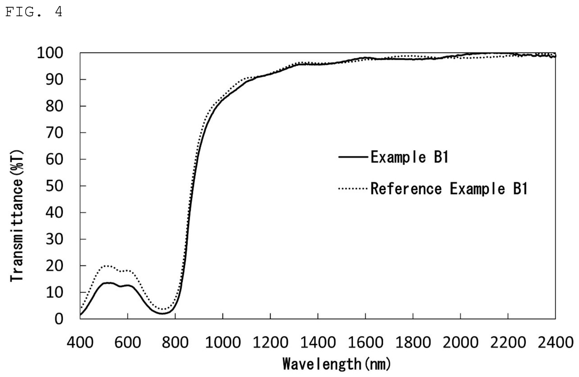

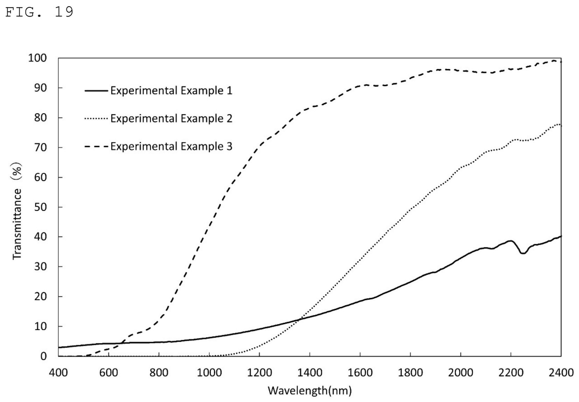

As illustrated in Figs. 2 and 4, when transmittances of the near-infrared transmission materials according to Examples 1 to 8 and Example B1 for a wavelength of 700 nm (visible light region) were 30%T or less and transmittances thereof for a wavelength of 2000 nm (near-infrared region) were 10%T or more and larger than the transmittances for the wavelength of 700 nm (visible light region), the near-infrared transmission materials could transmit a near-infrared ray without transmitting visible light as much as possible. In addition, similarly, the near-infrared transmission materials according to Experimental Examples 1 to 41 could transmit a near-infrared ray without transmitting visible light as much as possible (see Fig. 19 to 27).

In addition, when transmittances of the near-infrared transmission materials according to Examples 1 to 8 and Example B1 for a wavelength of 700 nm (visible light region) were 30%T or less and transmittances thereof for wavelengths of 1000 nm and 2000 nm (near-infrared region) were 10%T or more and larger than the transmittances for the wavelength of 700 nm (visible light region), the near-infrared transmission materials could transmit a near-infrared ray without transmitting visible light as much as possible. In addition, similarly, the near-infrared transmission materials according to Experimental Examples 3, 5, 8 to 10, 13, 14, 17, 21 to 26, and 31 to 41 could transmit a near-infrared ray without transmitting visible light as much as possible (see Fig. 19 to 27).

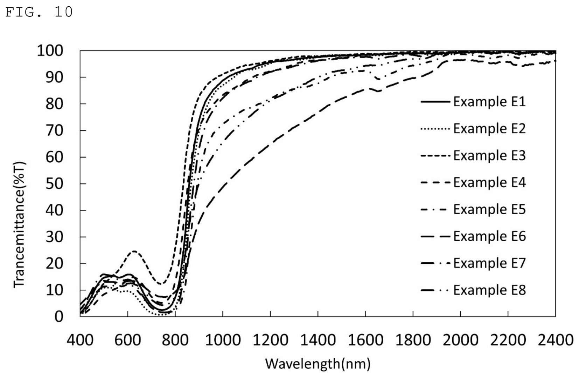

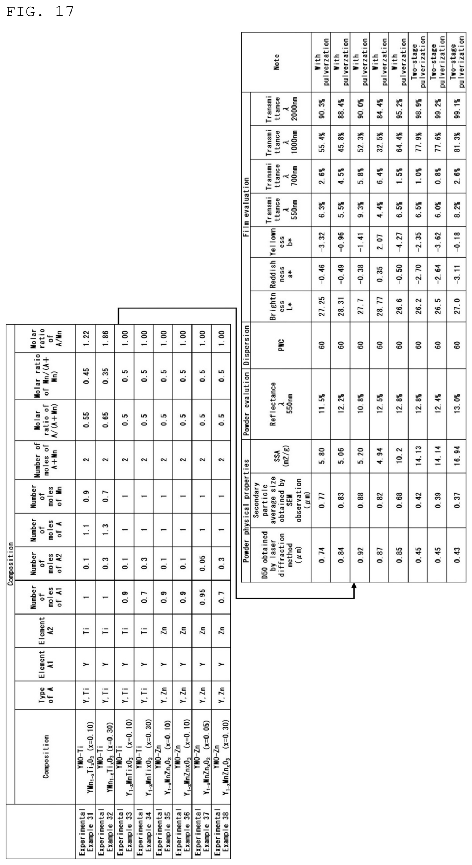

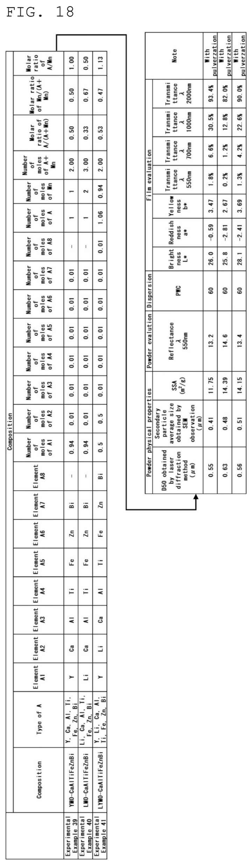

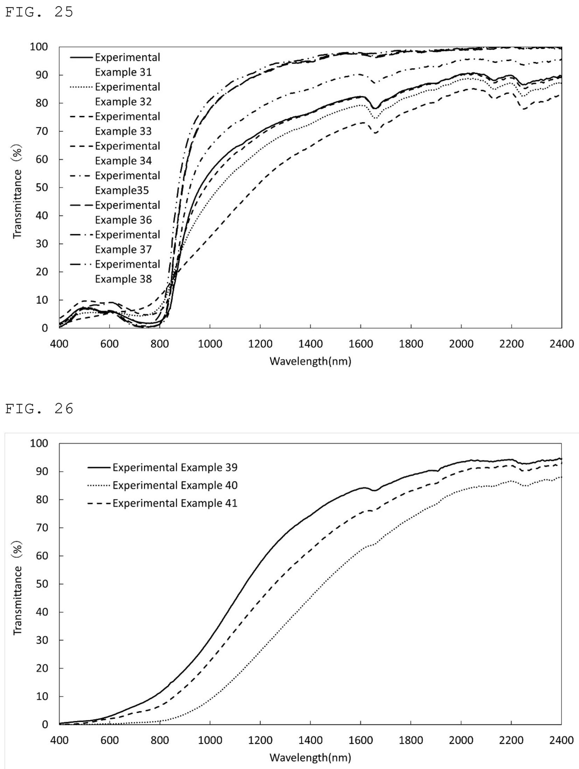

In addition, as compared with the near-infrared transmission materials according to Experimental Examples 21 to 26 illustrated in Figs. 10 and 18, in the near-infrared transmission materials according to Examples 1 to 8 illustrated in Figs. 1 and 2, by replacing a part of Mn with Cr, Fe, Co, or Ni, it is presumed that a valence of Mn, an oxygen deficiency amount, and a short-range order around a Mn-O bond change, thereby affecting an optical absorption edge in a visible light region to a near-infrared region, and contributing to suppression of transparency in a visible light region and improvement of transparency in a near-infrared region. Furthermore, it is presumed that the near-infrared transmission materials according to Examples 1 to 8 contribute to suppression of transparency in a visible light region and improvement of transparency in a near-infrared region, equivalent to the near-infrared transmission materials according to Experimental Examples 31 to 38 in which a part of Mn is replaced with Ti or Zn illustrated in Figs. 17 and 25.

In addition, since the near-infrared transmission material according to Example B1 illustrated in Figs. 3 and 4 can further suppress the transmittance in the visible light region as compared with the near-infrared transmission material according to Reference Example B1, it is presumed that improvement in dispersibility by a dispersant contained in the near-infrared transmission material according to Example B1 contributes. On the other hand, since the transmittance of the near-infrared transmission material according to Example B1 in a near-infrared region is equivalent to the transmittance of the near-infrared transmission material according to Reference Example B1, addition of the dispersant does not inhibit optical characteristics of the near-infrared transmission material according to Example B1.

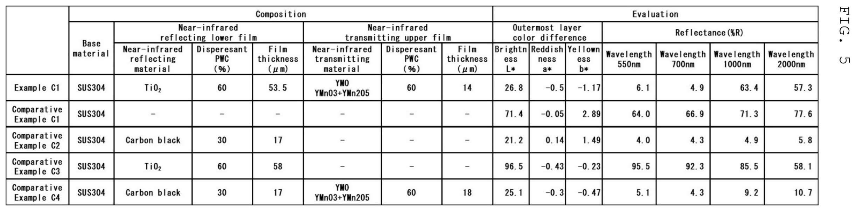

Furthermore, when L* of the outermost layer of the heat shielding member according to Example C1 illustrated in Fig. 5 measured by CIE1976 was 45 or less, an appearance was more blackened, and a transmittance in a visible light region could be reduced.

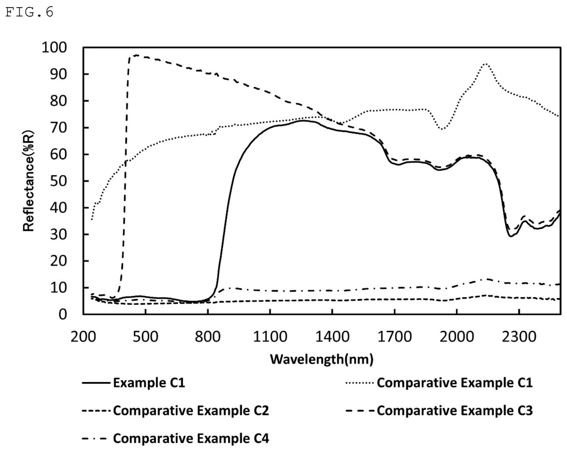

Since a reflectance of the heat shielding member according to Example C1 illustrated in Figs. 5 and 6 for light having wavelengths of 550 nm and 700 nm (visible light region) was 20%R or more, the heat shielding member had absorption for visible light. In addition, a reflectance of the heat shielding member according to Example C1 for light having wavelengths of 1000 nm and 2000 nm (near-infrared region) was 40%R or more, the heat shielding member had a heat shielding property.

In the heat shielding member according to Example C1 illustrated in Figs. 5 and 6, reflected light is observed by the near-infrared reflecting material (titanium oxide) contained in the near-infrared reflecting lower film, and the reflectance is low in the visible light region by the near-infrared transmission material contained in the near-infrared transmitting upper film. The near-infrared transmission material contained in the near-infrared transmitting upper film maintains reflection characteristics in the near-infrared region. Therefore, the heat shielding member according to Example C1 has a heat shielding property. On the other hand, in Comparative Examples C2 and C4, most of light is absorbed by inclusion of carbon black in the lower film. In Comparative Example C3, the near-infrared reflecting lower film containing titanium oxide is formed, but the near-infrared transmitting upper film is not formed, and therefore both light in the visible light region and light in the near-infrared region are reflected.

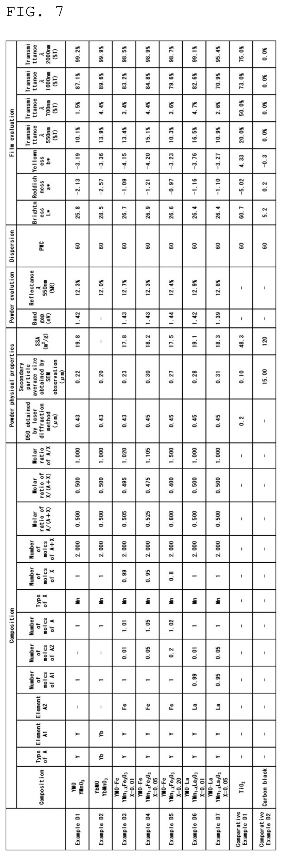

As illustrated in Fig. 7, when the constituent element of the manganese oxides, the manganese oxide particles, and the near-infrared transmission materials according to Examples D1 to D7 was represented by A-Mn-O, and the constituent element A contained one or more elements selected from Sc, Y, Dy, Ho, Er, Tm, Yb, and Lu, these could transmit a near-infrared ray without transmitting visible light as much as possible. Similarly, the manganese oxides, the manganese oxide particles, and the near-infrared transmission materials according to Experimental Examples 8, 10, 21 to 26, 29 to 39, and 41 could transmit a near-infrared ray without transmitting visible light as much as possible (see Fig. 11 to 18).

When the constituent element A of the manganese oxides, the manganese oxide particles, and the near-infrared transmission materials according to Examples D1 to D7 contained one or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi, these could transmit a near-infrared ray without transmitting visible light as much as possible.

When the constituent element A of the manganese oxide, the manganese oxide particle, and the near-infrared transmission material according to Experimental Example 41 contains one or more elements selected from Cr, Fe, Co, and Ni, these could transmit a near-infrared ray without transmitting visible light as much as possible (see Fig. 18).

When the manganese oxides and the manganese oxide particles according to Examples D1 to D7 had a peak derived from a (111) plane appearing at 2θ = 28.0° to 32.0° and a peak derived from a (112) plane appearing at 2θ = 31.0° to 35.0° in an XRD spectrum thereof, a transmittance rapidly increased around a wavelength of 780 nm which is a boundary point between a visible light region and a near-infrared region.

When the crystal system of the manganese oxides and the manganese oxide particles according to Examples D1 to D7 contained a hexagonal crystal, a transmittance thereof rapidly increased around a wavelength of 780 nm which is a boundary point between a visible light region and a near-infrared region.

In addition, the manganese oxides, the manganese oxide particles, and the near-infrared transmission materials according to Examples D1 to D7 had a reflectance of 20%R or less for light having a wavelength of 550 nm, and therefore could transmit a near-infrared ray without transmitting visible light as much as possible.

In addition, when an average value of the secondary particle sizes of the manganese oxide particles according to Examples D1 to D7 obtained by SEM observation was 10 nm or more and 20 µm or less, transmittances thereof in a near-infrared region were improved.

In addition, when the manganese oxide particles according to Examples D1 and D3 to D7 had a specific surface area of 0.20 m²/g or more as measured by a BET method, dispersibility of the manganese oxide particles was improved.

When L* of the near-infrared transmission materials according to Examples D1 to D7 measured by CIE1976 was 45 or less, an appearance was more blackened, and a transmittance in a visible light region could be reduced. Note that the values of L*, a*, and b* of Examples D1 to D7 measured by CIE1976 illustrated in Fig. 7 are measured values in the near-infrared transmission materials. However, the near-infrared transmission materials according to Examples D1 to D7 are obtained by adding an acrylic resin and ethyl acetate to and mixing with the manganese oxide particles according to Examples D1 to D7, and therefore indicate values equivalent to measured values in the manganese oxide particles according to Examples D1 to D7.

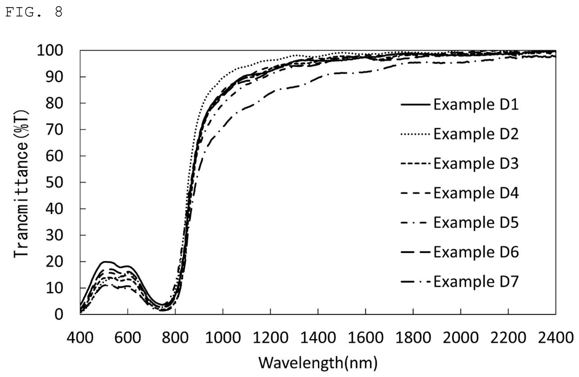

As illustrated in Fig. 8, when transmittances of the near-infrared transmission materials according to Examples D1 to D7 for a wavelength of 700 nm (visible light region) were 30%T or less and transmittances thereof for a wavelength of 2000 nm (near-infrared region) were 10%T or more and larger than the transmittances for the wavelength of 700 nm (visible light region), the near-infrared transmission materials transmitted a near-infrared ray without transmitting visible light as much as possible.

In addition, when transmittances of the near-infrared transmission materials according to Examples D1 to D7 for a wavelength of 700 nm (visible light region) were 30%T or less and transmittances thereof for wavelengths of 1000 nm and 2000 nm (near-infrared region) were 10%T or more and larger than the transmittances for the wavelength of 700 nm (visible light region), the near-infrared transmission materials transmitted a near-infrared ray without transmitting visible light as much as possible.

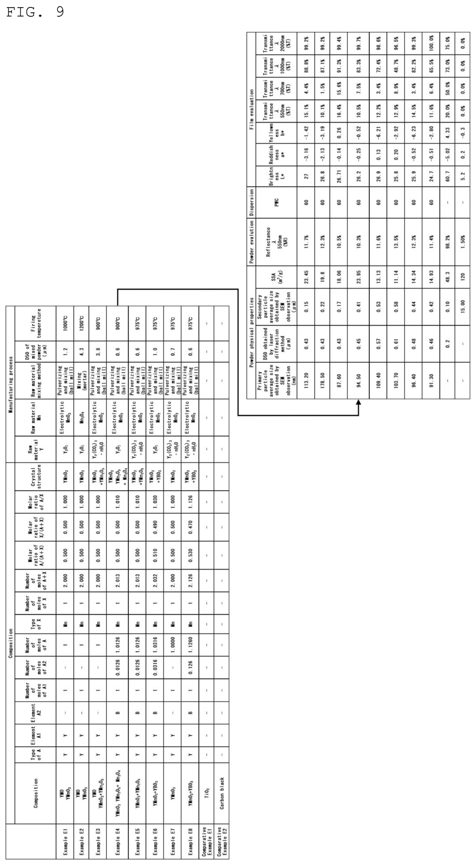

As illustrated in Fig. 9, when the compound particles and the near-infrared transmission materials according to Examples E1 to E8 contained, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi, these could transmit a near-infrared ray without transmitting visible light as much as possible.

In addition, the compound particles and the near-infrared transmission materials according to Examples E1 to E8 had a reflectance of 20%R or less for light having a wavelength of 550 nm, and therefore could transmit a near-infrared ray without transmitting visible light as much as possible.

In addition, when the compound particles and compound particles contained in the near-infrared transmission materials according to Examples E1 to E8 were oxide particles, these could transmit a near-infrared ray without transmitting visible light as much as possible.

In addition, when the compound particles and the near-infrared transmission materials according to Examples E1 to E8 contained, as a constituent element, one or more elements selected from Cr, Mn, Fe, Co, and Ni, these had a low transmittance in a visible light region and a high transmittance in a near-infrared region.

When an average value of the primary particle sizes of the compound particles according to Examples E1 to E8 obtained by SEM observation was 1 nm or more and 20 µm or less, transmittances thereof in a near-infrared region were improved.

In addition, when an average value of the secondary particle sizes of the compound particles according to Examples E1 to E8 obtained by SEM observation was 10 nm or more and 20 µm or less, transmittances thereof in a near-infrared region were improved.

In addition, when a specific surface area of the compound particles according to Examples E1 to E8 measured by the BET method was 0.20 m²/g or more, dispersibility of the compound particles was improved.

When L* of the compound particles and the near-infrared transmission materials according to Examples E1 to E8 measured by CIE1976 was 45 or less, an appearance was more blackened, and a transmittance in a visible light region could be reduced. Note that the values of L*, a*, and b* of Examples E1 to E8 measured by CIE1976 illustrated in Fig. 9 are obtained by adding an acrylic resin and ethyl acetate to and mixing with the compound particles according to Examples E1 to E8, and therefore indicate values equivalent to measured values in the compound particles according to Examples E1 to E8.

As illustrated in Fig. 10, when transmittances of the near-infrared transmission materials according to Examples E1 to E8 for a wavelength of 700 nm (visible light region) were 30%T or less and transmittances thereof for a wavelength of 2000 nm (near-infrared region) were 10%T or more and larger than the transmittances for the wavelength of 700 nm (visible light region), the near-infrared transmission materials could transmit a near-infrared ray without transmitting visible light as much as possible.

In addition, when transmittances of the near-infrared transmission materials according to Examples E1 to E8 for a wavelength of 700 nm (visible light region) were 30%T or less and transmittances thereof for wavelengths of 1000 nm and 2000 nm (near-infrared region) were 10%T or more and larger than the transmittances for the wavelength of 700 nm (visible light region), the near-infrared transmission materials could transmit a near-infrared ray without transmitting visible light as much as possible.

In addition, in the process of manufacturing the compound particles contained in the near-infrared transmission materials according to Examples E1 to E8 illustrated in Fig. 9, a raw material compound was finely pulverized and mixed, and the micronized mixed raw material was fired to obtain a uniform oxide.

In addition, in the process of manufacturing the compound particles contained in the near-infrared transmission material according to Example E1 illustrated in Fig. 9, electrolytic manganese dioxide was used as a manganese raw material, and the raw material compound was finely pulverized and mixed, whereby the mixed raw material could be micronized, and a uniform oxide was obtained because electrolytic manganese dioxide was rich in reactivity.

Furthermore, in the process of manufacturing the compound particles contained in the near-infrared transmission material according to Example E1, when electrolytic manganese dioxide is used as a manganese raw material and the raw material compound is finely pulverized and mixed, the mixed raw material can be micronized, it is not necessary to add a boron compound because electrolytic manganese dioxide is rich in reactivity, and compound particles having higher purity can be obtained.

The invention disclosed in the present specification includes, in addition to configurations of the inventions and the embodiments, those specified by changing partial configurations thereof to other configurations disclosed in the present specification, those specified by adding other configurations disclosed in the present specification to these configurations, and those specified by deleting these partial configurations to an extent that partial action and effect can be obtained and forming a superordinate concept.

### Industrial Applicability

The compound, the compound particles, the near-infrared transmission material, and the near-infrared transmission film according to the present invention have a low transmittance in a visible light region and a high transmittance in a near-infrared region, and thus are suitable for an application such as an optical filter of an infrared sensor or an infrared camera. In addition, the heat shielding member according to the present invention has a heat shielding property and a black appearance, and thus can be used for an application such as a vehicle or an outer wall of a building. Furthermore, since the compound according to the present invention is excellent in weather resistance and durability and can suppress a generation ratio of defective products due to a change with time, it is possible to reduce waste and to reduce energy cost in waste disposal. Furthermore, since the compound according to the present invention forms a coating film well, a coated coating material can also reduce waste similarly, and a generation ratio of defective products can be suppressed. These points lead to achieving sustainable management and efficient advantages of natural resources, and decarbonization (carbon neutral).

## Claims

1. A compound comprising, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi.

2. The compound according to claim 1, having a reflectance of 20%R or less for light having wavelengths of 550 nm and 700 nm.

3. The compound according to claim 1 or 2, which is an oxide.

4. The compound according to claim 3, wherein the constituent element contains an element selected from Li, Mg, Al, Ca, Ti, Cr, Mn, Fe, Co, Ni, Zn, Y, and Bi.

5. The compound according to claim 3, wherein the constituent element contains one or more elements selected from Cr, Mn, Fe, Co, and Ni.

6. The compound according to claim 1 or 2, which is for a near-infrared transmission material.

7. Compound particles comprising, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi.

8. The compound particles according to claim 7, having a reflectance of 20%R or less for light having wavelengths of 550 nm and 700 nm.

9. The compound particles according to claim 7 or 8, wherein an average value of secondary particle sizes of the compound particles obtained by SEM observation is 10 nm or more and 20 µm or less.

10. The compound particles according to claim 7 or 8, having a specific surface area of 0.2 m²/g or more as measured by a BET method.

11. The compound particles according to claim 7 or 8, wherein L* measured by CIE1976 is 45 or less.

12. The compound particles according to claim 7 or 8, which are for a near-infrared transmission material.

13. A compound powder comprising the compound particles according to claim 7 or 8 and a dispersant.

14. The compound powder according to claim 13, wherein the dispersant is one or more selected from the group consisting of phosphoric acids, and a polycarboxylic acid, a polycarboxylate, a salt of a naphthalene sulfonic acid formalin condensate, polyvinyl alcohol, polyethylene glycose, polyvinyl pyrrolidone, and a copolymer thereof.

15. A near-infrared transmission material comprising compound particles and a dispersion containing a component that transmits a near-infrared ray, wherein
the compound particles contain, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi.

16. The near-infrared transmission material according to claim 15, having a reflectance of 20%R or less for light having wavelengths of 550 nm and 700 nm.

17. The near-infrared transmission material according to claim 15 or 16, wherein a transmittance for a wavelength of 700 nm (visible light region) is 30%T or less and a transmittance for a wavelength of 2000 nm (near-infrared region) is 10%T or more and larger than the transmittance for the wavelength of 700 nm.

18. The near-infrared transmission material according to claim 15 or 16, wherein a transmittance for a wavelength of 700 nm (visible light region) is 30%T or less and a transmittance for wavelengths of 1000 nm (near-infrared region) and 2000 nm (near-infrared region) is 10%T or more and larger than the transmittance for the wavelength of 700 nm.

19. The near-infrared transmission material according to claim 15 or 16, wherein L* measured by CIE1976 is 45 or less.

20. The near-infrared transmission material according to claim 15 or 16, wherein the dispersion is a resin, glass, an organic solvent, water, or a mixture of two or more types thereof.

21. The near-infrared transmission material according to claim 15 or 16, further comprising a dispersant.

22. The near-infrared transmission material according to claim 21, wherein the dispersant is one or more selected from the group consisting of phosphoric acids, and a polycarboxylic acid, a polycarboxylate, a salt of a naphthalene sulfonic acid formalin condensate, polyvinyl alcohol, polyethylene glycose, polyvinyl pyrrolidone, and a copolymer thereof.

23. A near-infrared transmission film comprising the near-infrared transmission material according to claim 15 or 16.

24. A near-infrared sensor comprising an optical filter in which the above-described near-infrared transmission film according to claim 23 is formed.

25. A method for manufacturing a near-infrared transmission film, the method comprising a step of forming a near-infrared transmission film by applying the near-infrared transmission material according to claim 15 or 16 onto a base material and drying the near-infrared transmission material.

26. A heat shielding member comprising: a base material; a near-infrared reflecting lower film formed on the base material; and a near-infrared transmitting upper film formed on the near-infrared reflecting lower film, wherein
the near-infrared reflecting lower film contains a near-infrared reflecting material,
the near-infrared transmitting upper film contains a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi, and
the heat shielding member has a maximum reflectance of 40%R or more for light having a wavelength of 800 nm to 2500 nm.

27. A heat shielding member comprising: a base material; a near-infrared reflecting lower film formed on the base material; and a near-infrared transmitting upper film formed on the near-infrared reflecting lower film, wherein
the near-infrared reflecting lower film contains a near-infrared reflecting material,
the near-infrared transmitting upper film contains a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi, and
the near-infrared reflecting lower film has a maximum reflectance of 40%R or more for light having a wavelength of 800 nm to 2500 nm, and the near-infrared transmitting upper film has a maximum transmittance of 40%T or more for light having a wavelength of 800 nm to 2500 nm.

28. A manganese oxide which is the compound according to claim 1 and whose constituent element is represented by A-Mn-O, wherein
the constituent element A contains one or more elements selected from Sc, Y, Dy, Ho, Er, Tm, Yb, and Lu.

29. The manganese oxide according to claim 28, having, in an XRD spectrum of the manganese oxide,
a peak derived from a (111) plane appearing at 2θ = 28.0° to 32.0° and
a peak derived from a (112) plane appearing at 20 = 31.0° to 35.0°.

30. The manganese oxide according to claim 28 or 29, wherein a crystal system of the manganese oxide contains a hexagonal crystal.

31. A method for manufacturing compound particles, the method comprising:
a step of pulverizing and mixing two or more raw material compounds containing an element selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi to obtain a mixed raw material;
a step of firing the obtained mixed raw material to obtain a compound; and
a step of pulverizing the obtained compound to obtain compound particles.

32. The method for manufacturing compound particles according to claim 31, wherein the raw material compound is electrolytic MnO₂.

33. The method for manufacturing compound particles according to claim 31 or 32, wherein the mixed raw material is in a powder form and has an average particle size D50 of 4.2 µm or less.

34. The method for manufacturing compound particles according to claim 31 or 32, wherein the raw material compound is pulverized and mixed by one or more pulverization methods selected from ball mill pulverization, bead mill pulverization, jet mill pulverization, roller mill pulverization, hammer mill pulverization, and pin mill pulverization.

35. The method for manufacturing compound particles according to claim 31 or 32, wherein a firing temperature of the mixed raw material is 1100°C or lower.

36. A method for manufacturing a heat shielding member containing a base material, a near-infrared reflecting lower film formed on the base material, and a near-infrared transmitting upper film formed on the near-infrared reflecting lower film, the method comprising:
a lower film forming step of forming a near-infrared reflecting lower film containing a near-infrared reflecting material on a base material; and
an upper film forming step of forming a near-infrared transmitting upper film containing a near-infrared transmission material containing compound particles containing, as a constituent element, two or more elements selected from H, an alkali metal, an alkaline earth metal, a rare earth element, B, F, Al, Si, P, S, Cl, Ti, V, Cr, Mn, Fe, Co, Ni, Cu, Zn, Ga, Ge, Se, Br, Zr, Nb, Mo, Ru, Rh, Pd, Ag, Cd, In, Sn, Sb, Te, I, Hf, Ta, W, Re, Os, Ir, Pt, Tl, Pb, and Bi on the near-infrared reflecting lower film.
